# EUROPÄISCHE PATENTSCHRIFT

(11) **EP 2 254 925 B1**
(45) Veröffentlichungstag und Bekanntmachung des Hinweises auf die Patenterteilung: **27.08.2014**
(21) Anmeldenummer: 09719587.9
(22) Anmeldetag: 13.03.2009
(51) Int. Cl.: C08G 18/12, C08G 18/76, C08G 18/79, C08G 18/72, C08G 18/42, C08G 18/66, C08G 83/00, C08G 18/63

(54) **GROBZELLIGE POLYURETHANELASTOMERE**
COARSE-CELL POLYURETHANE ELASTOMERS
ELASTOMERES DE POLYURETHANE A GROSSES CELLULES

(30) Priorität: 14.03.2008 EP 08152768; 07.07.2008 EP 08159849; 13.08.2008 EP 08162280; 23.12.2008 EP 08172757
(43) Veröffentlichungstag der Anmeldung: 01.12.2010
(73) Patentinhaber: BASF SE, 67056 Ludwigshafen (DE)
(72) Erfinder: MOHMEYER, Nils, 49076 Osnabrück (DE); FRITZ, Ralf, 49143 Bissendorf-Schledehausen (DE); HABICHT, Annika, 49163 Bohmte (DE); TEPE, Daniela, 49413 Dinklage (DE); PRISSOK, Frank, 49448 Lemförde (DE); HARMS, Michael, 49356 Diepholz (DE); BRUCHMANN, Bernd, 67251 Freinsheim (DE); SCHÖNFELDER, Daniel, 1000 Bruxelles (BE); FREIDANK, Daniel, 49448 Lemförde (DE); EMGE, Andreas, 49448 Lemförde (DE); EISENHARDT, Andrea, 49377 Vechta (DE)
(86) Internationale Anmeldenummer: PCT/EP2009/052996
(87) Internationale Veröffentlichungsnummer: WO 2009/112576

(56) Entgegenhaltungen:
- EP-A- 0 035 389
- EP-A- 1 225 199
- EP-A- 1 626 063
- EP-A- 1 935 913
- WO-A-96/11219
- WO-A-99/33893
- WO-A-2004/013215
- WO-A-2008/087078
- DE-A1- 1 925 682
- DE-B- 1 093 080
- US-A1- 2007 043 133

## Beschreibung

Die vorliegende Erfindung betrifft einen offenzelligen Polyurethanschaumstoff enthaltend Polyester- und Polyetherstrukturen mit einer Dichte von 70 bis 300 g/L, 1 bis 20 Zellen/cm, einer Rückprallintensität größer 30 %, einer Bruchdehnung von größer 200 %, einer Weiterreißfestigkeit von größer 1,2 N/mm und einer Zugfestigkeit von größer 200 kPa. Weiter betrifft die vorliegende Erfindung ein Verfahren zur Herstellung erfindungsgemäßer offenzelliger Polyurethanschwämme und deren Verwendung als Rohrreinigungsschwamm.

Weitere Ausführungsformen der vorliegenden Erfindung sind den Ansprüchen, der Beschreibung und den Beispielen zu entnehmen. Es versteht sich, dass die vorstehend genannten und die nachstehend noch zu erläuternden Merkmale des erfindungsgemäßen Gegenstandes nicht nur in der jeweils angegebenen Kombination, sondern auch in anderen Kombinationen verwendbar sind, ohne den Rahmen der Erfindung zu verlassen.

Die Verwendung von Schaumstoffen auf Basis von Polyurethanen zu Reinigungszwecken sind bekannt und beispielsweise in WO 2006058675 oder EP 903360 beschrieben. Nachteilig an solchen Reinigungsschwämmen sind meist schlechte mechanische Eigenschaften. So zeigen bekannte Reinigungsschwämme auf Basis von Polyurethanen im Dichtebereich kleiner 300 g/dm³ eine meist nicht ausreichende Wasseraufnahmefähigkeit, eine zu geringe Zellgröße sowie nur eingeschränkte mechanische Eigenschaften, wie beispielsweise eine zu geringe Reißfestigkeiten und Reißdehnung oder eine zu geringe Weiterreißfestigkeit. Aus diesem Grund sind für anspruchsvolle Anwendungen, die hohe Anforderungen an die mechanischen Eigenschaften des Reinigungsschwamms stellen, wie Rohrreinigung, nur Reinigungsschwämme auf Basis von Gummi oder Latex bekannt. Diese sind aber nur mit großem technischem Aufwand herstellbar und die Weiterreißeigenschaften dieser Schäume sind begrenzt.

Aufgabe der vorliegenden Erfindung war es daher, Schwämme mit einer Dichte von 70 bis 300 g/L zu liefern, die diese Nachteile nicht aufweisen.

Die erfindungsgemäße Aufgabe wird gelöst durch einen offenzelligen Polyurethanschaumstoff mit einer Dichte von 70 bis 300 g/L, 1 bis 20 Zellen/cm, einer Rückprallintensität größer 30 %, einer Bruchdehnung von größer 200 %, einer Weiterreißfestigkeit von größer 1,2 N/mm und einer Zugfestigkeit von größer 200 kPa. In einer besonderen Ausführungsform enthält der erfindungsgemäße offenzellige Polyurethanschaumstoff Polyester- und Polyetherstrukturen.

Unter einem offenzelligen Polyurethanschaumstoff wird dabei ein Polyurethanschaumstoff nach DIN 7726 verstanden, der mehr als 50 % offene Zellen aufweist. Vorzugsweise beträgt die Offenzelligkeit mindestens 70 %, besonders bevorzugt mindestens 85% und insbesondere mindestens 90%, gemessen nach DIN ISO 4590.

Die erfindungsgemäßen offenzelligen Polyurethanschaumstoffe können nach unterschiedlichen Verfahren hergestellt werden. In einer ersten Ausführungsform erhält man die erfindungsgemäßen offenzelligen Polyurethanschaumstoffe durch ein Verfahren, bei dem man a) Isocyanatgruppen aufweisende Verbindungen auf Basis von a1) MDI und gegebenenfalls a2) Polyetherolen und /oder a3) Polyesterolen, wobei der Gehalt an MDI mit einer Funktionalität von größer 2 kleiner als 30 Gew.-%, bezogen auf das Gesamtgewicht des MDI's a1) ist, b) höhermolekularen Verbindungen mit gegenüber Isocyanat reaktiven Gruppen, enthaltend Polyetherole und/oder Polyesterole, c) Treibmittel, enthaltend Wasser sowie gegebenenfalls d) Kettenverlängerer, e) Katalysator sowie f) sonstige Hilfsmittel und/oder Zusatzstoffe zu einer Reaktionsmischung vermischt und zu dem Polyurethanschaumstoff ausreagieren lässt, wobei als Verbindung a2), a3) und b) mindestens ein Polyetherol und mindestens ein Polyesterol eingesetzt wird und der Gehalt an Polyetherol größer 5 Gew.-%, bezogen auf das Gesamtgewicht der Komponenten a2), a3) und b) ist und die mittlere Funktionalität der Verbindungen a2), a3) und b) kleiner als 2,4 ist.

In einer zweiten Ausführungsform werden die erfindungsgemäßen offenzelligen Polyurethanschaumstoffe durch ein Verfahren erhalten, bei dem man a) Isocyanatgruppen aufweisende Verbindungen auf Basis von a1) MDI und gegebenenfalls a2) Polyetherolen und/oder a3) Polyesterolen, wobei der Gehalt an MDI mit einer Funktionalität von größer 2 kleiner als 30 Gew.-%, bezogen auf das Gesamtgewicht des MDI's a1) ist, b) höhermolekularen Verbindungen mit gegenüber Isocyanat reaktiven Gruppen, enthaltend Polyetherole und/oder Polyesterole, c) Treibmittel, enthaltend Wasser sowie gegebenenfalls d) Kettenverlängerer, e) Katalysator sowie f) sonstige Hilfsmittel und/oder Zusatzstoffe zu einer Reaktionsmischung vermischt und zu dem Polyurethanschaumstoff ausreagieren lässt, wobei als höhermolekulare Verbindung b) eine Mischung, enthaltend Polyesterpolyol und hochfunktionelles Polyetherol mit einer Funktionalität von mindestens 4, und einem Molekulargewichte von 5000 bis 30.000 g/mol, eingesetzt wird.

In einer dritten Ausführungsform werden die erfindungsgemäßen offenzelligen Polyurethanschaumstoffe durch ein Verfahren erhalten, bei dem man a) Isocyanatgruppen aufweisende Verbindungen auf Basis von a1) MDI und gegebenenfalls a2) Polyetherolen und /oder a3) Polyesterolen, wobei der Gehalt an MDI mit einer Funktionalität von größer 2 kleiner als 30 Gew.-%, bezogen auf das Gesamtgewicht des MDI's a1) ist, b) höhermolekularen Verbindungen mit gegenüber Isocyanat reaktiven Gruppen, enthaltend Polyetherole und/oder Polyesterole, c) Treibmittel, enthaltend Wasser sowie gegebenenfalls d) Kettenverlängerer, e) Katalysator sowie f) sonstige Hilfsmittel und/oder Zusatzstoffe zu einer Reaktionsmischung vermischt und zu dem Polyurethanschaumstoff ausreagieren lässt, wobei als höhermolekulare Verbindung b) eine Mischung, enthaltend Polyesterpolyol und Copolymer (C) mit einer Funktionalität gegenüber Isocyanat von mindestens 4 und einem Molekulargewichte von 20.000 bis 200.000 g/mol, eingesetzt wird.

In einer vierten Ausführungsform werden die erfindungsgemäßen offenzelligen Polyurethanschaumstoffe durch ein Verfahren erhalten, bei dem man a) Isocyanatgruppen aufweisende Verbindungen auf Basis von a1) MDI und gegebenenfalls a2) Polyetherolen und/oder a3) Polyesterolen, wobei der Gehalt an MDI mit einer Funktionalität von größer 2 kleiner als 30 Gew.-%, bezogen auf das Gesamtgewicht des MDI's a1) ist, b) höhermolekularen Verbindungen mit gegenüber Isocyanat reaktiven Gruppen, enthaltend Polyetherole und/oder Polyesterole, c) Treibmittel, enthaltend Wasser sowie gegebenenfalls d) Kettenverlängerer, e) Katalysator sowie f) sonstige Hilfsmittel und/oder Zusatzstoffe zu einer Reaktionsmischung vermischt und zu dem Polyurethanschaumstoff ausreagieren lässt, wobei als höhermolekulare Verbindung b) eine Mischung, enthaltend Polyesterpolyol und hydrophober, hyperverzweigter Polyester, eingesetzt wird.

In einer fünften Ausführungsform werden die erfindungsgemäßen offenzelligen Polyurethanschaumstoffe durch ein Verfahren erhalten, bei dem man a) Isocyanatgruppen aufweisende Verbindungen auf Basis von a1) MDI und gegebenenfalls a2) Polyetherolen und/oder a3) Polyesterolen, wobei der Gehalt an MDI mit einer Funktionalität von größer 2 kleiner als 30 Gew.-%, bezogen auf das Gesamtgewicht des MDI's a1) ist, b) höhermolekularen Verbindungen mit gegenüber Isocyanat reaktiven Gruppen, enthaltend Polyetherole und/oder Polyesterole, c) Treibmittel, enthaltend Wasser sowie gegebenenfalls d) Kettenverlängerer, e) Katalysator sowie f) sonstige Hilfsmittel und/oder Zusatzstoffe zu einer Reaktionsmischung vermischt und zu dem Polyurethanschaumstoff ausreagieren lässt, wobei als höhermolekulare Verbindung b) eine Mischung, enthaltend Polyesterpolyol und hydrophobes, hyperverzweigtes Polycarbonat, eingesetzt wird.

Die zur Herstellung der erfindungsgemäßen Polyurethanschaumstoffe verwendeten Isocyanatgruppen aufweisenden Verbindungen umfassen Verbindungen auf Basis von a1) Metandiphenyldiisocyanat (im Folgenden als MDI bezeichnet), wobei der Gehalt an MDI mit einer Funktionalität von größer 2 kleiner als 30 Gew.-%, vorzugsweise kleiner als 20 Gew.-% und insbesondere kleiner als 10 Gew.-%, bezogen auf das Gesamtgewicht des MDIs ist. Beispiele sind 4,4'-Metandiphenyldiisocyanat, 2,4-Metandiphenyldiisocyanat, und die Mischungen aus monomeren Metandiphenyldiisocyanaten und höherkernigen Homologen des Metandiphenyldiisocyanats (Polymer-MDI). Bevorzugt wird 4,4'-MDI verwendet. Das bevorzugt verwendete 4,4'-MDI kann 0 bis 20 Gew.-% 2,4' MDI und geringe Mengen, bis etwa 10 Gew.-%, allophanat-, carbodiimid- oder uretoniminmodifiziertes MDI enthalten. Es können auch geringe Mengen Polyphenylenpolymethylenpolyisocyanat (Polymer-MDI) eingesetzt werden. Neben MDI können gegebenenfalls auch weitere Isocyanate, wie Toluoldiisocyanat, Isophorondiisocyanat oder Hexamethylendiisocyanat in geringen Mengen enthalten sein. Vorzugsweise sind neben MDI und dessen Derivaten keine weiteren Isocyanate enthalten.

Die Isocyanatgruppen aufweisenden Verbindungen (a) wird bevorzugt in Form von Polyisocyanatprepolymeren eingesetzt. Diese Polyisocyanatprepolymere sind erhältlich, indem vorstehend beschriebenes MDI (a-1), beispielsweise bei Temperaturen von 30 bis 100 °C, bevorzugt bei etwa 80 °C, mit Polyetherolen (a2) und /oder Polyesterolen (a3), zum Prepolymer umgesetzt werden. Als Polyetherole (a2) und Polyesterole (a3) werden vorzugsweise die unter b) beschriebenen Polyetherole und Polyesterole eingesetzt. Dabei können neben Polyisocyanatprepolymeren auf Polyetherbasis sowie Polyisocyanatprepolymeren auf Polyesterbasis und deren Mischungen auch Polyisocyanatprepolymeren auf Basis von Polyethern und Polyestern sowie deren Mischungen mit den zuvor genannten Polyisocyanatprepolymeren eingesetzt werden. Bevorzugt werden als Isocyanatgruppen aufweisende Verbindung a) Polyisocyanatprepolymere auf Polyetherbasis sowie Mischungen von Polyisocyanatprepolymeren auf Polyetherbasis und Polyisocyanatprepolymeren auf Polyesterbasis eingesetzt. Der NCO-Gehalt der Prepolymere liegt dabei vorzugsweise im Bereich von 6% bis 30%, besonders bevorzugt von 10% bis 28% und insbesondere von 13% bis 25%.

Gegebenenfalls werden den genannten Polyolen bei der Herstellung der Isocyanatprepolymere übliche Kettenverlängerer (a4) zugegeben. Solche Substanzen sind im Folgenden unter d) beschrieben.

Als höhermolekularen Verbindungen mit gegenüber Isocyanat reaktiven Gruppen, enthaltend Polyetherole und/oder Polyesterole b) können Verbindungen mit einem Molekulargewicht von größer 450 g/mol und gegenüber Isocyanaten reaktiven Gruppen eingesetzt werden. Vorzugsweise werden Polyetherole und/oder Polyesterole eingesetzt.

Polyetherole werden nach bekannten Verfahren hergestellt, beispielsweise durch anionische Polymerisation mit Alkalihydroxiden oder Alkalialkoholaten als Katalysatoren und unter Zusatz mindestens eines Startermoleküls, das meist 2 bis 3 reaktive Wasserstoffatome gebunden enthält, oder durch kationische Polymerisation mit Lewis-Säuren, wie Antimonpentachlorid oder Borfluorid-Etherat aus einem oder mehreren Alkylenoxiden mit 2 bis 4 Kohlenstoffatomen im Alkylenrest. Geeignete Alkylenoxide sind beispielsweise Tetrahydrofuran, 1,3-Propylenoxid, 1,2- bzw. 2,3-Butylenoxid und vorzugsweise Ethylenoxid und 1,2-Propylenoxid. Weiter können als Katalysatoren auch Multimetallcyanidverbindungen, sogenannte DMC-Katalysatoren, eingesetzt werden. Die Alkylenoxide können einzeln, alternierend nacheinander oder als Mischungen verwendet werden. Bevorzugt weisen die Polyetherpolyole mindestens 75 % Propylenoxid auf. Wird das Polyetherpolyol zur Herstellung von Polyisocyanatprepolymeren eingesetzt wird vorzugsweise zur Herstellung der Polyetherpolyole ausschließlich Propylenoxid als Alkylenoxid eingesetzt.

Als Startermolekül kommen Wasser oder 2- und 3-wertige Alkohole, wie Ethylenglykol, 1,2- und 1,3-Propandiol, Diethylenglykol, Dipropylenglykol, 1,4-Butandiol, Glycerin oder Trimethylolpropan in Betracht.

Die Polyetherpolyole, vorzugsweise Polyoxypropylen-polyoxyethylen-polyole, besitzen vorzugsweise eine Funktionalität von kleiner 4, vorzugsweise von 1,7 bis 3, besonders bevorzugt von 2 bis 2,7, und Molekulargewichte von 450 bis 12.000, bevorzugt von 500 bis 12.000, besonders bevorzugt von 700 bis 8.000 g/mol und insbesondere von 900 bis 3.000 g/mol.

Polyesterpolyole können beispielsweise aus organischen Dicarbonsäuren mit 2 bis 12 Kohlenstoffatomen, vorzugsweise aliphatischen Dicarbonsäuren mit 4 bis 6 Kohlenstoffatomen und mehrwertigen Alkoholen, vorzugsweise Diolen, mit 2 bis 12 Kohlenstoffatomen, vorzugsweise 2 bis 6 Kohlenstoffatomen, hergestellt werden. Als Dicarbonsäuren kommen beispielsweise in Betracht: Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure und Terephthalsäure. Die Dicarbonsäuren können dabei sowohl einzeln als auch im Gemisch untereinander verwendet werden. Anstelle der freien Dicarbonsäuren können auch die entsprechenden Dicarbonsäurederivate, wie z.B. Dicarbonsäureester von Alkoholen mit 1 bis 4 Kohlenstoffatomen oder Dicarbonsäureanhydride eingesetzt werden. Vorzugsweise verwendet werden Dicarbonsäuregemische aus Bernstein-, Glutar- und Adipinsäure in Mengenverhältnissen von beispielsweise 20 bis 35 : 35 bis 50 : 20 bis 32 Gew.-Teilen, und insbesondere Adipinsäure. Beispiele für zwei und mehrwertige Alkohole, insbesondere Diole sind: Ethandiol, Diethylenglykol, 1,2- bzw. 1,3-Propandiol, Dipropylenglykol, Tripropylenglycol, 1,4-Butandiol, 1,5-Pentandiol, 3,3-Dimethyl-pentan-1,5-diol, 1,6-Hexandiol, 1,10-Decandiol, Glycerin und Trimethylolpropan. Vorzugsweise verwendet werden Ethandiol, Diethylenglykol, 1,4-Butandiol, 1,5-Pentandiol und 1,6-Hexandiol. Eingesetzt werden können ferner Polyesterpolyole aus Lactonen, z.B. ε-Caprolacton oder Hydroxycarbonsäuren, z.B. w-Hydroxycapronsäure. Vorzugsweise verwendet werden Ethandiol, Diethylenglycol 1,4-Butandiol, 1,5 Pentandiol und/oder 1,6 Hexandiol.

Zur Herstellung der Polyesterpolyole können die organischen, z.B. aromatischen und vorzugsweise aliphatischen Polycarbonsäuren und/oder -derivate und mehrwertigen Alkohole katalysatorfrei oder vorzugsweise in Gegenwart von Veresterungskatalysatoren, zweckmäßigerweise in einer Atmosphäre aus Inertgas, wie z.B. Stickstoff, Kohlenmonoxid, Helium, Argon u.a. in der Schmelze bei Temperaturen von 150 bis 250°C, vorzugsweise 180 bis 220°C, gegebenenfalls unter vermindertem Druck, bis zu der gewünschten Säurezahl, die vorzugsweise kleiner als 10, besonders bevorzugt kleiner als 2 ist, polykondensiert werden. Nach einer bevorzugten Ausführungsform wird als Veresterungsgemisch bei den oben genannten Temperaturen bis zu einer Säurezahl von 80 bis 30, vorzugsweise 40 bis 30, unter Normaldruck und anschließend unter einem Druck von kleiner als 500 mbar, vorzugsweise 50 bis 150 mbar, polykondensiert. Als Veresterungskatalysatoren kommen beispielsweise Eisen-, Cadmium-, Kobalt-, Blei-, Zink-, Antimon-, Magnesium-, Titan- und Zinnkatalysatoren in Form von Metallen, Metalloxiden oder Metallsalzen in Betracht. Die Polykondensation kann jedoch auch in flüssiger Phase in Gegenwart von Verdünnungs- und/oder Schleppmitteln, wie z.B. Benzol, Toluol, Xylol oder Chlorbenzol zur azeotropen Abdestillation des Kondensationswassers durchgeführt werden. Zur Herstellung der Polyesterpolyole werden die organischen Polycarbonsäuren und/oder -derivate und mehrwertigen Alkohole vorteilhafterweise im Molverhältnis von 1 :1 bis 1,8, vorzugsweise 1 :1,05 bis 1,2 polykondensiert. Gegebenenfalls können als Kettenstopper auch übliche Monosäuren bei der Kondensation zugesetzt werden. Die erhaltenen Polyesterpolyole besitzen vorzugsweise eine Funktionalität von 1,8 bis 4, insbesondere von 2 bis 3, und ein Molekulargewicht von 480 bis 3000, vorzugsweise 1000 bis 3000 g/mol.

Als höhermolekulare Verbindungen b) mit mindestens zwei gegenüber Isocyanat reaktiven Wasserstoffatomen eignen sich ferner polymermodifizierte Polyole, vorzugsweise polymermodifizierte Polyesterole oder Polyetherole, besonders bevorzugt Pfropf-Polyether- bzw. Pfropf-Polyesterole, insbesondere Pfropf-Polyetherole. Hierbei handelt es sich um ein sogenanntes Polymerpolyol, welches üblicherweise einen Gehalt an, bevorzugt thermoplastischen, Polymeren von 5 bis 60 Gew.-%, bevorzugt 10 bis 55 Gew.-%, besonders bevorzugt 30 bis 55 Gew.-% und insbesondere 40 bis 50 Gew.-%, aufweist. Diese Polymerpolyesterole sind beispielsweise in WO 05/098763 und EP-A-250 351 beschrieben und werden üblicherweise durch radikalische Polymerisation von geeigneten olefinischen Monomeren, beispielsweise Styrol, Acrylnitril, (Meth)Acrylaten, (Meth)Acrylsäure und/oder Acrylamid, in einem als Pfropfgrundlage dienenden Polyesterol hergestellt. Die Seitenketten entstehen im allgemeinen durch Übertragung der Radikale von wachsenden Polymerketten auf Polyesterole oder Polyetherole. Das Polymer-Polyol enthält neben dem Propfcopolymerisaten überwiegend die Homopolymere der Olefine, dispergiert in unverändertem Polyesterol bzw. Polyetherol.

In einer bevorzugten Ausführungsform werden als Monomere Acrylnitril, Styrol, Acrylnitril und Styrol, insbesondere bevorzugt Styrol im Überschuß verwendet. Die Monomere werden gegebenenfalls in Gegenwart weiterer Monomere, eines Makromers, eines Moderators und unter Einsatz eines Radikal-Initiators, meist Azo- oder Peroxidverbindungen, in einem Polyesterol oder Polyetherol als kontinuierlicher Phase polymerisiert. Dieses Verfahren ist beispielsweise in DE 111 394, US 3 304 273, US 3 383 351, US 3 523 093, DE 1 152 536 und DE 1 152 537 beschrieben.

Während der radikalischen Polymerisation werden die Makromere mit in die Copolymerkette eingebaut. Dadurch bilden sich Blockcopolymere mit einem Polyester- bzw. Polyether- und einem Poly-acrylnitril-styrol-Block, welche in der Grenzfläche von kontinuierlicher Phase und dispergierter Phase als Phasenvermittler wirken und das Agglomerieren der Polymerpolyesterolpartikel unterdrücken. Der Anteil der Makromere beträgt üblicherweise 1 bis 20 Gew.-%, bezogen auf das Gesamtgewicht der zur Herstellung des Polymerpolyols eingesetzten Monomere.

Ist in der höhermolekularen Verbindung b) Polymerpolyol enthalten, liegt dies vorzugsweise zusammen mit weiteren Polyolen vor, beispielsweise Polyetherolen, Polyesterolen oder Mischungen aus Polyetherolen und Polyesterolen. Die Polymerpolyole können beispielsweise, bezogen auf das Gesamtgewicht der Komponente (b) in einer Menge von 7 bis 90 Gew.-%, oder von 11 bis 80 Gew.-% enthalten sein. Besonders bevorzugt handelt es sich bei dem Polymerpolyol um Polymerpolyesterol oder Polymerpolyetherol.

Die höhermolekulare Verbindungen b) können auch Harnstoff und seine Polymerderivate in dispergierter Form enthalten.

Die mittlere Funktionalität der Verbindungen a2), a3) und b) ist kleiner als 2,4, bevorzugt kleiner als 2,3 und besonders bevorzugt 1,7 bis 2,2.

Ferner sind bei der Herstellung von Polyurethanschaumstoffen Treibmittel (c), enthaltend Wasser zugegen. Als Treibmittel (c) können neben Wasser noch zusätzlich allgemein bekannte chemisch und/oder physikalisch wirkende Verbindungen eingesetzt werden. Unter chemischen Treibmitteln versteht man Verbindungen, die durch Reaktion mit Isocyanat gasförmige Produkte bilden, wie beispielsweise Wasser oder Ameisensäure. Unter physikalischen Treibmitteln versteht man Verbindungen, die in den Einsatzstoffen der Polyurethan-Herstellung gelöst oder emulgiert sind und unter den Bedingungen der Polyurethanbildung verdampfen. Dabei handelt es sich beispielsweise um Kohlenwasserstoffe, halogenierte Kohlenwasserstoffe, und andere Verbindungen, wie zum Beispiel perfluorierte Alkane, wie Perfluorhexan, Fluorchlorkohlenwasserstoffe, und Ether, Ester, Ketone, Acetale sowie anorganische und organische Verbindungen, die beim Erhitzen Stickstoff freisetzen, oder Mischungen daraus, beispielsweise (cyclo)aliphatische Kohlenwasserstoffe mit 4 bis 8 Kohlenstoffatomen, oder Fluorkohlenwasserstoffe, wie Solkane^{®} 365 mfc der Firma Solvay Fluorides LLC. In einer bevorzugten Ausführungsform wird als Treibmittel eine Mischung enthaltend mindestens eines dieser Treibmittel und Wasser eingesetzt, insbesondere Wasser als alleiniges Treibmittel.

Dabei wird Treibmittel in solchen Mengen eingesetzt, dass die Dichte des erfindungsgemäßen Polyurethanschaumstoffs 70 bis 300 g/dm³ beträgt. Wird Wasser als alleiniges Treibmittel eingesetzt, ist der Gehalt an Wasser üblicherweise in einem Bereich von 0,4 bis 2 Gew.-%, bevorzugt 0,6 bis 1,8 Gew.-%, besonders bevorzugt 0,8 bis 1,5 Gew.-%, bezogen auf das Gesamtgewicht der Komponenten (b) bis (f).

Als Kettenverlängerungsmittel (d) werden Substanzen mit einem Molekulargewicht von vorzugsweise kleiner 450 g/mol, besonders bevorzugt von 60 bis 400 g/mol eingesetzt, wobei Kettenverlängerer 2 gegenüber Isocyanaten reaktive Wasserstoffatome aufweisen. Diese können einzeln oder bevorzugt in Form von Mischungen eingesetzt werden. Vorzugsweise werden Diole mit Molekulargewichten kleiner als 400, besonders bevorzugt von 60 bis 300 und insbesondere 60 bis 150 eingesetzt. In Betracht kommen beispielsweise aliphatische, cycloaliphatische und/oder araliphatische Diole mit 2 bis 14, vorzugsweise 2 bis 10 Kohlenstoffatomen, wie Ethylenglykol, 1,3-Propandiol, Pentandiol, Tripropylenglycol, 1,10-Decandiol, 1,2-, 1,3-, 1,4-Dihydroxycyclohexan, Diethylenglykol, Dipropylenglykol und vorzugsweise 1,4-Butandiol, 1,6-Hexandiol und Bis-(2-hydroxyethyl)-hydrochinon, und niedermolekulare hydroxylgruppenhaltige Polyalkylenoxide auf Basis Ethylen- und/oder 1,2-Propylenoxid und den vorgenannten Diolen als Startermoleküle. Besonders bevorzugt werden als Kettenverlängerer (d) Monoethylenglycol, 1,4-Butandiol, oder Mischungen davon eingesetzt.

Gegebenenfalls können neben Kettenverlängerungsmitteln auch Vernetzungsmittel eingesetzt werden. Dabei handelt es sich um Substanzen mit einem Molekulargewicht von kleiner 450 g/mol und 3 gegenüber Isocyanat reaktive Wasserstoffatome, beispielsweise um Triole, wie 1,2,4-, 1,3,5-Trihydroxy-cyclohexan, Glycerin und Trimethylolpropan oder niedermolekulare hydroxylgruppenhaltige Polyalkylenoxide auf Basis Ethylen- und/oder 1,2-Propylenoxid und den vorgenannten Triolen als Startermoleküle. Vorzugsweise werden in der zweiten bis fünften Ausführungsform keine Vernetzungsmittel eingesetzt.

Sofern Kettenverlängerungsmittel (d) Anwendung finden, kommen diese zweckmäßigerweise in Mengen von 1 bis 60 Gew.-%, vorzugsweise 1,5 bis 50 Gew.-% und insbesondere 2 bis 40 Gew.-%, bezogen auf das Gewicht der Komponenten (b) bis (f), zum Einsatz.

Als Katalysatoren (e) zur Herstellung der Polyurethanschaumstoffe werden bevorzugt Verbindungen verwendet, welche die Reaktion der Hydroxylgruppen enthaltenden Verbindungen der Komponente (b), (c) und gegebenenfalls (d) mit den Isocyanatgruppen aufweisenden Verbindungen (a) stark beschleunigen. Genannt seien beispielsweise Amidine, wie 2,3-Dimethyl-3,4,5,6-tetrahydropyrimidin, tertiäre Amine, wie Triethylamin, Tributylamin, Dimethylbenzylamin, N-Methyl-, N-Ethyl-, N-Cyclohexylmorpholin, N,N,N',N'-Tetramethylethylendiamin, N,N,N',N'-Tetramethyl-butandiamin, N,N,N',N'-Tetramethyl-hexandiamin, Pentamethyl-diethylentriamin, Tetramethyl-diaminoethylether, Harnstoff, Bis-(dimethylaminopropyl)-harnstoff, Dimethylpiperazin, 1,2-Dimethylimidazol, 1-Aza-bicyclo-(3,3,0)-octan und vorzugsweise 1,4-Diaza-bicyclo-(2,2,2)-octan und Alkanolaminverbindungen, wie Triethanolamin, Triisopropanolamin, N-Methyl- und N-Ethyl-diethanolamin und Dimethylethanolamin. Ebenso kommen in Betracht organische Metallverbindungen, vorzugsweise organische Zinnverbindungen, wie Zinn-(II)-salze von organischen Carbonsäuren, z.B. Zinn-(II)-acetat, Zinn-(II)-octoat, Zinn-(II)-ethylhexoat und Zinn-(II)-laurat und die Dialkylzinn-(IV)-salze von organischen Carbonsäuren, z.B. Dibutyl-zinndiacetat, Dibutylzinndilaurat, Dibutylzinn-maleat und Dioctylzinn-diacetat, sowie Bismutcarboxylate, wie Bismut(III)-neodecanoat, Bismut-2-ethylhexanoat und Bismut-octanoat oder Mischungen davon. Die organischen Metallverbindungen können allein oder vorzugsweise in Kombination mit stark basischen Aminen eingesetzt werden. Handelt es sich bei der Komponente (b) um einen Ester, werden vorzugsweise ausschließlich Aminkatalysatoren eingesetzt.

Vorzugsweise verwendet werden 0,001 bis 5 Gew.-%, insbesondere 0,05 bis 2 Gew.-% Katalysator bzw. Katalysatorkombination, bezogen auf das Gewicht der Komponente (b).

Der Reaktionsmischung zur Herstellung der Polyurethanschäume können gegebenenfalls auch noch Hilfsmittel und/oder Zusatzstoffe (f) zugegeben werden. Genannt seien beispielsweise oberflächenaktive Substanzen, Schaumstabilisatoren, Zellregler, weitere Trennmittel, Füllstoffe, Farbstoffe, Pigmente, Hydrolyseschutzmittel, geruchsabsorbierende Substanzen und fungistatische und/oder bakteriostatisch wirkende Substanzen.

Als oberflächenaktive Substanzen kommen z.B. Verbindungen in Betracht, welche zur Unterstützung der Homogenisierung der Ausgangsstoffe dienen und gegebenenfalls auch geeignet sind, die Zellstruktur zu regulieren. Genannt seien beispielsweise Emulgatoren, wie die Natriumsalze von Ricinusölsulfaten oder von Fettsäuren, sowie Salze von Fettsäuren mit Aminen, z.B. ölsaures Diethylamin, stearinsaures Diethanolamin, ricinolsaures Diethanolamin, Salze von Sulfonsäuren, z.B. Alkali- oder Ammoniumsalze von Dodecylbenzol- oder Dinaphthylmethandisulfonsäure, und Ricinolsäure; Schaumstabilisatoren, wie Siloxan-Oxalkylen-Mischpolymerisate und andere Organopolysiloxane, oxethylierte Alkylphenole, oxethylierte Fettalkohole, Paraffinöle, Ricinusöl- bzw. Ricinolsäureester, Türkischrotöl und Erdnussöl, und Zellregler, wie Paraffine, Fettalkohole und Dimethylpolysiloxane. Zur Verbesserung der Emulgierwirkung, der Zellstruktur und/oder Stabilisierung des Schaumes eignen sich ferner oligomere Acrylate mit Polyoxyalkylen- und Fluoralkanresten als Seitengruppen. Die oberflächenaktiven Substanzen werden üblicherweise in Mengen von 0,01 bis 5 Gew.-Teilen, bezogen auf 100 Gew.-Teile der Komponente (b), eingesetzt.

Als geeignete weitere Trennmittel seien beispielhaft genannt: Umsetzungsprodukte von Fettsäureestern mit Polyisocyanaten, Salze aus Aminogruppen enthaltenden Polysiloxanen und Fettsäuren, Salze aus gesättigten oder ungesättigten (cyclo)aliphatischen Carbonsäuren mit mindestens 8 C-Atomen und tertiären Aminen sowie insbesondere innere Trennmittel, wie Carbonsäureester und/oder -amide, hergestellt durch Veresterung oder Amidierung einer Mischung aus Montansäure und mindestens einer aliphatischen Carbonsäure mit mindestens 10 C-Atomen mit mindestens difunktionellen Alkanolaminen, Polyolen und/oder Polyaminen mit Molekulargewichten von 60 bis 400 g/mol, wie beispielsweise in EP 153 639 offenbart, Gemischen aus organischen Aminen, Metallsalzen der Stearinsäure und organischen Mono- und/oder Dicarbonsäuren oder deren Anhydride, wie beispielsweise in DE-A-3 607 447 offenbart, oder Gemischen aus einer Iminoverbindung, dem Metallsalz einer Carbonsäure und gegebenenfalls einer Carbonsäure, wie beispielsweise in US 4 764 537 offenbart. Vorzugsweise enthalten erfindungsgemäße Reaktionsmischungen keine weiteren Trennmittel.

Als Füllstoffe, insbesondere verstärkend wirkende Füllstoffe, sind die an sich bekannten, üblichen organischen und anorganischen Füllstoffe, Verstärkungsmittel, Beschwerungsmittel, Beschichtungsmittel usw. zu verstehen. Im einzelnen seien beispielhaft genannt: anorganische Füllstoffe, wie vulkanisches Gestein, silikatische Mineralien, beispielsweise Schichtsilikate, wie Antigorit, Bentonit, Serpentin, Hornblenden, Amphibole, Chrisotil und Talkum, Metalloxide, wie Kaolin, Aluminiumoxide, Titanoxide, Zinkoxid und Eisenoxide, Metallsalze wie Kreide und Schwerspat, und anorganische Pigmente, wie Cadmiumsulfid, Zinksulfid sowie Glas u.a. Vorzugsweise verwendet werden Kaolin (China Clay), Aluminiumsilikat und Copräzipitate aus Bariumsulfat und Aluminiumsilikat sowie natürliche und synthetische faserförmige Mineralien, wie Wollastonit, Metall- und insbesondere Glasfasern verschiedener Länge, die gegebenenfalls geschlichtet sein können. Als organische Füllstoffe kommen beispielsweise in Betracht: Russ, Melamin, Kollophonium, Cyclopentadienylharze und Pfropfpolymerisate sowie Cellulosefasern, Polyamid-, Polyacrylnitril-, Polyurethan-, Polyesterfasern auf der Grundlage von aromatischen und/oder aliphatischen Dicarbonsäureestern und insbesondere Kohlenstofffasern.

Die anorganischen und organischen Füllstoffe können einzeln oder als Gemische verwendet werden und werden der Reaktionsmischung vorteilhafterweise in Mengen von 0,5 bis 50 Gew.-%, vorzugsweise 1 bis 40 Gew.-%, bezogen auf das Gewicht der Komponenten (a) bis (c), zugegeben.

Dabei ist es erfindungswesentlich, dass für die jeweiligen Ausführungsformen des erfindungsgemäßen Verfahrens bestimmte Bedingungen eingehalten werden.

In einer ersten Ausführungsform des erfindungsgemäßen Verfahrens muss bei der Herstellung der erfindungsgemäßen offenzelligen Polyurethanschaumstoffe in den Komponenten a2), a3) und b) mindestens ein Polyetherol und mindestens ein Polyesterol eingesetzt werden. Der Gehalt an Polyetherol ist dabei größer als 5 Gew.-%, bevorzugt größer als 10 Gew.-% bis kleiner 95 Gew.-%, besonders bevorzugt größer als 12 Gew.-% bis kleiner als 70 Gew.-% und insbesondere größer als 15 bis kleiner als 50 Gew.-%, jeweils bezogen auf das Gesamtgewicht der Komponenten a2), a3) und b).

Vorzugsweise wird dabei als Isocyanatgruppen aufweisende Verbindung ein Polyisocyanatprepolymer auf Basis von Polyetherol eingesetzt. Besonders bevorzugt wird als Isocyanatgruppen aufweisende Verbindung eine Mischung aus einem Polyisocyanatprepolymer auf Basis von Polyetherol und einem Polyisocyanatprepolymer auf Basis von Polyesterol. Besonders bevorzugt beträgt das Gewichtsverhältnis von Polyisocyanatprepolymer auf Basis von Polyetherol und Polyisocyanatprepolymer auf Basis von Polyesterol 35 : 65 bis 70 : 30 und insbesondere 40 : 60 bis 60 : 40. Als höhermolekulare Verbindung mit gegenüber Isocyanat reaktiven Gruppen (b) wird in diesem Fall vorzugsweise ausschließlich Polyesterol oder Polymerpolyesterol, besonders bevorzugt ausschließlich Polyesterol eingesetzt. Alternativ kann auch als höhermolekulare Verbindung mit gegenüber Isocyanat reaktiven Gruppen (b) ausschließlich Polyetherol eingesetzt werden, wenn als Polyisocyanatprepolymer ein Polyisocyanatprepolymer auf Basis von Polyestern eingesetzt wird.

In einer zweiten Ausführungsform des erfindungsgemäßen Verfahrens enthalten die Komponenten a2) und b) eine Mischung aus Polyesterpolyol und einem hochfunktionellen Polyetherol mit einer Funktionalität von mindestens 4 und einem Molekulargewicht von 5000 bis 30.000 g/mol eingesetzt. Vorzugsweise handelt es sich bei dem hochfunktionellen Polyetherol um ein Polyoxypropylen-polyoxyethylen-polyol. Dabei ist der Anteil an hochfunktionellem Polyetherols vorzugsweise kleiner 20 Gew.-%, besonders bevorzugt von 15 bis 0,5 Gew.-% und insbesondere von 10 bis 1 Gew.-%, bezogen auf das Gesamtgewicht an Polyolen a2), a3) und b). Vorzugsweise enthält die Komponente b) das hochfunktionelle Polyetherol.

In einer dritten Ausführungsform der Erfindung wird als höhermolekulare Verbindung b) eine Mischung aus Polyesterpolyol und einem Copolymer (C) mit einer Funktionalität gegenüber Isocyanat von mindestens 4 und einem Molekulargewichte von 20.000 bis 200.000 g/mol eingesetzt. Vorzugsweise ist das Copolymer (C) aufgebaut aus wenigstens einem α,β-ethylenisch ungesättigten Monomer und wenigstens einem ungesättigten Polyetherpolyol. Dabei sind diese Copolymere bei 80 °C flüssig.

In einer bevorzugten Ausführungsform entspricht das wenigstens eine α,β-ethylenisch ungesättigte Monomer der allgemeinen Formel (I) 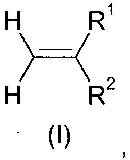 worin
- R¹: C₁-C₃₀-Alkyl, C₂-C₃₀-Alkenyl, C₂-C₃₀-Alkinyl, C₁-C₃₀-Heteroalkyl, substituiertes oder unsubstituiertes C₅-C₃₀-Aryl, substituiertes oder unsubstituiertes C₅-C₃₀-Heteroaryl oder funktionelle Gruppe ausgewählt aus -(C=O)-O-R³ oder -(C=O)-NH-R⁴ mit R³ und R⁴ ausgewählt aus H, C₁-C₃₀-Alkyl, C₂-C₃₀-Alkenyl, C₂-C₃₀-Alkinyl, C₁-C₃₀-Heteroalkyl, substituiertem oder unsubstituiertem C₅-C₃₀-Aryl, substituiertem oder unsubstituiertem C₅-C₃₀-Heteroaryl und
- R²: H, C₁-C₃₀-Alkyl, C₂-C₃₀-Alkenyl, C₂-C₃₀-Alkinyl, C₁-C₃₀-Heteroalkyl, substituiertes oder unsubstituiertes C₅-C₃₀-Aryl oder substituiertes oder unsubstituiertes C₅-C₃₀-Heteroaryl
bedeuten.

Bevorzugt bedeuten in der allgemeinen Formel (I)
- R¹: substituiertes oder unsubstituiertes C₅-C₃₀-Aryl, beispielsweise Benzyl oder Naphthyl, substituiertes oder unsubstituiertes C₅-C₃₀-Heteroaryl oder funktionelle Gruppe ausgewählt aus -(C=O)-O-R³ oder -(C=O)-NH-R⁴ mit R³ und R⁴ ausgewählt aus C₁-C₃₀-Alkyl, insbesondere C₁₂-C₃₀-Alkyl, oder C₂-C₃₀-Alkenyl, insbesondere C₁₂-C₃₀-Alkenyl und
- R²: H, C₁-C₁₂-Alkyl, beispielsweise Methyl, Ethyl, Propyl, Butyl.

Heteroatome sind beispielsweise ausgewählt aus N, O, P, S.

In einer ganz besonders bevorzugten Ausführungsform ist das α,β-ethylenisch ungesättigte Monomer ausgewählt aus der Gruppe bestehend aus Styrol, α-Methylstyrol, Acrylnitril, Acrylaten, Acrylsäureestern oder Methacrylsäureestern oder Acrylsäureamiden oder Methacrylsäureamiden von gesättigten Fettsäuren, beispielsweise Laurinsäure C₁₁H₂₃COOH, Tridecansäure C₁₂H₂₅COOH, Myristinsäure C₁₃H₂₇COOH, Pentadecansäure C₁₄H₂₉COOH, Palmitinsäure C₁₅H₃₁COOH, Margarinsäure C₁₆H₃₃COOH, Stearinsäure C₁₇H₃₅COOH, Nonadecansäure C₁₈H₃₇COOH, Arachinsäure C₁₉H₃₉COOH, Behensäure C₂₁H₄₃COOH, Lignicerinsäure C₂₃H₄₇COOH, Cerotinsäure C₂₅H₅₁COOH, Melissinsäure C₂₉H₅₉COOH, Tubercolostearinsäure i-C₁₈H₃₇COOH, oder ungesättigten Fettsäuren, beispielsweise Palmitoleinsäure C₁₅H₂₉COOH, Ölsäure C₁₇H₃₃COOH, Erucasäure C₂₁H₄₁COOH, Linolsäure C₁₇H₃₁COOH, Linolensäure C₁₇H₂₉COOH, Elaeostearinsäure C₁₇H₂₉COOH, Arachidonsäure C₁₉H₃₁COOH, Clupanodonsäure C₂₁H₃₃COOH, Docosahexaensäure C₂₁H₃₁COOH, und Mischungen davon.

Das im Copolymer (C) vorliegende ungesättigte Polyetherpolyol ist in einer bevorzugten Ausführungsform ein ungesättigtes Polyadditionsprodukt von wenigstens einem mehrwertigen Alkohol, beispielsweise Zuckern, wie hydrolysierte Stärke, Glukosesirup, Sorbitol, Saccharose, Pentaerythrit, Dipentaerythrit, Tripentaerythrit, Glycerin, Trimethylolpropan, einem mehrwertigen Amin, beispielsweise Ethylendiamin, Diethylentriamin, 1,3-Propylendiamin, 1,3-Butylendiamin, 1,4-Butylendiamin, 1,2-, 1,4-, 1,5- und 1,6-Hexamethylendiamin, Phenylendiamin, 2,3-, 2,4- und 2,6-Toluylendiamin, vicinale Toluylendiamine, 4,4'-, 2,4'- und 2,2'-Diaminodiphenylmethan, Alkanolamin, wie Ethanolamin, N-Methyl- und N-Ethylethanolamin, Diethanolamin, N-Methyl-, N-Ethyldiethanolamin, Triethanolamin, Ammoniak, Kondensate aus Aceton oder Formaldehyd mit Phenol oder mehrfunktionelle Alkohole, abgeleitet von Polymeren, die aus hydroxyfunktionellen Monomeren aufgebaut sind, wie Polymere aus Hydroxyethylacrlat, Hydroxymethylacrylat, Hydroxyethylmethacrylat, Hydroxymethylmethacrylat, Hydroxypropylacrylat, Hydroxyproplylmethacrylat oder Copolymere aus diesen Monomeren, wenigstens einem Alkylenoxid, beispielsweise Ethylenoxid, Propylenoxid, Butylenoxid und/oder Pentylenoxid und wenigstens einem ungesättigten Monomeren, beispielsweise mit wenigstens einer Isocyanatgruppe substituiertes Styrol oder α-Methylstyrol, insbesondere Meta-isopropenylbenzylisocyanat, beispielsweise Acrylsäure, Acrylsäurechlorid, Metacrylsäure, Metacrylsäurechlorid, Fumarsäure, Maleinsäureanhydrid, vinylisch ungesättigte Epoxide wie zum Beispiel Acryloylglycidylether, Metacryloylglycidylether

Ganz besonders bevorzugte Copolymere (C) sind beispielsweise Copolymere aus Butylacrylat, Styrol, einem ungesättigten Polyetherpolyol aus Sorbitol, Propylenoxid, Ethylenoxid und meta-Isopropenylbenzylisocyanat (Massenverhältnis 1:1:1), Copolymere aus Butylacrylat, Styrol, einem ungesättigten Polyetherpolyol aus Sorbitol, Propylenoxid, Ethylenoxid und meta-Isopropenylbenzylisocyanat (Massenverhältnis 1:2:1), Copolymere aus Butylacrylat, Styrol, einem ungesättigten Polyetherpolyol aus Sorbitol, Propylenoxid, Ethylenoxid und meta-Isopropenylbenzylisocyanat (Massenverhältnis 2:2:1), Copolymere aus Butylacrylat, Styrol, einem ungesättigten Polyetherpolyol aus Sorbitol, Propylenoxid, Ethylenoxid und meta-Isopropenylbenzylisocyanat (Massenverhältnis 4:4:1), Copolymere aus Butylacrylat, Styrol, einem ungesättigten Polyetherpolyol aus Sorbitol, Propylenoxid, Ethylenoxid und meta-Isopropenylbenzylisocyanat (Massenverhältnis 4:4:1), Copolymere aus Butylacrylat, Styrol, einem ungesättigten Polyetherpolyol aus Sorbitol, Propylenoxid, Ethylenoxid und meta-Isopropenylbenzylisocyanat (Massenverhältnis 4:4:1) mit niedrigerem Molekulargewicht, Copolymere aus Styrol, einem ungesättigten Polyetherpolyol aus Sorbitol, Propylenoxid, Ethylenoxid und meta-Isopropenylbenzylisocyanat (Massenverhältnis 8:1) Copolymere aus Butylacrylat, Styrol, einem ungesättigten Polyetherpolyol aus Sorbitol, Propylenoxid, Ethylenoxid und meta-Isopropenylbenzylisocyanat (Massenverhältnis 8:8:1) mit niedrigerem Molekulargewicht, Copolymere aus Styrol, Stearylacrylat, einem ungesättigten Polyetherpolyol aus Sorbitol, Propylenoxid, Ethylenoxid und meta-Isopropenylbenzylisocyanat (Massenverhältnis 1:1:1), Copolymere aus Stearylacrylat, einem ungesättigten Polyetherpolyol aus Sorbitol, Propylenoxid, Ethylenoxid und meta-Isopropenylbenzylisocyanat (Massenverhältnis 1:1:1), Copolymere aus Butylacrylat, Stearylacrylat, einem ungesättigten Polyetherpolyol aus Sorbitol, Propylenoxid, Ethylenoxid und meta-Isopropenylbenzylisocyanat (Massenverhältnis 1:1:1), Copolymere aus Stearylacrylat, Hydroxyethylacrylat, einem ungesättigtem Polyetherpolyol aus Hydroxyethylacrylat, Diisocyanat und Polyetherpolyol, Copolymere aus Stearylacrylat, Hydroxypropylacrylat, einem ungesättigtem Polyetherpolyol aus Hydroxyethylacrylat, Diisocyanat und Polyetherpolyol, Copolymere aus Stearylacrylat, Styrol und einem ungesättigtem Polyetherpolyol aus Hydroxyethylacrylat, Diisocyanat und Polyetherpolyol, Copolymere aus Stearylacrylat, Acrylnitril und einem ungesättigtem Polyetherpolyol aus Hydroxyethylacrylat, Diisocyanat und Polyetherpolyol, Copolymere aus ungesättigtem Fettalkohol (C₁₂-C₃₀) aus Fettalkohol (C₁₂-C₃₀) und meta-Isopropenylbenzylisocyanat, einem ungesättigtem Polyetherpolyol aus Hydroxyethylacrylat, Diisocyanat und Polyetherpolyol, Copolymere aus ungesättigtem Fettalkohol (C₁₂-C₃₀) aus Fettalkohol (C₁₂-C₃₀) und meta-Isopropenylbenzylisocyanat, Styrol, einem ungesättigtem Polyetherpolyol aus Hydroxyethylacrylat, Diisocyanat und Polyetherpolyol, Copolymere aus ungesättigtem Fettalkohol (C₁₂-C₃₀) aus Fettalkohol (C₁₂-C₃₀) und meta-Isopropenylbenzylisocyanat, Acrylnitril, einem ungesättigtem Polyetherpolyol aus Hydroxyethylacrylat, Diisocyanat und Polyetherpolyol, Copolymere aus ungesättigtem Fettalkohol (C₁₂-C₃₀) aus Fettalkohol (C₁₂-C₃₀) und meta-Isopropenylbenzylisocyanat, einem ungesättigtem Polyetherpolyol aus meta-Isopropenylbenzylisocyanat und Polyetherpolyol, Copolymere aus ungesättigtem Fettalkohol (C₁₂-C₃₀) aus Fettalkohol (C₁₂-C₃₀) und meta-Isopropenylbenzylisocyanat, Styrol, einem ungesättigtem Polyetherpolyol aus meta-Isopropenylbenzylisocyanat und Polyetherpolyol.

Insbesondere bevorzugt sind Copolymere aus Styrol, Stearylacrylat und einen ungesättigten Polyetherpolyol aus Sorbitol, Propylenoxid, Ethylenoxid und meta-Isopropenylbenzylisocyanat. Bevorzugte ungesättigte Polyetherole haben ein Funktionalität von 2 bis 8 und eine Molekulargewicht Mw von 2.000g/mol bis 50.000 g/mol.

Diese erfindungsgemäß als Copolymere (C) geeigneten Polymere weisen vorzugsweise ein Molekulargewicht im Bereich von 10.000 bis 1.000.000 g/mol, besonders bevorzugt von 20.000 bis 200.000, insbesondere von 30.000 bis 80.000 g/mol auf. Üblicherweise werden die Molekulargewichte mittels GPC bestimmt, als Standard wird Polystyrol eingesetzt.

Der Anteil des amphiphilen Moleküls beträgt vorzugsweise 0,1 bis 20 Gew.-%, besonders bevorzugt 0,2 bis 10 Gew.-% und insbesondere 0,5 bis 5 Gew.-%, bezogen auf das Gesamtgewicht der Verbindungen a2), a3) und b).

In einer vierten Ausführungsform werden als höhermolekulare Verbindung b) eine Mischung aus Polyesterpolyol und einem hydrophoben, hyperverzweigten Polyester eingesetzt. Ein erfindungsgemäßer hyperverzweigter Polyester ist erhältlich durch Umsetzung mindestens einer Dicarbonsäure (A₂) oder von Derivaten derselben mit
s1) mindestens einem mindestens dreiwertigen Alkohol (B₃), oder
   t1) mit mindestens einem zweiwertigen Alkohol (B₂) und mindestens einem x-wertigen Alkohol (Cₓ), der mehr als zwei OH-Gruppen aufweist, wobei x eine Zahl größer 2 ist, wobei die Gesamtmischung der eingesetzten Alkohole eine mittlere Funktionalität von 2,1 bis 10 aufweist,
      oder durch Umsetzung mindestens einer Polycarbonsäure (D_{y}) oder deren Derivat, die mehr als zwei Säuregruppen aufweist, wobei y eine Zahl größer 2, mit
s2) mindestens einem mindestens zweiwertigen Alkohol (B₂), oder
   t2) mit mindestens einem zweiwertigen Alkohol (B₂) und mindestens einem x-wertigen Alkohol (Cₓ), der mehr als zwei OH-Gruppen aufweist, wobei x eine Zahl größer 2 ist,
   wobei
   u) bis zu 50 mol-%, bevorzugt bis zu 40 mol-%, besonders bevorzugt bis zu 30 mol%, und insbesondere bevorzugt bis zu 20 mol-% bezogen auf die gemäß s1), s2), t1) und t2) umgesetzten Alkohole B₃, B₂ und/oder Cₓ, eines hydrophoben langkettigen monofunktionellen Alkohols E₁ mit mindestens 8 C-Atomen mit umgesetzt werden können, und
   v) optional anschließender Umsetzung mit einer langkettigen hydrophoben Monocarbonsäure mit mindestens 8 C-Atomen,
   wobei eine oder mehrere der nachstehenden Bedingungen erfüllt sind:
   i) der Alkohol B₃ bzw. B₂ und/oder Cₓ ist ein hydrophobes Alkoxylat auf Basis von Propylenoxid, Butylenoxid oder Styroloxid mit im Mittel mindestens 1 und höchstens 100 Oxyalkylen-Einheiten pro Startermolekül, und einem difunktionellen (für B₂), trifunktionellen (für B₃) oder x-funktionellen (für Cₓ) Startermolekül;
   ii) die Alkohole B₃ bzw. B₂ und/oder Cₓ enthalten mindestens 20 mol.-%, bevorzugt mindestens 30 mol-%, besonders bevorzugt mindestens 40 mol-%, und ganz besonders bevorzugt mindestens 50 mol-% eines langkettigen Diols bzw. Polyols mit mindestens 8 C-Atomen;
   iii) die Dicarbonsäure ist eine hydrophobe langkettige aliphatische Dicarbonsäure, eine aromatische oder cycloaliphatische Dicarbonsäure mit mindestens 8 C-Atomen, bzw. die Carbonsäure D_{y} mit mehr als zwei Säuregruppen ist eine hydrophobe langkettige aliphatische Polycarbonsäure, eine aromatische oder cycloaliphatische Polycarbonsäure mit mindestens 9 C-Atomen;
   iv) mindestens 10 mol-% und höchstens 90 mol.-%, bevorzugt höchstens 70 mol-%, besonders bevorzugt höchstens 50 mol-%, und insbesondere bevorzugt höchstens 30 mol-% bezogen auf die gemäß s1), s2), t1) und t2) umgesetzten Alkohole B₃, B₂ und/oder Cₓ eines langkettigen Monoalkohols mit mindestens 8 C-Atomen werden mit umgesetzt;
   v) es wird anschließend mit 10 bis 100 mol.-%, bevorzugt 10 bis 80 mol-%, besonders bevorzugt 20 bis 80 mol-%, insbesondere bevorzugt 20 bis 60 mol-% bezogen auf die mittlere Anzahl der OH-Gruppen des hyperverzweigten Polyesters, einer langkettigen hydrophoben Monocarbonsäure mit mindestens 8 C-Atomen umgesetzt.

Unter "hyperverzweigt" wird im Zusammenhang mit der vorliegenden Erfindung verstanden, dass der Verzweigungsgrad (Degree of Branching, DB), von 10 bis 100 % vorzugsweise 10 bis 99,9 %, besonders bevorzugt 20 bis 99 %, insbesondere 20 bis 95 % beträgt. Damit wird auch ein Dendrimer mit einem Verzweigungsgrad von 100% umfasst. Zur Definition des "Degree of Branching" siehe H. Frey et al., Acta Polym. 1997, 48, 30.

Unter einem Polyester des Typs AₓB_{y} versteht man ein Kondensat der Moleküle A und B, wobei die Moleküle A funktionelle Gruppen funkt1) und die Moleküle B funktionelle Gruppen funkt2) aufweisen, die in der Lage sind, miteinander zu kondensieren. Dabei ist die Funktionalität der Moleküle A gleich x und die Funktionalität der Moleküle B gleich y. Beispielsweise sei ein Polyester aus Adipinsäure als Molekül A (funkt1 = COOH, x = 2) und Glycerin als Molekül B (funkt2 = OH; y = 3) genannt.

Selbstverständlich können als Einheiten A bzw. B auch Mischungen von verschiedenen Molekülen A mit gleicher funktioneller Gruppe und gleichen und/oder unterschiedlichen Funktionalitäten und verschiedenen Molekülen B mit gleicher funktioneller Gruppe und gleichen und/oder unterschiedlichen Funktionalitäten eingesetzt werden. Die Funktionalitäten x und y der Mischung ergeben sich dann durch Mittelung.

Im Allgemeinen wird das Verhältnis der reaktiven Gruppen im Reaktionsgemisch so gewählt, dass sich ein molares Verhältnis von OH-Gruppen zu Carboxylgruppen oder deren Derivaten von 5 : 1 bis 1 : 5, vorzugsweise von 4 : 1 bis 1 : 4, besonders bevorzugt von 3 : 1 bis 1 : 3, besonders bevorzugt von 2,5 : 1 bis 1 : 2,5, und ganz besonders bevorzugt von 2 : 1 bis 1 : 2 einstellt.

In einer weiteren besonders bevorzugten Ausführung wird im Reaktionsgemisch eine der beiden Komponenten, die zur Synthese des hyperverzweigten Polymers verwendete Carbonsäure-Komponente oder die Alkohol-Komponente, im molaren Überschuss eingesetzt. Dadurch werden besonders bevorzugte, überwiegend COOH-terminierte bzw. überwiegend OH-terminierte hyperverzweigte Polyester gebildet. Hierbei haben sich molare Überschuss-Verhältnisse der COOH-Gruppen in Bezug auf die OH-Gruppen bzw. Überschüsse der OH-Gruppen in Bezug auf die COOH-Gruppen von 1,1 : 1 bis 3 : 1, bevorzugt von 1,3 : 1 bis 2,8 : 1, bevorzugt von 1,5 : 1 bis 2,6 : 1, besonders bevorzugt von 1,7 : 1 bis 2,4 : 1, ganz bevorzugt von 1,8 : 1 bis 2,2 : 1, und insbesondere bevorzugt von 1,9 : 1 bis 2,1 : 1 als vorteilhaft erwiesen.

Gegebenenfalls wird in Gegenwart eines Lösemittels und optional in Gegenwart eines anorganischen, metallorganischen oder niedermolekularen organischen Katalysators oder eines Enzyms gearbeitet. Die Umsetzung in Substanz, also ohne Lösungsmittel, ist das kostengünstigste und damit bevorzugte Herstellungsverfahren. Als Katalysatoren werden dem Fachmann bekannte, für die Veresterungsreaktion übliche Katalysatoren verwendet, wie sie zum Beispiel in der WO 2008/071622 beschrieben sind.

Hyperverzweigte Polyester im Sinne der vorliegenden Erfindung sind molekular und strukturell uneinheitlich. Sie unterscheiden sich durch ihre molekulare Uneinheitlichkeit von Dendrimeren und sind daher mit erheblich geringerem Aufwand herzustellen.

Geeignete hydrophobe langkettige Dicarbonsäuren mit 8 oder mehr C-Atomen sind beispielsweise Korksäure (Octandisäure), Azelainsäure, Sebacinsäure (Decandisäure), Dodecandisäure und Tetradecandisäure. Zu den langkettigen Dicarbonsäuren gehören insbesondere solche mit langkettigen Alkyl- oder Alkenylsubstituenten, beispielsweise Alkenylbernsteinsäure mit einem C8- bis C24-Alkenylrest, bevorzugt C12- bis C18-Alkenylrest.

Zu den langkettigen Dicarbonsäuren gehören insbesondere durch Addition von hydrophoben Resten an die C-C-Doppelbindung hydrophobierte α,β-ungesättigte Carbonsäuren oder deren Derivate. Als α,β-ungesättigte Carbonsäuren bzw. -derivate werden dabei vorzugsweise Maleinsäure, Maleinsäureanhydrid und Fumarsäure, besonders bevorzugt Maleinsäureanhydrid, eingesetzt. Die Hydrophobierung kann nach oder bevorzugt vor dem Umsetzen mit dem Alkohol zum Polyester erfolgen. Als Hydrophobierungsmittel können hydrophobe Verbindungen enthaltend mindestens eine C-C-Doppelbindung, wie lineare oder verzweigte Olefine, lineares oder verzweigtes Polyisobutylen, Polybutadien, Polyisopren mit im Mittel 8 bis 160 C-Atomen eingesetzt werden.

Zu den langkettigen Dicarbonsäuren gehören auch ungesättigte Fettsäuren oder deren Derivate sowie dimerisierte Fettsäuren (z.B. über die olefinische Einheit dimerisierte Ölsäure).

Geeignete cycloaliphatische Dicarbonsäuren sind beispielsweise cis- und trans-Cyclohexan-1,2-dicarbonsäure, cis- und trans-Cyclohexan-1,3-dicarbonsäure, cis- und trans-Cyclohexan-1,4-dicarbonsäure, wobei die oben genannten Dicarbonsäuren substituiert sein können.

Geeignete aromatische Dicarbonsäuren sind beispielsweise Phthalsäure, Isophthalsäure und Terephthalsäure.

Weiterhin lassen sich Gemische von zwei oder mehreren der vorgenannten Vertreter einsetzen.

Die Dicarbonsäuren lassen sich entweder als solche oder in Form ihrer Derivate einsetzen.

Unter Derivaten werden bevorzugt verstanden
- die betreffenden Anhydride in monomerer oder auch polymerer Form,
- Mono- oder Dialkylester, bevorzugt Mono- oder Dimethylester oder die entsprechenden Mono- oder Diethylester, aber auch die von höheren Alkoholen wie beispielsweise n-Propanol, iso-Propanol, n-Butanol, Isobutanol, tert.-Butanol, n-Pentanol, n-Hexanol abgeleiteten Mono- und Dialkylester,
- ferner Mono- und Divinylester sowie
- gemischte Ester, bevorzugt Methylethylester.

Es ist auch möglich, ein Gemisch aus einer Dicarbonsäure und einem oder mehreren ihrer Derivate einzusetzen. Gleichfalls ist es möglich, ein Gemisch mehrerer verschiedener Derivate von einer oder mehreren Dicarbonsäuren einzusetzen.

Umsetzbare Tricarbonsäuren oder Polycarbonsäuren (D_{y}) sind beispielsweise Aconitsäure, 1,3,5-Cyclohexantricarbonsäure, 1,2,4-Benzoltricarbonsäure, 1,3,5-Benzoltricarbonsäure, 1,2,4,5-Benzoltetracarbonsäure (Pyromellitsäure) sowie Mellitsäure und niedermolekulare Polyacrylsäuren.

Tricarbonsäuren oder Polycarbonsäuren (D_{y}) lassen sich entweder als solche oder aber in Form von Derivaten einsetzen.

Es ist auch möglich, ein Gemisch aus einer Tri- oder Polycarbonsäure und einem oder mehreren ihrer Derivate einzusetzen, zum Beispiel eine Mischung aus Pyromellitsäure und Pyromellitsäuredianhydrid. Gleichfalls ist es möglich, ein Gemisch mehrerer verschiedener Derivate von einer oder mehreren Tri- oder Polycarbonsäuren einzusetzen, zum Beispiel eine Mischung aus 1,3,5-Cyclohexantricarbonsäure und Pyromellitsäuredianhydrid.

Tricarbonsäuren oder Polycarbonsäuren lassen sich in der erfindungsgemäßen Reaktion entweder als solche oder aber in Form von Derivaten einsetzen.

Es ist auch möglich, ein Gemisch aus einer Tri- oder Polycarbonsäure und einem oder mehreren ihrer Derivate einzusetzen. Gleichfalls ist es im Rahmen der vorliegenden Erfindung möglich, ein Gemisch mehrerer verschiedener Derivate von einer oder mehreren Tri- oder Polycarbonsäuren einzusetzen, um den hyperverzweigten Polyester zu erhalten.

Als Diole (B₂) verwendet man beispielsweise Ethylenglykol, Propan-1,2-diol, Propan-1,3-diol, Butan-1,2-diol, Butan-1,3-diol, Butan-1,4-diol, Butan-2,3-diol, Pentan-1,2-diol, Pentan-1,3-diol, Pentan-1,4-diol, Pentan-1,5-diol, Pentan-2,3-diol, Pentan-2,4-diol, Hexan-1,2-diol, Hexan-1,3-diol, Hexan-1,4-diol, Hexan-1,5-diol, Hexan-1,6-diol, Hexan-2,5-diol, Heptan-1,2-diol 1,7-Heptandiol, 1,8-Octandiol, 1,2-Octandiol, 1,9-Nonandiol, 1,2-Decandiol, 1,10-Decandiol, 1,2-Dodecandiol, 1,12-Dodecandiol, 1,5-Hexadien-3,4-diol, 1,2- und 1,3-Cyclopentandiole, 1,2-, 1,3- und 1,4-Cyclohexandiole, 1,1-, 1,2-, 1,3- und 1,4-Bis-(Hydroxymethyl)cyclohexane, 1,1-, 1,2-, 1,3-und 1,4-Bis(Hydroxyethyl)cyclohexane, Neopentylglykol, (2)-Methyl-2,4-pentandiol, 2,4-Dimethyl-2,4-Pentandiol, 2-Ethyl-1,3-hexandiol, 2,5-Dimethyl-2,5-hexandiol, 2,2,4-Trimethyl-1,3-pentandiol, Pinacol, Diethylenglykol, Triethylenglykol, Dipropylenglykol, Tripropylenglykol, Polyethylenglykole HO(CH₂CH₂O)ₙ-H oder Polypropylenglykole HO(CH[CH₃]CH₂O)ₙ-H, wobei n eine ganze Zahl und n ≥ 4 ist, Polyethylenpolypropylenglykole, wobei die Abfolge der Ethylenoxid- und der Propylenoxid-Einheiten blockweise oder statistisch sein kann, Polytetramethylenglykole, vorzugsweise bis zu einem Molgewicht bis zu 5000 g/mol, Poly-1,3-Propandiole, vorzugsweise mit einem Molgewicht bis zu 5000 g/mol, Polycaprolactone oder Gemische von zwei oder mehr Vertretern der voranstehenden Verbindungen. Dabei kann eine oder auch beide Hydroxylgruppen in den vorstehend genannten Diolen durch SH-Gruppen substituiert werden. Bevorzugt eingesetzte Diole sind Ethylenglykol, 1,2-Propandiol, 1,3-Propandiol, 1,4-Butandiol, 1,5-Pentandiol, 1,6-Hexandiol, 1,8-Octandiol, 1,2-, 1,3- und 1,4-Cyclohexandiol, 1,3- und 1,4-Bis(hydroxymethyl)cyclohexan, sowie Diethylenglykol, Triethylenglykol, Dipropylenglykol, Tripropylenglykol, Polyethylenglykole HO(CH₂CH₂O)ₙ-H oder Polypropylenglykole HO(CH[CH₃]CH₂O)ₙ-H, wobei n eine ganze Zahl und n ≥ 4 ist, Polyethylen-polypropylenglykole, wobei die Abfolge der Ethylenoxid- und der Propylenoxid-Einheiten blockweise oder statistisch sein kann, oder Polytetramethylenglykole, vorzugsweise bis zu einem Molgewicht bis zu 5000 g/mol.

Die zweiwertigen Alkohole B₂ können optional noch weitere Funktionalitäten wie beispielsweise Carbonyl-, Carboxy-, Alkoxycarbonyl- oder Sulfonyl-Funktionen enthalten, wie beispielsweise Dimethylolpropionsäure und Dimethylolbuttersäure, sowie deren C₁-C₄-Alkylester, Glycerinmonostearat und Glycerinmonooleat.

Geeignete langkettige Diole B₂ mit mindestens 8 C-Atomen sind beispielsweise 1,8-Octandiol, 1,2-Octandiol, 1,9-Nonandiol, 1,2-Decandiol, 1,10-Decandiol, 1,2-Dodecandiol, 1,12-Dodecandiol, sowie Monofettsäureester von Triolen, insbesondere Monofettsäureester von Glycerin, wie Glycerinmonostearat, Glycerinmonooleat und Glycerinmonopalmitat.

Mindestens trifunktionelle Alkohole (B₃ bzw. Cₓ) umfassen Glycerin, Trimethylolmethan, Trimethylolethan, Trimethylolpropan, 1,2,4-Butantriol, Tris(hydroxymethyl)amin, Tris(hydroxyethyl)amin, Tris(hydroxypropyl)amin, Pentaerythrit, Diglycerin, Triglycerin oder höhere Kondensationsprodukte des Glycerins, Di(trimethylolpropan), Di(pentaerythrit), Trishydroxymethylisocyanurat, Tris(hydroxyethyl)isocyanurat (THEIC), Tris(hydroxypropyl)isocyanurat, Inositole oder Zucker, wie zum Beispiel Glucose, Fructose oder Sucrose, Zuckeralkohole wie z.B. Sorbit, Mannit, Threit, Erythrit, Adonit (Ribit), Arabit (Lyxit), Xylit, Dulcit (Galactit), Maltit, Isomalt, tri- oder höherfunktionelle Polyetherole auf Basis tri- oder höherfunktioneller Alkohole und Propylenoxid und/oder Butylenoxid.

Dabei sind Glycerin, Diglycerin, Triglycerin, Trimethylolethan, Trimethylolpropan, Bis(trimethyolopropan), 1,2,4-Butantriol, Pentaerythrit, Di(pentaerythrit), Tris(hydroxyethyl)isocyanurat sowie deren Polyetherole auf Basis von Propylenoxid besonders bevorzugt.

Die mindestens trifunktionellen Alkohole B₃ können optional noch weitere Funktionalitäten wie beispielsweise Carbonyl-, Carboxy-, Alkoxycarbonyl- oder Sulfonyl-Funktionen enthalten, wie beispielsweise Gallussäure oder ihre Derivate.

Geeignete hydrophobe langkettige aliphatische Monocarbonsäuren F sind beispielsweise Octansäure, Decansäure, Dodecansäure, Tetradecansäure und Fettsäuren, wie Stearinsäure, Ölsäure, Laurinsäure, Palmitinsäure, Linolsäure und Linolensäure.

In einer Ausführungsform i) der Erfindung ist der Alkohol B₃ bzw. B₂ und/oder Cₓ ein hydrophobes Alkoxylat auf Basis von Propylenoxid oder Butylenoxid mit im Mittel mindestens 1 und höchstens 100 Oxyalkylen-Einheiten pro Startermolekül, bevorzugt höchstens 50 Oxyalkylen-Einheiten pro Startermolekül. Bevorzugte Alkohole B₃ bzw. B₂ und/oder Cₓ sind die Propoxylate von Monoethylenglycol, Diethylenglycol, Propylenglycol, Dipropylenglycol, Tripropylenglycol, Glycerin, Trimethylolpropan, Pentaerythrit, Sorbitol, Saccharose, die im Mittel 1 bis 30 Oxypropylen-Einheiten pro OH-Gruppe aufweisen, insbesondere 1 bis 20 Oxypropylen-Einheiten pro OH-Gruppe aufweisen.

In einer weiteren Ausführungsform ii) der Erfindung enthalten die Alkohole B₃ bzw. B₂ und/oder Cₓ mindestens 20 mol.-%, bevorzugt mindestens 30 mol.-%, insbesondere 40 mol-% und ganz insbesondere mindestens 50 mol-% eines langkettigen Diols bzw. Polyols mit mindestens 8 C-Atomen, bevorzugt mit mindestens 10 C-Atomen, besonders bevorzugt mit mindestens 12 C-Atomen. Besonders bevorzugte Diole bzw. Polyole mit mindestens 8 C-Atomen sind Isomere des Octandiols, des Nonadiols, des Decandiols, des Dodecandiols, des Tetradecandiols, des Hexadecandiols, des Octadecandiols, des Dimethyolcyclohexans und des Dimethylolbenzols.

In einer weiteren Ausführungsform iii) der Erfindung ist die Dicarbonsäure eine hydrophobe langkettige aliphatische Dicarbonsäure, eine aromatische oder cycloaliphatische Dicarbonsäure mit mindestens 8 C-Atomen. Bevorzugt werden aliphatische langkettige Dicarbonsäuren umgesetzt. Diese weisen bevorzugt mindestens 10, insbesondere mindestens 12 C-Atome auf. Im Allgemeinen weisen sie höchstens 100 C-Atome, bevorzugt höchstens 50 C-Atome auf. Daneben können kürzerkettige Dicarbonsäuren in Mengen bis zu 90 mol-%, bevorzugt in Mengen bis zu 70 mol-%, besonders bevorzugt bis zu 50 mol-%, bezogen auf die Gesamtmenge der Dicarbonsäuren, mit eingesetzt werden.

Bevorzugte langkettige aliphatische Dicarbonsäuren sind Korksäure (Octandisäure), Azelainsäure, Sebacinsäure (Decandisäure), Dodecandisäure und Tetradecandisäure; Alkenylbernsteinsäure, insbesondere mit einem C8- bis C24-Alkenylrest, bevorzugt solche mit einem C12- bis C18-Alkenylrest und insbesondere bevorzugt mit einem C16- bis C18-Alkenylrest, wobei die geradzahligen Alkenylreste gegenüber ungeradzahligen Alkenylresten nochmals weiter bevorzugt sind; Addukte von linearem oder verzweigtem Polyisobutylen, Polybutadien, Polyisopren mit im Mittel 8 bis 160 C-Atomen an α,β-ungesättigte Carbonsäuren, insbesondere Maleinsäure oder Fumarsäure; Fettsäuren oder deren Derivate und dimerisierte Fettsäuren.

Als Polycarbonsäure D_{y} mit mehr als zwei Säuregruppen sind hydrophobe langkettige sowie zyklische, aliphatische und aromatische Polycarbonsäuren bevorzugt. Besonders bevorzugt sind Aconitsäure, sowie Isomere der Cyclohexantricarbonsäure, der Benzoltricarbonsäure und oligomere Polyacrylsäuren mit mindestens 3 und höchstens 10 Säuregruppen.

In einer weiteren Ausführungsform iv) der Erfindung werden mindestens 10 mol-% und höchstens 90 mol.-%, bevorzugt höchstens 70 mol-%, besonders bevorzugt höchstens 50 mol-%, und insbesondere bevorzugt höchstens 30 mol-% bezogen auf die gemäß s1), s2), t1) und t2) umgesetzten Alkohole B₃, B₂ und/oder Cₓ eines langkettigen Monoalkohols mit mindestens 8 C-Atomen, bevorzugt mindestens 10 C-Atomen mit umgesetzt. Bevorzugte langkettige Monoalkohole sind Octanol, Decanol, Dodecanol, Tetradecanol, C16-Alkohole und C18-Alkohole.

In einer weiteren Ausführungsform v) der Erfindung wird das aus den Komponenten s1) und t1) bzw. s2) und t2) erhaltene Umsetzungsprodukt anschließend mit 10 bis 100 mol-%, bevorzugt 20 bis 100 mol-%, besonders bevorzugt 20 bis 80 mol-%, insbesondere bevorzugt 20 bis 60 mol-% bezogen auf die mittlere Anzahl der OH-Gruppen des hyperverzweigten Polyesters, einer langkettigen hydrophoben Monocarbonsäure mit mindestens 8 C-Atomen, bevorzugt mindestens 10 C-Atomen, insbesondere mit mindestens 12 C-Atomen umgesetzt. Bevorzugte langkettige Monocarbonsäuren sind Octansäure, Decansäure, Dodecansäure, Tetradecansäure und Fettsäuren, wie Stearinsäure und Ölsäure.

Insbesondere bevorzugte hydrophobe hyperverzweigte Polyester werden erhalten, wenn
i) der Alkohol B₃ bzw. B₂ und/oder Cₓ ein hydrophobes Alkoxylat auf Basis von Propylenoxid oder Butylenoxid mit im Mittel 1 bis 15 Oxyalkylen-Einheiten pro OH-Gruppe ist, und
iii) dieser mit einer hydrophoben langkettigen aliphatischen Dicarbonsäure, einer aromatischen oder cycloaliphatischen Dicarbonsäure mit mindestens 8 C-Atomen, insbesondere einer langkettigen aliphatischen Dicarbonsäure mit mindestens 8 C-Atomen, oder mit einer hydrophoben langkettigen aliphatischen Polycarbonsäure, einer aromatischen oder cycloaliphatischen Polycarbonsäure D_{y} mit mehr als zwei Säuregruppen und mindestens 9 C-Atomen umgesetzt wird,

oder
i) der Alkohol B₃ bzw. B₂ und/oder Cₓ ein hydrophobes Alkoxylat auf Basis von Propylenoxid oder Butylenoxid mit im Mittel 1 bis 15 Oxyalkylen-Einheiten pro OH-Gruppe ist, und
iii) dieser mit einer hydrophoben langkettigen aliphatischen Dicarbonsäure, einer aromatischen oder cycloaliphatischen Dicarbonsäure mit mindestens 8 C-Atomen, insbesondere einer langkettigen aliphatischen Dicarbonsäure mit mindestens 8 C-Atomen, oder mit einer hydrophoben langkettigen aliphatischen Polycarbonsäure, einer aromatischen oder cycloaliphatischen Polycarbonsäure D_{y} mit mehr als zwei Säuregruppen und mindestens 9 C-Atomen umgesetzt wird,
   wobei eine der beiden Komponenten, die Carbonsäure- oder die Alkohol-Komponente, im Reaktionsgemisch zur Synthese des hyperverzweigten Polyesters im molaren Überschuss eingesetzt wird und das molare Überschuss-Verhältnis der COOH-Gruppen in Bezug auf die OH-Gruppen bzw. der Überschuss der OH-Gruppen in Bezug auf die COOH-Gruppen von 1,1 : 1 bis 3 : 1, bevorzugt von 1,3 : 1 bis 2,8 : 1, bevorzugt von 1,5 : 1 bis 2,6 : 1, besonders bevorzugt von 1,7 : 1 bis 2,4 : 1, ganz bevorzugt von 1,8 : 1 bis 2,2 : 1, und insbesondere bevorzugt 1,9 : 1 bis 2,1 : 1 beträgt, insbesondere die Carbonsäure-Komponente im molaren Überschuss eingesetzt wird und das molare Überschuss-Verhältnis der COOH-Gruppen in Bezug auf die OH-Gruppen von 1,1 : 1 bis 3 : 1, bevorzugt von 1,3 : 1 bis 2,8 : 1, bevorzugt von 1,5 : 1 bis 2,6 : 1, besonders bevorzugt von 1,7 : 1 bis 2,4 : 1, ganz bevorzugt von 1,8 : 1 bis 2,2 : 1, und insbesondere bevorzugt 1,9 : 1 bis 2,1 : 1 beträgt,
oder
i) der Alkohol B₃ bzw. B₂ und/oder Cₓ ein hydrophobes Alkoxylat auf Basis von Propylenoxid oder Butylenoxid mit im Mittel 1 bis 15 Oxyalkylen-Einheiten pro OH-Gruppe ist, und
iv) mindestens 10 mol-% und höchstens 90 mol.-%, bevorzugt höchstens 70 mol-%, besonders bevorzugt höchstens 50 mol-%, und insbesondere bevorzugt höchstens 30 mol-%, bezogen auf die gemäß s1), s2), t1) und t2) umgesetzten Alkohole B₃, B₂ und/oder Cₓ eines langkettigen Monoalkohols mit mindestens 8 C-Atomen mit umgesetzt werden,
oder
i) der Alkohol B₃ bzw. B₂ und/oder Cₓ ein hydrophobes Alkoxylat auf Basis von Propylenoxid oder Butylenoxid mit im Mittel 1 bis 15 Oxyalkylen-Einheiten pro OH-Gruppe ist, und
v) anschließend das Umsetzungsprodukt aus s1) und t1) bzw. s2) und t2) mit 10 bis 100 mol.-%, bevorzugt 20 bis 100 mol-%, besonders bevorzugt 20 bis 80 mol-%, insbesondere bevorzugt 20 bis 60 mol-% bezogen auf die mittlere Anzahl der OH-Gruppen des hyperverzweigten Polyesters, einer langkettigen hydrophoben Monocarbonsäure mit mindestens 8 C-Atomen umgesetzt wird.

Der erfindungsgemäß eingesetzte hydrophobe hyperverzweigte Polyester weist im Allgemeinen ein zahlenmittleres Molekulargewicht Mₙ von 800 bis 15000, vorzugsweise von 1000 bis 12000 und insbesondere von 1500 bis 10000 g/mol auf, gemessen mit GPC, kalibriert mit Polymethylmethacrylat (PMMA) Standard.

Im Allgemeinen weist der erfindungsgemäß eingesetzte hydrophobe hyperverzweigte Polyester eine OH-Zahl von 0 bis 500, vorzugsweise von 0 bis 400, insbesondere von 0 bis 300 mg KOH/g Polyester gemäß DIN 53240 auf.

Im Allgemeinen haben die erfindungsgemäß eingesetzten hydrophoben hyperverzweigten Polyester eine Säurezahl gemäß DIN 53240, Teil 2 von 0 bis 300, bevorzugt von 0 bis 200, bevorzugt von 1 bis 150, besonders bevorzugt von 1 bis 125, bevorzugt von 5 bis 125 und insbesondere von 10 bis 125 mg KOH/g.

Weiter haben die erfindungsgemäß eingesetzten hydrophoben hyperverzweigten Polyester im Allgemeinen eine Glasübergangstemperatur (gemessen nach der ASTM Methode D3418 - 03 mit DSC) von -60 bis 100 °C, bevorzugt von -40 bis 80 °C.

Die Herstellung der hydrophoben hyperverzweigten Polyester wird vorzugsweise lösemittelfrei oder in Gegenwart eines Lösemittels durchgeführt. Geeignet sind beispielsweise Kohlenwasserstoffe wie Paraffine oder Aromaten. Besonders geeignete Paraffine sind n-Heptan und Cyclohexan. Besonders geeignete Aromaten sind Toluol, ortho-Xylol, meta-Xylol, para-Xylol, Xylol als Isomerengemisch, Ethylbenzol, Chlorbenzol und ortho- und meta-Dichlorbenzol. Weiterhin sind als Lösemittel in Abwesenheit von sauren Katalysatoren ganz besonders geeignet: Ether wie beispielsweise Dioxan oder Tetrahydrofuran und Ketone wie beispielsweise Methylethylketon und Methylisobutylketon.

Die Menge an zugesetztem Lösemittel beträgt, sofern nicht gänzlich lösemittelfrei verfahren wird, erfindungsgemäß mindestens 0,1 Gew.-%, bezogen auf die Masse der eingesetzten umzusetzenden Ausgangsmaterialien, bevorzugt mindestens 1 Gew.-% und besonders bevorzugt mindestens 10 Gew.-%. Man kann auch Überschüsse an Lösemittel, bezogen auf die Masse an eingesetzten umzusetzenden Ausgangsmaterialien, einsetzen, beispielsweise das 1,01- bis 10-fache. Lösemittel-Mengen von mehr als dem 100-fachen, bezogen auf die Masse an eingesetzten umzusetzenden Ausgangsmaterialien, sind nicht vorteilhaft, weil bei deutlich niedrigeren Konzentrationen der Reaktionspartner die Reaktionsgeschwindigkeit deutlich nachlässt, was zu unwirtschaftlich langen Umsetzungsdauern führt.

Zur Durchführung des Verfahrens kann man in Gegenwart eines Wasser entziehenden Mittels als Additiv arbeiten, das man zu Beginn der Reaktion zusetzt. Geeignet sind beispielsweise Molekularsiebe, insbesondere Molekularsieb 4Ä, MgS0₄ und Na₂SO₄. Man kann auch während der Reaktion weiteres Wasser entziehendes Mittel zufügen oder Wasser entziehendes Mittel durch frisches Wasser entziehendes Mittel ersetzen. Man kann auch während der Reaktion gebildetes Wasser bzw. Alkohol abdestillieren und beispielsweise einen Wasserabscheider einsetzen.

Man kann das Verfahren in Abwesenheit von sauren Katalysatoren durchführen. Vorzugsweise arbeitet man in Gegenwart eines sauren anorganischen, metallorganischen oder organischen Katalysators oder Gemischen aus mehreren sauren anorganischen, metallorganischen oder organischen Katalysatoren.

Als saure anorganische Katalysatoren im Sinne der vorliegenden Erfindung sind beispielsweise Schwefelsäure, Phosphorsäure, Phosphonsäure, hypophosphorige Säure, Aluminiumsulfathydrat, Alaun, saures Kieselgel (pH = 6, insbesondere = 5) und saures Aluminiumoxid zu nennen. Weiterhin sind beispielsweise Aluminiumverbindungen der allgemeinen Formel Al(OR)₃ und Titanate der allgemeinen Formel Ti(OR)₄ als saure anorganische Katalysatoren einsetzbar, wobei die Reste R jeweils gleich oder verschieden sein können und unabhängig voneinander gewählt sind aus

Bevorzugt sind die Reste R in Al(OR)₃ bzw. Ti(OR)₄ jeweils gleich und gewählt aus Isopropyl oder 2-Ethylhexyl.

Bevorzugte saure metallorganische Katalysatoren sind beispielsweise gewählt aus Dialkylzinnoxiden R₂SnO, wobei R wie oben stehend definiert ist. Ein besonders bevorzugter Vertreter für saure metallorganische Katalysatoren ist Di-n-butylzinnoxid, das als so genanntes Oxo-Zinn kommerziell erhältlich ist, oder Di-n-butylzinndilaurat.

Bevorzugte saure organische Katalysatoren sind saure organische Verbindungen mit beispielsweise Phosphatgruppen, Sulfonsäuregruppen, Sulfatgruppen oder Phosphonsäuregruppen. Besonders bevorzugt sind Sulfonsäuren wie beispielsweise para-Toluolsulfonsäure. Man kann auch saure Ionentauscher als saure organische Katalysatoren einsetzen, beispielsweise Sulfonsäuregruppen-haltige Polystyrolharze, die mit etwa 2 mol-% Divinylbenzol vernetzt sind.

Man kann auch Kombinationen von zwei oder mehreren der vorgenannten Katalysatoren einsetzen. Auch ist es möglich, solche organische oder metallorganische oder auch anorganische Katalysatoren, die in Form diskreter Moleküle vorliegen, in immobilisierter Form einzusetzen.

Wünscht man saure anorganische, metallorganische oder organische Katalysatoren einzusetzen, so setzt man erfindungsgemäß 0,1 bis 10 Gew.-%, bevorzugt 0,2 bis 2 Gew.-% Katalysator ein.

Das Verfahren zur Herstellung der hyperverzweigten Polyester wird unter Inertgasatmosphäre durchgeführt, das heißt beispielsweise unter Kohlendioxid, Stickstoff oder Edelgas, unter denen insbesondere Argon zu nennen ist.

Das Verfahren zur Herstellung der hyperverzweigten Polyester wird bei Temperaturen von 60 bis 200 °C durchgeführt. Vorzugsweise arbeitet man bei Temperaturen von 130 bis 180 °C, insbesondere bis 150 °C oder darunter. Besonders bevorzugt sind maximale Temperaturen bis 145 °C, ganz besonders bevorzugt bis 135 °C.

Man kann bei deutlich verringertem Druck arbeiten, beispielsweise bei 10 bis 500 mbar. Das Verfahren zur Herstellung der hyperverzweigten Polyester kann auch bei Drücken oberhalb von 500 mbar durchgeführt werden. Bevorzugt ist aus Gründen der Einfachheit die Umsetzung bei Atmosphärendruck; möglich ist aber auch eine Durchführung bei leicht erhöhtem Druck, beispielsweise bis 1200 mbar. Man kann auch unter deutlich erhöhtem Druck arbeiten, beispielsweise bei Drücken bis 10 bar. Bevorzugt ist die Umsetzung bei Atmosphärendruck.

Die Umsetzungsdauer des erfindungsgemäßen Verfahrens beträgt üblicherweise 10 Minuten bis 24 Stunden, bevorzugt 30 Minuten bis 18 Stunden, besonders bevorzugt 1 bis 16 Stunden, und insbesondere bevorzugt 4 bis 12 Stunden.

Nach beendeter Reaktion zur Herstellung der hyperverzweigten Polyester lassen sich die hyperverzweigten Polyester leicht isolieren, beispielsweise durch Abfiltrieren des Katalysators und Einengen, wobei man das Einengen üblicherweise bei vermindertem Druck durchführt. Weitere gut geeignete Aufarbeitungsmethoden sind Ausfällen nach Zugabe von Wasser oder einem anderen Lösemittel, in dem sich der hyperverzweigte Polyester nicht löst, und anschließendes Waschen und Trocknen.

Sofern die Herstellung des hyperverzweigten Polyesters ohne Zusatz von Lösemittel und unter Zugabe von nur geringen Katalysatormengen erfolgt ist, liegt das Reaktionsprodukt nach beendeter Reaktion bereits als isolierter hyperverzweigter Polyester vor und kann in der Regel ohne weitere Reinigungsschritte verwendet werden.

Weiterhin kann der hyperverzweigten Polyester in Gegenwart von Enzymen oder Zersetzungsprodukten von Enzymen gemäß DE-A 101 63163 hergestellt werden.

Der hydrophob hyperverzweigte Polyester wird im Allgemeinen in Mengen von 0,2 bis 40 Gew.-%, bevorzugt 1 bis 30 Gew.-%, besonders bevorzugt 3 bis 20 Gew.-%, bezogen auf die Summe aus höhermolekularer Verbindung b) und hydrophobem hyperverzweigtem Polyester eingesetzt. In der Regel ist bereits eine Menge von 3 Gew.-% hydrophobem hyperverzweigtem Polyester ausreichend, um die gewünschte Offenzelligkeit und Grobzelligkeit hervorzurufen und damit die sehr gute Weiterreißfestigkeit der Polyurethanschäume bereitzustellen.

In einer fünften Ausführungsform werden als höhermolekulare Verbindung b) eine Mischung aus Polyesterpolyol und einem hydrophoben, hyperverzweigten Polycarbonat eingesetzt. Ein erfindungsgemäßes hyperverzweigtes Polycarbonat ist erhältlich durch Umsetzung mindestens eines Kohlensäureesters(A₂) oder von Derivaten desselben mit
l) mindestens einem mindestens dreiwertigen Alkohol (B₃), oder
m) mit mindestens einem zweiwertigen Alkohol (B₂) und mindestens einem x-wertigen Alkohol (Cₓ), der mehr als zwei OH-Gruppen aufweist, wobei x eine Zahl größer 2 ist, wobei die Gesamtmischung der eingesetzten Alkohole eine mittlere Funktionalität von 2,1 bis 10 aufweist,
wobei
n) bis zu 50 Mol-%, bevorzugt bis zu 40 Mol-%, besonders bevorzugt bis zu 30 Mol-%, und insbesondere bevorzugt bis zu 20 Mol-% bezogen auf die gemäß a) und b) umgesetzten Alkohole B₃, B₂ und/oder Cₓ, eines hydrophoben langkettigen monofunktionellen Alkohols E₁ mit mindestens 8 C-Atomen mit umgesetzt werden können, und
o) optional anschließender Umsetzung mit einer langkettigen hydrophoben OH-reaktiven Verbindung F, wie einer Monocarbonsäure oder einem Monoisocyanat, mit mindestens 8 C-Atomen,
p) optional anschließender Umsetzung mit Propylenoxid und/oder Butylenoxid,
wobei eine oder mehrere der nachstehenden Bedingungen erfüllt sind:
l) der Alkohol B₃ bzw. B₂ und/oder Cₓ ist ein hydrophobes Alkoxylat auf Basis von Propylenoxid, Butylenoxid oder Styroloxid mit im Mittel mindestens 1 und höchstens 100 Oxyalkylen-Einheiten pro Startermolekül, und einem difunktionellen (für B₂), trifunktionellen (für B₃) oder x-funktionellen (für Cₓ) Startermolekül;
II) die Alkohole B₃ bzw. B₂ und/oder Cₓ enthalten mindestens 20 Mol-%, bevorzugt mindestens 30 Mol-%, besonders bevorzugt mindestens 40 Mol-%, und ganz besonders bevorzugt mindestens 50 Mol-% eines langkettigen Diols bzw. Polyols mit mindestens 8 C-Atomen;
III) mindestens 10 Mol-% und höchstens 90 Mol-%, bevorzugt höchstens 70 Mol-%, besonders bevorzugt höchstens 50 Mol-%, und insbesondere bevorzugt höchstens 30 Mol-% bezogen auf die gemäß I) und m) umgesetzten Alkohole B₃, B₂ und/oder Cₓ eines langkettigen Monoalkohols mit mindestens 8 C-Atomen werden mit umgesetzt;
IV) es wird anschließend mit 10 bis 100 Mol-%, bevorzugt 10 bis 80 Mol-%, besonders bevorzugt 20 bis 80 Mol-%, insbesondere bevorzugt 20 bis 60 Mol-% bezogen auf die mittlere Anzahl der OH-Gruppen des hyperverzweigten Polycarbonats, der langkettigen hydrophoben OH-reaktiven Verbindung F mit mindestens 8 C-Atomen umgesetzt;
V) es wird anschließend mit, pro Äquivalent OH-Gruppen des hyperverzweigten Polycarbonats, 1 bis 60, bevorzugt mit 2 bis 50, besonders bevorzugt mit 3 bis 40 und insbesondere bevorzugt mit 3 bis 30 Äquivalenten Propylenoxid, Butylenoxid oder Propylenoxid und Butylenoxid umgesetzt.

Unter einem Polycarbonat des Typs AₓB_{y} versteht man ein Kondensat der Moleküle A und B, wobei die Moleküle A funktionelle Gruppen funkt1) und die Moleküle B funktionelle Gruppen funkt2) aufweisen, die in der Lage sind, miteinander zu kondensieren. Dabei ist die Funktionalität der Moleküle A gleich x und die Funktionalität der Moleküle B gleich y. Beispielsweise sei ein Polycarbonat aus Diethylcarbonat als Molekül A (funkt1 = COOEt, x = 2) und propoxyliertem Glycerin als Molekül B (funkt2 = OH; y = 3) genannt. Hyperverzweigte Polycarbonate sind beispielsweise in der WO 2005/026234 beschrieben.

Selbstverständlich können als Einheiten A bzw. B auch Mischungen von verschiedenen Molekülen A mit gleicher funktioneller Gruppe und gleichen und/oder unterschiedlichen Funktionalitäten und verschiedenen Molekülen B mit gleicher funktioneller Gruppe und gleichen und/oder unterschiedlichen Funktionalitäten eingesetzt werden. Die Funktionalitäten x und y der Mischung ergeben sich dann durch Mittelung.

Geeignete hyperverzweigte Polycarbonate können beispielsweise hergestellt werden durch
1.) Umsetzung mindestens eines organischen Carbonats der allgemeinen Formel R^{a}OC(=O)OR^{b} mit mindestens einem aliphatischen Alkohol (B₃ oder Cₓ), welcher mindestens 3 OH-Gruppen aufweist, unter Eliminierung von Alkoholen RₐOH bzw. R^{b}OH zu einem oder mehreren Kondensationsprodukten (K), wobei R^{a} und R^{b} jeweils unabhängig voreinander ausgewählt sind unter geradkettigen oder verzweigten Alkyl-, Arylalkyl-, Cycloalkyl- und Arylresten, wobei R^{a} und R^{b} auch gemeinsam mit der Gruppe -OC(=O)O-, an die sie gebunden sind, für ein cyclisches Carbonat stehen können, oder
2.) Umsetzung von Phosgen, Diphosgen oder Triphosgen mit dem unter 1.) genannten Alkohol (B₃ oder Cₓ) zum Kondensationsprodukt K unter Chlorwasserstoffeliminierung sowie
3.) intermolekulare Umsetzung der Kondensationsprodukte (K) zu einem hochfunktionellen, hyperverzweigten Polycarbonat,
wobei das Mengenverhältnis der OH-Gruppen zu den Carbonaten im Reaktionsgemisch so gewählt wird, dass die Kondensationsprodukte (K) im Mittel entweder eine Carbonatgruppe und mehr als eine OH-Gruppe oder eine OH-Gruppe und mehr als eine Carbonatgruppe aufweisen.

Die Reste R^{a} und R^{b} können gleich oder verschieden sein. In einer speziellen Ausführung sind R^{a} und R^{b} gleich. Vorzugsweise sind R^{a} und R^{b} ausgewählt aus C₁-C₂₀-Alkyl, C₅-C₇-Cycloalkyl, C₆-C₁₀-Aryl und C₆-C₁₀-Aryl-C₁-C₂₀-alkyl, wie eingangs definiert. R^{a} und R^{b} können auch gemeinsam für C₂-C₆-Alkylen stehen. Besonders bevorzugt sind R^{a} und R^{b} ausgewählt aus geradkettigem und verzweigtem C₁-C₅-Alkyl, wie in der WO 2005/026234 beschrieben.

Dialkyl- oder Diarylcarbonate können z. B. hergestellt werden durch Reaktion von α-liphatischen, araliphatischen oder aromatischen Alkoholen, vorzugsweise Monoalkoholen, mit Phosgen. Weiterhin können sie auch durch oxidative Carbonylierung der Alkohole oder Phenole mittels CO in Gegenwart von Edelmetallen, Sauerstoff oder NOₓ hergestellt werden. Die Herstellung von Diaryl- oder Dialkylcarbonaten ist auch in "Ullmann's Encyclopedia of Industrial Chemistry", 6th Edition, 2000 Electronic Release, Verlag Wiley-VCH, beschrieben.

Beispiele geeigneter Carbonate umfassen aliphatische oder aromatische Carbonate wie Ethylencarbonat, 1,2- oder 1,3-Propylencarbonat, Diphenylcarbonat, Ditolylcarbonat, Dixylylcarbonat, Dinaphthylcarbonat, Ethylphenylcarbonat, Dibenzylcarbonat, Dimethylcarbonat, Diethylcarbonat, Dipropylcarbonat, Dibutylcarbonat, Diisobutylcarbonat, Dipentylcarbonat, Dihexylcarbonat, Dicyclohexylcarbonat, Diheptylcarbonat, Dioctylcarbonat, Didecylacarbonat und Didodecylcarbonat.

Bevorzugt werden aliphatische Carbonate eingesetzt, insbesondere solche, bei denen die Reste 1 bis 5 C-Atome umfassen, wie z. B. Dimethylcarbonat, Diethylcarbonat, Dipropylcarbonat, Dibutylcarbonat oder Diisobutylcarbonat.

Die organischen Carbonate werden mit mindestens einem aliphatischen Alkohol (B₃ oder Cₓ), welcher mindestens drei OH-Gruppen aufweist, oder einem Gemisch aus zwei oder mehr dieser Alkohole umgesetzt.

Mindestens trifunktionelle Alkohole (B₃ bzw. Cₓ) sind bereits unter der vierten Ausführungsform definiert und können wie oben definiert eingesetzt werden.

Diese mehrfunktionellen Alkohole können auch im Gemisch mit difunktionellen Alkoholen (B₂) eingesetzt werden mit der Maßgabe, dass die mittlere OH-Funktionalität aller eingesetzten Alkohole zusammen größer als 2 ist. Die difunktionellen Alkohole (B2) sind ebenfalls bereits definiert und können wie oben definiert eingesetzt werden.

Die Reaktion des Carbonats mit dem Alkohol oder Alkoholgemisch zum hyperverzweigten Polycarbonat gemäß 1.) erfolgt unter Eliminierung des monofunktionellen Alkohols oder Phenols aus dem Carbonat-Molekül.

Die Reaktion des Phosgens oder Phosgenderivats mit dem Alkohol oder Alkoholgemisch zum hyperverzweigten Polycarbonat gemäß 2.) erfolgt unter Eliminierung von Chlorwasserstoff.

Die gebildeten hyperverzweigten Polycarbonate sind nach der Reaktion, also ohne weitere Modifikation, mit Hydroxylgruppen und/oder mit Carbonatgruppen terminiert.

Unter einem hyperverzweigten Polycarbonat ist ein Produkt zu verstehen, das neben den Carbonatgruppen, die das Polymergerüst bilden, end- oder seitenständig weiterhin mindestens vier, bevorzugt mindestens acht funktionelle Gruppen aufweist. Bei den funktionellen Gruppen handelt es sich um Carbonatgruppen und/oder um OH-Gruppen. Die Anzahl der end- oder seitenständigen funktionellen Gruppen ist prinzipiell nach oben nicht beschränkt, jedoch können Produkte mit sehr hoher Anzahl funktioneller Gruppen unerwünschte Eigenschaften, wie beispielsweise hohe Viskosität oder schlechte Löslichkeit, aufweisen. Die hochfunktionellen Polycarbonate der vorliegenden Erfindung weisen zumeist nicht mehr als 500 end- oder seitenständige funktionelle Gruppen, bevorzugt nicht mehr als 200, insbesondere nicht mehr als 100 end- oder seitenständige funktionelle Gruppen auf.

Bei der Herstellung der hyperverzweigten Polycarbonate ist es notwendig, das Verhältnis von den OH-Gruppen enthaltenden Verbindungen zu dem Carbonat so einzustellen, dass das resultierende einfachste Kondensationsprodukt (im weiteren Kondensationsprodukt (K) genannt) im Mittel entweder eine Carbonatgruppe und mehr als eine OH-Gruppe oder eine OH-Gruppe und mehr als eine Carbonatgruppe enthält. Die einfachste Struktur des Kondensationsproduktes (K) aus einem Carbonat (A) und einem Di- oder Polyalkohol (B) ergibt dabei die Anordnung XYₙ oder YXₙ, wobei X eine Carbonatgruppe, Y eine Hydroxylgruppe und n in der Regel eine Zahl zwischen 1 und 6, vorzugsweise zwischen 1 und 4, besonders bevorzugt zwischen 1 und 3 darstellt. Die reaktive Gruppe, die dabei als einzelne Gruppe resultiert, wird im Folgenden "fokale Gruppe" genannt.

Liegt beispielsweise bei der Herstellung des einfachsten Kondensationsproduktes (K) aus einem Carbonat und einem zweiwertigen Alkohol das Umsetzungsverhältnis bei 1 : 1, so resultiert im Mittel ein Molekül des Typs XY, veranschaulicht durch die allgemeine Formel 1.

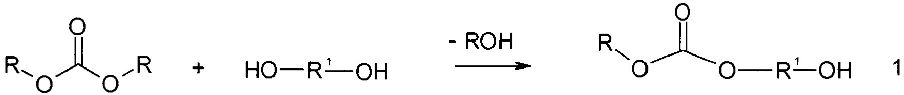

Bei der Herstellung des Kondensationsproduktes (K) aus einem Carbonat und einem dreiwertigen Alkohol bei einem Umsetzungsverhältnis von 1 : 1 resultiert im Mittel ein Molekül des Typs XY₂, veranschaulicht durch die allgemeine Formel 2. Fokale Gruppe ist hier eine Carbonatgruppe.

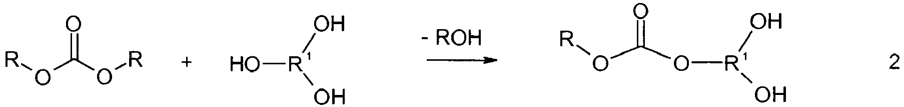

Bei der Herstellung des Kondensationsproduktes (K) aus einem Carbonat und einem vierwertigen Alkohol ebenfalls mit dem Umsetzungsverhältnis 1 : 1 resultiert im Mittel ein Molekül des Typs XY₃, veranschaulicht durch die allgemeine Formel 3. Fokale Gruppe ist hier eine Carbonatgruppe.

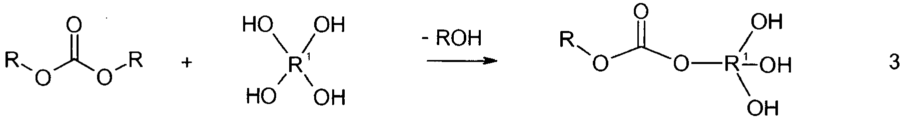

In den Formeln 1 bis 3 hat R die eingangs für R^{a} und R^{b} definierten Bedeutungen und R¹ steht für einen mehrvalenten aliphatischen Rest.

Weiterhin kann die Herstellung des Kondensationsprodukts (K) z. B. auch aus einem Carbonat und einem dreiwertigen Alkohol, veranschaulicht durch die allgemeine Formel 4, erfolgen, wobei das molare Umsetzungsverhältnis bei 2 : 1 liegt. Hier resultiert im Mittel ein Molekül des Typs X₂Y, fokale Gruppe ist hier eine OH-Gruppe. In der Formel 4 haben R und R¹ die gleiche Bedeutung wie in den Formeln 1 bis 3. 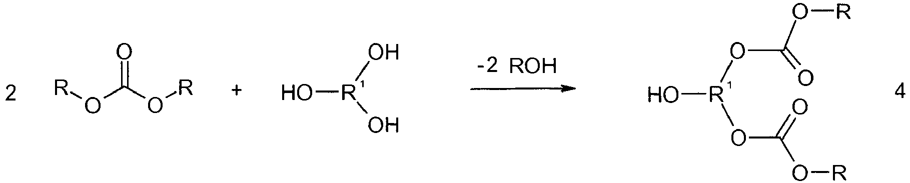 Werden zu den Komponenten zusätzlich difunktionelle Verbindungen, z. B. ein Dicarbonat oder ein Diol gegeben, so bewirkt dies eine Verlängerung der Ketten, wie beispielsweise in der allgemeinen Formel 5 veranschaulicht. Es resultiert wieder im Mittel ein Molekül des Typs XY₂, fokale Gruppe ist eine Carbonatgruppe.

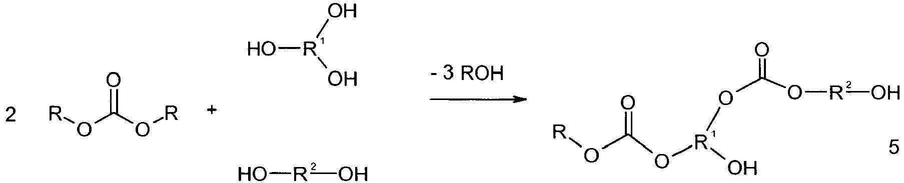

In Formel 5 bedeutet R² einen bivalenten organischen, bevorzugt aliphatischen Rest, R und R¹ sind wie vorstehend beschrieben definiert.

Die beispielhaft in den Formeln 1 bis 5 beschriebenen einfachen Kondensationsprodukte (K) reagieren bevorzugt intermolekular unter Bildung von hochfunktionellen Polykondensationsprodukten, im Folgenden Polykondensationsprodukte (P) genannt. Die Umsetzung zum Kondensationsprodukt (K) und zum Polykondensationsprodukt (P) erfolgt üblicherweise bei einer Temperatur von 0 bis 250 °C, bevorzugt bei 60 bis 160 °C in Substanz oder in Lösung. Dabei können allgemein alle Lösungsmittel verwendet werden, die gegenüber den jeweiligen Edukten inert sind. Bevorzugt verwendet werden organische Lösungsmittel, wie z. B. Decan, Dodecan, Benzol, Toluol, Chlorbenzol, Xylol, Dimethylformamid, Dimethylacetamid oder Solvent Naphtha.

Die Menge an zugesetztem Lösemittel beträgt, sofern nicht gänzlich lösemittelfrei verfahren wird, erfindungsgemäß mindestens 0,1 Gew.-%, bezogen auf die Masse der eingesetzten umzusetzenden Ausgangsmaterialien, bevorzugt mindestens 1 Gew.-% und besonders bevorzugt mindestens 10 Gew.-%. Man kann auch Überschüsse an Lösemittel, bezogen auf die Masse an eingesetzten umzusetzenden Ausgangsmaterialien, einsetzen, beispielsweise das 1,01- bis 10-fache. Lösemittel-Mengen von mehr als dem 100-fachen, bezogen auf die Masse an eingesetzten umzusetzenden Ausgangsmaterialien, sind nicht vorteilhaft, weil bei deutlich niedrigeren Konzentrationen der Reaktionspartner die Reaktionsgeschwindigkeit deutlich nachlässt, was zu unwirtschaftlich langen Umsetzungsdauern führt.

In einer bevorzugten Ausführungsform wird die Kondensationsreaktion in Substanz durchgeführt. Der bei der Reaktion freiwerdende monofunktionelle Alkohol ROH oder das Phenol, kann zur Beschleunigung der Reaktion destillativ, gegebenenfalls bei vermindertem Druck, aus dem Reaktionsgleichgewicht entfernt werden.

Falls Abdestillieren vorgesehen ist, ist es empfehlenswert, solche Carbonate einzusetzen, welche bei der Umsetzung Alkohole ROH mit einem Siedepunkt von weniger als 140 °C freisetzen.

Zur Beschleunigung der Reaktion können auch Katalysatoren oder Katalysatorgemische zugegeben werden. Geeignete Katalysatoren sind Verbindungen, die Veresterungs- oder Umesterungsreaktionen katalysieren, z. B. Alkalihydroxide, Alkalicarbonate, Alkalihydrogencarbonate, vorzugsweise des Natriums, Kaliums oder Cäsiums, tertiäre Amine, Guanidine, Ammoniumverbindungen, Phosphoniumverbindungen, Aluminium-, Zinn-, Zink, Titan-, Zirkon- oder Wismut-organische Verbindungen, weiterhin so genannte Doppelmetallcyanid (DMC)-Katalysatoren, wie z. B. in der DE 10138216 oder in der DE 10147712 beschrieben.

Vorzugsweise werden Kaliumhydroxid, Kaliumcarbonat, Kaliumhydrogencarbonat, Diazabicyclooctan (DABCO), Diazabicyclononen (DBN), Diazabicycloundecen (DBU), Imidazole, wie Imidazol, 1-Methylimidazol oder 1,2-Dimethylimidazol, Titantetrabutylat, Titantetraisopropylat, Dibutylzinnoxid, Dibutylzinndilaurat, Zinndioctoat, Zirkonacetylacetonat oder Gemische davon eingesetzt.

Die Zugabe des Katalysators erfolgt im Allgemeinen in einer Menge von 50 bis 10 000, bevorzugt von 100 bis 5000 Gew. ppm bezogen auf die Menge des eingesetzten Alkohols oder Alkoholgemisches.

Ferner ist es auch möglich, sowohl durch Zugabe des geeigneten Katalysators, als auch durch Wahl einer geeigneten Temperatur die intermolekulare Polykondensationsreaktion zu steuern. Weiterhin lässt sich über die Zusammensetzung der Ausgangskomponenten und über die Verweilzeit das mittlere Molekulargewicht des Polymeren (P) einstellen.

Die Kondensationsprodukte (K) bzw. die Polykondensationsprodukte (P), die bei erhöhter Temperatur hergestellt wurden, sind bei Raumtemperatur üblicherweise über einen längeren Zeitraum stabil.

Aufgrund der Beschaffenheit der Kondensationsprodukte (K) ist es möglich, dass aus der Kondensationsreaktion Polykondensationsprodukte (P) mit unterschiedlichen Strukturen resultieren können, die Verzweigungen, aber keine Vernetzungen aufweisen. Ferner weisen die Polykondensationsprodukte (P) im Idealfall entweder eine Carbonatgruppe als fokale Gruppe und mehr als zwei OH-Gruppen oder aber eine OH-Gruppe als fokale Gruppe und mehr als zwei Carbonatgruppen auf. Die Anzahl der reaktiven Gruppen ergibt sich dabei aus der Beschaffenheit der eingesetzten Kondensationsprodukte (K) und dem Polykondensationsgrad.

Beispielsweise kann ein Kondensationsprodukt (K) gemäß der allgemeinen Formel 2 durch dreifache intermolekulare Kondensation zu zwei verschiedenen Polykondensationsprodukten (P), die in den allgemeinen Formeln 6 und 7 wiedergegeben werden, reagieren.

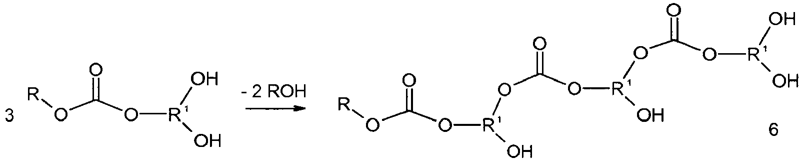

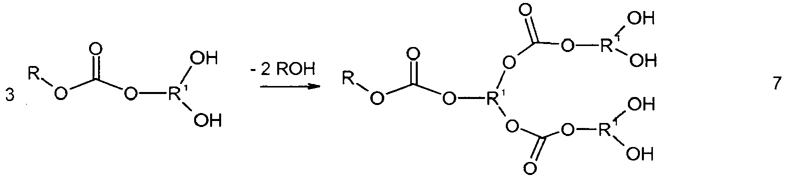

In Formel 6 und 7 sind R und R¹ wie vorstehend definiert.

Man kann bei deutlich verringertem Druck arbeiten, beispielsweise bei 10 bis 500 mbar. Das Verfahren zur Herstellung des hyperverzweigten Polycarbonats kann auch bei Drücken oberhalb von 500 mbar durchgeführt werden. Bevorzugt ist aus Gründen der Einfachheit die Umsetzung bei Atmosphärendruck; möglich ist aber auch eine Durchführung bei leicht erhöhtem Druck, beispielsweise bis 1200 mbar. Man kann auch unter deutlich erhöhtem Druck arbeiten, beispielsweise bei Drücken bis 10 bar. Bevorzugt ist die Umsetzung bei Atmosphärendruck.

Die Umsetzungsdauer des erfindungsgemäßen Verfahrens beträgt üblicherweise 10 Minuten bis 24 Stunden, bevorzugt 30 Minuten bis 18 Stunden, besonders bevorzugt 1 bis 16 Stunden, und insbesondere bevorzugt 4 bis 12 Stunden.

Zum Abbruch der intermolekularen Polykondensationsreaktion gibt es verschiedene Möglichkeiten. Beispielsweise kann die Temperatur auf einen Bereich abgesenkt werden, in dem die Reaktion zum Stillstand kommt und das Produkt (K) oder das Polykondensationsprodukt (P) lagerstabil ist.

In einer weiteren Ausführungsform kann, sobald aufgrund der intermolekularen Reaktion des Kondensationsproduktes (K) ein Polykondensationsprodukt (P) mit gewünschten Polykondensationsgrad vorliegt, dem Produkt (P) zum Abbruch der Reaktion ein Produkt mit gegenüber der fokalen Gruppe von (P) reaktiven Gruppen zugesetzt werden. So kann bei einer Carbonatgruppe als fokaler Gruppe z. B. ein Mono-, Di- oder Polyamin zugegeben werden. Bei einer Hydroxylgruppe als fokaler Gruppe kann dem Produkt (P) beispielsweise ein Mono-, Di- oder Polyisocyanat, eine Epoxidgruppen enthaltende Verbindung oder ein mit OH-Gruppen reaktives Säurederivat zugegeben werden.

Die Herstellung der hyperverzweigten Polycarbonate erfolgt zumeist in einem Druckbereich von 0,1 mbar bis 20 bar, bevorzugt bei 1 mbar bis 5 bar, in Reaktoren oder Reaktorkaskaden, die im Batchbetrieb, halbkontinuierlich oder kontinuierlich betrieben werden.

Durch die vorgenannte Einstellung der Reaktionsbedingungen und gegebenenfalls durch die Wahl des geeigneten Lösemittels können die Produkte nach der Herstellung ohne weitere Reinigung weiterverarbeitet werden.

In einer weiteren bevorzugten Ausführungsform können die Polycarbonate neben den bereits durch die Reaktion erhaltenden funktionellen Gruppen weitere funktionelle Gruppen erhalten. Die Funktionalisierung kann dabei während des Molekulargewichtsaufbaus oder auch nachträglich, d. h. nach Beendigung der eigentlichen Polykondensation erfolgen.

Eine nachträgliche Funktionalisierung kann man erhalten, indem das erhaltene hochfunktionelle, hyperverzweigte Polycarbonat mit einem geeigneten Funktionalisierungsreagenz, welches mit den OH- und/oder Carbonatgruppen des Polycarbonates reagieren kann, umsetzt.

Hydroxylgruppen enthaltende hochfunktionelle, hyperverzweigte Polycarbonate können z. B. durch Zugabe von Säuregruppen- oder Isocyanatgruppen enthaltenden Molekülen F modifiziert werden. Beispielsweise lassen sich Polycarbonate durch Umsetzung mit Moncarbonsäuren oder Monoisocyanaten hydrophob modifizieren.

Geeignete hydrophobe langkettige aliphatische Carbonsäuren sind beispielsweise Octansäure, Decansäure, Dodecansäure, Tetradecansäure und Fettsäuren, wie Stearinsäure, Ölsäure, Laurinsäure, Palmitinsäure, Linolsäure und Linolensäure.

Weiterhin können Hydroxylgruppen enthaltende hochfunktionelle Polycarbonate auch durch Umsetzung mit Propylenoxid und/oder Butylenoxid zu hydrophoben hyperverzweigten Polycarbonat-Polyetherpolyole umgesetzt werden.

Ein großer Vorteil des Verfahrens zur Herstellung hyperverzweigter Polycarbonate liegt in seiner Wirtschaftlichkeit. Sowohl die Umsetzung zu einem Kondensationsprodukt (K) oder Polykondensationsprodukt (P) als auch die Reaktion von (K) oder (P) zu Polycarbonaten mit anderen funktionellen Gruppen oder Elementen kann in einer Reaktionsvorrichtung erfolgen, was technisch und wirtschaftlich vorteilhaft ist.

Hyperverzweigte Polycarbonate im Sinne der vorliegenden Erfindung sind molekular und strukturell uneinheitlich. Sie unterscheiden sich durch ihre molekulare Uneinheitlichkeit von Dendrimeren und sind daher mit erheblich geringerem Aufwand herzustellen.

In einer Ausführungsform I) der Erfindung ist der Alkohol B₃ bzw. B₂ und/oder Cₓ ein hydrophobes Alkoxylat auf Basis von Propylenoxid oder Butylenoxid mit im Mittel mindestens 1 und höchstens 100 Oxyalkylen-Einheiten pro Startermolekül, bevorzugt höchstens 50 Oxyalkylen-Einheiten pro Startermolekül. Bevorzugte Alkohole B₃ bzw. B₂ und/oder Cₓ sind die Propoxylate von Monoethylenglykol, Diethylenglykol, Propylenglykol, Dipropylenglykol, Tripropylenglykol, Glycerin, Trimethylolpropan, Pentaerythrit, Sorbitol, Saccharose, die im Mittel 1 bis 30 Oxypropylen-Einheiten pro OH-Gruppe aufweisen, insbesondere 1 bis 20 Oxypropylen-Einheiten pro OH-Gruppe aufweisen.

In einer weiteren Ausführungsform II) der Erfindung enthalten die Alkohole B₃ bzw. B₂ und/oder Cₓ mindestens 20 Mol-%, bevorzugt mindestens 30 Mol-%, insbesondere 40 Mol-% und ganz insbesondere mindestens 50 Mol-% eines langkettigen Diols bzw. Polyols mit mindestens 8 C-Atomen, bevorzugt mit mindestens 10 C-Atomen, besonders bevorzugt mit mindestens 12 C-Atomen. Besonders bevorzugte Diole bzw. Polyole mit mindestens 8 C-Atomen sind Isomere des Octandiols, des Nonandiols, des Decandiols, des Dodecandiols, des Tetradecandiols, des Hexadecandiols, des Octadecandiols, des Dimethyolcyclohexans und des Dimethylolbenzols.

In einer weiteren Ausführungsform III) der Erfindung werden mindestens 10 Mol-% und höchstens 90 Mol-%, bevorzugt höchstens 70 Mol-%, besonders bevorzugt höchstens 50 Mol-%, und insbesondere bevorzugt höchstens 30 Mol-% bezogen auf die gemäß a) und b) umgesetzten Alkohole B₃, B₂ und/oder Cₓ eines langkettigen Monoalkohols E₁ mit mindestens 8 C-Atomen, bevorzugt mindestens 10 C-Atomen mit umgesetzt. Bevorzugte langkettige Monoalkohole sind Octanol, Decanol, Dodecanol, Tetradecanol, C16-Alkohole und C18-Alkohole.

In einer weiteren Ausführungsform IV) der Erfindung wird das aus den Komponenten a) und b) erhaltene Umsetzungsprodukt anschließend mit 10 bis 100 Mol-%, bevorzugt 20 bis 100 Mol-%, besonders bevorzugt 20 bis 80 Mol-%, insbesondere bevorzugt 20 bis 60 Mol-% bezogen auf die mittlere Anzahl der OH-Gruppen des hyperverzweigten Polycarbonats, einer langkettigen hydrophoben OH-reaktiven Verbindung F, wie eine Monocarbonsäure oder ein Monoisocyanat, mit mindestens 8 C-Atomen, bevorzugt mindestens 10 C-Atomen, insbesondere mit mindestens 12 C-Atomen umgesetzt. Bevorzugte langkettige Monocarbonsäuren F sind Octansäure, Decansäure, Dodecansäure, Tetradecansäure und Fettsäuren, wie Stearinsäure und Ölsäure. Bevorzugte langkettige Monoisocyanate F sind Octanisocyanat, Decanisocyanat, Dodecanisocyanat, Tetradecanisocyanat und Monoisocyanate von Fettsäuren, wie Stearylisocyanat und Oleylisocyanat.

Insbesondere bevorzugte hydrophobe hyperverzweigte Polycarbonate werden erhalten, wenn
I) der Alkohol B₃ bzw. B₂ und/oder Cₓ ein hydrophobes Alkoxylat auf Basis von Propylenoxid oder Butylenoxid mit im Mittel 1 bis 15 Oxyalkylen-Einheiten pro OH-Gruppe ist;
oder
I) der Alkohol B₃ bzw. B₂ und/oder Cₓ ein hydrophobes Alkoxylat auf Basis von Propylenoxid oder Butylenoxid mit im Mittel 1 bis 15 Oxyalkylen-Einheiten pro OH-Gruppe ist, und
eine der beiden Komponenten, die Kohlensäureester- oder die Alkohol-Komponente, im Reaktionsgemisch zur Synthese des hyperverzweigten Polycarbonats im molaren Überschuss eingesetzt wird und das molare Verhältnis der (CO)OR-Gruppen in Bezug auf die OH-Gruppen bzw. der Überschuss der OH-Gruppen in Bezug auf die (CO)OR-Gruppen von 1.1 : 1 bis 3 : 1, bevorzugt von 1.3 : 1 bis 2.8 : 1, bevorzugt von 1.5 : 1 bis 2.6 : 1, besonders bevorzugt von 1.7 : 1 bis 2.4 : 1, ganz bevorzugt von 1.8 : 1 bis 2.2 : 1, und insbesondere bevorzugt von 1.9 : 1 bis 2.1 : 1 beträgt,
oder
I) der Alkohol B₃ bzw. B₂ und/oder Cₓ ein hydrophobes Alkoxylat auf Basis von Propylenoxid oder Butylenoxid mit im Mittel 1 bis 15 Oxyalkylen-Einheiten pro OH-Gruppe ist, und
III) mindestens 10 Mol-% und höchstens 90 Mol-%, bevorzugt höchstens 70 Mol-%, besonders bevorzugt höchstens 50 Mol-%, und insbesondere bevorzugt höchstens 30 Mol-%, bezogen auf die gemäß a) und b) umgesetzten Alkohole B₃, B₂ und/oder Cₓ eines langkettigen Monoalkohols E₁ mit mindestens 8 C-Atomen mit umgesetzt werden,
oder
I) der Alkohol B₃ bzw. B₂ und/oder Cₓ ein hydrophobes Alkoxylat auf Basis von Propylenoxid oder Butylenoxid mit im Mittel 1 bis 15 Oxyalkylen-Einheiten pro OH-Gruppe ist, und
IV) anschließend das Umsetzungsprodukt aus a) und b) mit 10 bis 100 Mol-%, bevorzugt 20 bis 100 Mol-%, besonders bevorzugt 20 bis 80 Mol-%, insbesondere bevorzugt 20 bis 60 Mol-% bezogen auf die mittlere Anzahl der OH-Gruppen des hyperverzweigten Polycarbonats, einer langkettigen hydrophoben OH-reaktiven Verbindung F₁ wie einer Monocarbonsäure oder einem Monoisocyanat mit mindestens 8 C-Atomen, umgesetzt wird.

Das erfindungsgemäß eingesetzte hydrophobe hyperverzweigte Polycarbonat weist im Allgemeinen ein zahlenmittleres Molekulargewicht Mₙ von 800 bis 40000, vorzugsweise von 1000 bis 30000 und insbesondere von 1500 bis 20000 g/mol auf, gemessen mit GPC, kalibriert mit Polymethylmethacrylat (PMMA)-Standard.

Es hat sich gezeigt, dass ein gewichtsmittleres Molgewicht M_{w}, gemessen mit GPC, kalibriert mit Polymethylmethacrylat (PMMA) Standard, von 2000 bis 50000, bevorzugt von 3000 bis 40000, besonders bevorzugt von 4000 bis 35000 und insbesondere bevorzugt von 5000 bis 30000 besonders vorteilhaft ist.

Im Allgemeinen weist das erfindungsgemäß eingesetzte hydrophobe hyperverzweigte Polycarbonat eine OH-Zahl von 0 bis 600, vorzugsweise von 0 bis 500, insbesondere von 0 bis 400 mg KOH/g Polycarbonat gemäß DIN 53240 auf.

Weiter haben die erfindungsgemäß eingesetzten hydrophoben hyperverzweigten Polycarbonate im Allgemeinen eine Glasübergangstemperatur (gemessen nach der ASTM Methode D3418 - 03 mit DSC) von -80 bis 100 °C, bevorzugt von -60 bis 60 °C.

Nach beendeter Reaktion zur Herstellung der hyperverzweigten Polycarbonate lassen sich die hyperverzweigten Polycarbonate leicht isolieren, beispielsweise durch Abfiltrieren des Katalysators und Einengen, wobei man das Einengen üblicherweise bei vermindertem Druck durchführt. Weitere gut geeignete Aufarbeitungsmethoden sind Ausfällen nach Zugabe von Wasser oder einem anderen Lösemittel, in dem sich das hyperverzweigte Polycarbonat nicht löst, und anschließendes Waschen und Trocknen.

Sofern die Herstellung des hyperverzweigten Polycarbonats ohne Zusatz von Lösemittel und unter Zugabe von nur geringen Katalysatormengen erfolgt ist, liegt das Reaktionsprodukt nach beendeter Reaktion bereits als isoliertes hyperverzweigtes Polycarbonat vor und kann in der Regel ohne weitere Reinigungsschritte verwendet werden.

Das hydrophob hyperverzweigte Polycarbonat wird im Allgemeinen in Mengen von 0,2 bis 40 Gew.-%, bevorzugt 1 bis 30 Gew.-%, besonders bevorzugt 3 bis 20 Gew.-%, bezogen auf die Summe aus höhermolekularer Verbindung b) und hydrophobem hyperverzweigtem Polycarbonat, eingesetzt. In der Regel ist bereits eine Menge von 3 Gew.-% hydrophobem hyperverzweigtem Polycarbonat ausreichend, um die gewünschte Offenzelligkeit und Grobzelligkeit hervorzurufen und damit die sehr gute Weiterreißfestigkeit der Polyurethanschäume bereitzustellen.

Die Komponenten (a) bis (f) der ersten bis fünften Ausführungsform werden zur Herstellung eines erfindungsgemäßen Polyurethanschaumstoffs jeweils in solchen Mengen miteinander vermischt, dass das Äquivalenzverhältnis von NCO-Gruppen der Polyisocyanate (a) zur Summe der reaktiven Wasserstoffatome der Komponenten (b), (c) und (d) 1 : 0,7 bis 1 : 1,25, vorzugsweise 1 : 0,85 bis 1 : 1,15 beträgt.

Die erfindungsgemäßen Polyurethanschaumstoffe werden vorzugsweise nach dem one-shot-Verfahren mit Hilfe der Niederdruck- oder Hochdrucktechnik hergestellt. Dabei kann die Reaktionsmischung in ein offenes oder geschlossenes, gegebenenfalls temperiertes Formwerkzeug gegeben werden. Die Formwerkzeuge bestehen gewöhnlich aus Metall, z.B. Aluminium oder Stahl oder aus Pappe oder Holz. Diese Verfahrensweisen werden beispielsweise beschrieben von Piechota und Röhr in "Integralschaumstoff", Carl-Hanser-Verlag, München, Wien, 1975, oder im "Kunststoffhandbuch", Band 7, Polyurethane, 3. Auflage, 1993, Kapitel 7. Besonders bevorzugt werden die erfindungsgemäßen Polyurethanschaumstoffe durch freies Schäumen erhalten.

Zur Herstellung von Polyurethanintegralschaumstoffen werden die Ausgangskomponenten (a) bis (f) vorzugsweise bei einer Temperatur von 15 bis 90 °C, besonders bevorzugt von 25 bis 55 °C gemischt und die Reaktionsmischung gegebenenfalls unter erhöhtem Druck in das geschlossene Formwerkzeug eingebracht. Die Vermischung kann mechanisch mittels eines Rührers oder einer Rührschnecke oder unter hohem Druck im sogenannten Gegenstrominjektionsverfahren durchgeführt werden. Die Formwerkzeugtemperatur beträgt zweckmäßigerweise 20 bis 160 °C, vorzugsweise 30 bis 120 °C, besonders bevorzugt 30 bis 60 °C. Dabei wird im Rahmen der Erfindung die Mischung der Komponenten (a) bis (g) bei Reaktionsumsätzen kleiner 90 %, bezogen auf die Isocyanatgruppen, als Reaktionsmischung bezeichnet.

Die Menge der in das Formwerkzeug eingebrachten Reaktionsmischung wird so bemessen, dass die erhaltenen Formkörper aus Schaumstoffen eine Dichte von 70 bis 300 g/dm³, vorzugsweise 80 bis 300, besonders bevorzugt 90 bis 300 und insbesondere von 100 bis 250 g/dm³ aufweisen.

Ein erfindungsgemäßer Polyurethanschaumstoff weist 1 bis 20, vorzugsweise 1 bis 10 Zellen pro cm auf und wird vorzugsweise als Reinigungsschwamm eingesetzt. Dabei zeigt dieser hervorragende mechanische Eigenschaften wie Reißdehnung, Weiterreißfestigkeit, Bruchdehnung und Rückprallelastizität auf. Ein ausreichend gutes Rückprallverhalten ist insbesondere dann erforderlich, wenn das Polyurethanmaterial als Reinigungsschwamm zur Reinigung von Rohren oder anderen Hohlkörpern verwendet werden soll. Dabei sollte das Rückprallverhalten so hoch sein, dass der Schaumstoff zu jeder Zeit den Rohrquerschnitt komplett ausfüllt, selbst wenn der Reinigungsschwamm bei der Bewegung eine Verformung erfährt. Vorzugsweise ist die Rückprallelastizität nach DIN 53573 30 % oder größer, besonders bevorzugt 35% oder größer und insbesondere 40% oder größer. Bevorzugt weist ein erfindungsgemäßer Polyurethanschaumstoff bei einer Dichte von 125 g/L nach 24 Stunden Lagerung eine Zugfestigkeit nach DIN EN ISO 1798 von größer 200 kPa besonders bevorzugt größer 300 kPa und insbesondere größer 400 kPa, eine Bruchdehnung nach DIN EN ISO 1798 von größer 200%, besonders bevorzugt größer 300 %, eine Weiterreißfestigkeit nach ISO 34-1 von größer 1,2 N/mm, besonders bevorzugt von größer 1,8 N/mm und insbesondere von größer 2,5 N/mm und eine Stauchhärte bei 40% kompressibler Verformung nach DIN EN ISO 3386 von kleiner 40%, besonders bevorzugt kleiner 30% auf.

Aufgrund der hervorragenden Eigenschaften ist ein erfindungsgemäßer Polyurethanschaumstoff auch einsetzbar als Rohrreinigungsschwamm, beispielsweise in Betonpumpen, Schankanlagen, Melkanlagen, und Kraftwerken. Weiter kann ein erfindungsgemäßer Polyurethanschaumstoff als Abwasserreinigungselement, Filter, beispielsweise für Aquarien, Flüssigkeitsspeicher, Rolle zum Auftragen von Flüssigkeiten, beispielsweise als Farbrolle, oder als Trägermaterial für Algen bei Wasseraufbereitung eingesetzt werden. Enthält ein erfindungsgemäßer Polyurethanschaumstoff noch eine äußere Haut ist dieser überall dort einsetzbar wo beispielsweise eine hohe Elastizität und gute mechanische Eigenschaften gefordert werden, beispielsweise als Spielball, besonders in Sporthallen, als Schuhsohle, als Lenkrad, als Rad, beispielsweise für Lastkarren, Rollstühle und Kinderspielzeug, wie beispielsweise Rutschautos, oder als Dammtrommeln für Mähdrescher.

Im Folgenden wird die Erfindung im Rahmen von Beispielen verdeutlicht:

### Ausgangsmaterialien

- Polyol 1:: Polyesterpolyol auf Basis von Adipinsäure, Monoethylenglycol und 1,4-Butandiol mit OH Zahl von 56
- Polyol 2:: Glycerin-gestartetes Polyetherpolyol mit OH Zahl von 35 und überwiegend primären OH-Gruppen
- Polyol 3: Polyetherol auf Basis von Sorbitol, Propylenoxid und Ethylenoxyd mit OH-Zahl von 18 und überwiegend primären OH-Gruppen
- Polyol 4: Copolymer aus ungesättigtem Polyetherol, Stearylacrylat und Styrol, dispergiert in Polyol 2
- Polyol 5: hyperverzweigter Polyester
- Polyol 6: hyperverzweigtes Polycarbonat
- Kettenverlängerungsmittel 1:: Monoethylenglycol
- Kettenverlängerungsmittel 2:: 1,4-Butandiol
- Katalysator 1:: Triethylendiamin
- Inhibitor:: Diglycol-bis-Chlorformiat
- Schaumstabilisator:: DC 193^{®} der Firma Dow Corning, silikonbasiert
- Treibmittel:: Wasser
- Isocyanat 1:: Prepolymer (61 Gew.-Teile 4,4' Diisocyanatodiphenylmethan (Rein-MDI), 2 Gew.-Teile uretoniminmodifiziertes Rein-MDI, 33 Gew.-Teilen eines linearen propylenglycol-gestarteten Polyoxypropylenetherols (OHZ 55 mg KOH/mg), 4 Gew.-Teilen Tripropylenglycol
- Isocyanat 2:: Prepolymer (50 Gew.-Teile 4,4' Diisocyanatodiphenylmethan (Rein-MDI), 4 Gew.-Teile uretoniminmodifiziertes Rein-MDI, 29 Gew.-Teilen eines Polyesterpolyol auf Basis von Adipinsäure, Monoethylenglycol und 1,4-Butandiol mit OH Zahl von 56; 10 Gew.-Teilen eines Polyesterpolyol auf Basis von Adipinsäure, Monoethylenglycol, Diethylenglycol und Trimethylolpropan mit OH Zahl von 60 und 7 Gew.-Teile eines zyklischen Esters

### Polyol 4 wird wie folgt erhalten:

Polyol 3 wird mit Isopropenylbenzylisocyanat funktionalisiert. 185,6g des Reaktionsprodukts, 61,9g Stearylacrylat, 123,8g Styrol, 3,7g Dodecanthiol, 191,3g, 371,3g Polyol 2 und 3,7g Azoisobutyronitril werden in einem Dreihalskolben mit Wasserkühlung, Rührer und Temperaturfühler vermischt. Die Reaktionsmischung wird unter Rühren auf 60°C erhitzt und für 24 Stunden gerührt. Die Restmonomere werden bei 135°C reduziertem Druck und Rühren abdestilliert.

### Polyol 5 wird wie folgt erhalten:

1740 g (5,00 mol, M = 348 g/mol) Octadecenylbernsteinsäureanhydrid (Pentasize 8a der Fa. Trigon), 590,7 g (1,37 mol, M = 430 g/mol) eines Polyetherols auf Basis von Trimethylolpropan, das statistisch mit 5 Propylenoxid-Einheiten gepfropft wurde, und 0,2 g Dibutylzinndilaurat wurden in einen 4 L-Glaskolben, ausgestattet mit Rührer, Innenthermometer und absteigendem Kühler mit Vakuumanschluss eingewogen und unter Rühren langsam auf 185 °C erhitzt. Dabei wurde ein Vakuum von 10 mbar langsam angelegt, wobei der Versuch durch die entstehenden Gasblasen etwas aufschäumte. Die Reaktionsmischung wurde 20 h bei 185 °C gerührt, wobei das bei der Reaktion entstehende Wasser abdestillierte. Die Abnahme der Säurezahl wurde regelmäßig kontrolliert bis ein Wert von etwa 108 mg KOH / g erreicht war. Danach wurde das Produkt abgekühlt und analysiert.

### Analytik:

Säurezahl: 108 mg KOH / g
GPC: Mn = 930, Mw = 6100 (Eluent: THF, Kalibrierung: PMMA)

### Polyol 6 wurde wie folgt erhalten:

In einem 2-I-Kolben, der mit Rührer, Innenthermometer und Rückflußkühler versehen war, wurde Diethylcarbonat (144 g, 1,22 mol) mit einem Triol (1149 g, 1,11 mol), das zuvor durch Propoxylierung von Trimethylolpropan mit 15 Propylenoxideinheiten gewonnen wurde, in Gegenwart von Zinn(IV)-dibutyldilaurat (1,0 g) bei Normaldruck unter leichter Stickstoffbegasung bei ca. 140°C miteinander umgesetzt. Hierbei hat sich im Laufe der Reaktion in der Reaktionsmischung stetig Ethanol als Kondensationsnebenprodukt gebildet, so dass sich der Siedepunkt der Reaktionsmischung innerhalb von 12 h bis auf ca. 120 °C absenkte. Anschließend wurde der Rückflusskühler durch eine Destillationsvorrichtung, bestehend aus einer 20 cm Füllkörperkolonne, einem absteigendem Kühler und einer Vorlage, ausgetauscht und das bei der Reaktion gebildete Ethanol kontinuierlich abdestilliert. Nachdem insgesamt etwa 85 g Ethanol entfernt wurden, was einem Gesamtumsatz bezüglich Ethanol von ca. 76 % entspricht, wurde die Reaktionsmischung mit einem Gaseinleitungsrohr versehen und ca. 1 h mit Stickstoff bei 100 °C gestrippt. Hierbei wurden weitere Reste von Ethanol bzw. niedermolekulare Komponenten entfernt. Anschließend wurde das Produkt abgekühlt und analysiert.

Die OH-Zahl wurde zu 85 mg KOH/g bestimmt, die Molgewichte wurden mittels GPC (Eluent = Dimethylacetamid (DMAC), Kalibrierung = PMMA) zu Mₙ = 4200 g/mol, M_{w} = 14500 g/mol bestimmt.

### Die Analyse der Polyole 5 und 6 erfolgte wie folgt:

Die hergestellten Polyole 5 und 6 wurden per Gelpermeationschromatographie mit einem Refraktometer als Detektor analysiert. Als mobile Phase wurde Tetrahydrofuran (THF) oder Dimethylacetamid (DMAc) verwendet, als Standard zur Bestimmung des Molekulargewichts wurde Polymethylmethacrylat (PMMA) eingesetzt. Die Bestimmung der OH-Zahl erfolgte nach DIN 53240, Teil 2.

Die verwendete Polyolkomponente A besteht aus 87,45 Gew.-Teilen Polyol 1, 10,5 Gew.-Teilen Kettenverlängerungsmittel 1, 0,7 Gew.-Teilen Katalysator, 0,15 Gew.-Teilen Schaumstabilisator und 1,2 Gew.-Teilen Treibmittel

Die verwendete Polyolkomponente B besteht aus 90,2 Gew.-Teilen Polyol 1, 7,3 Gew.-Teilen Kettenverlängerungsmittel 1, 0,7 Gew.-Teilen Katalysator, 0,2 Gew.-Teilen Inhibitor, 0,2 Gew.-Teilen Schaumstabilisator und 1,4 Gew.-Teilen Treibmittel

Die verwendete Polyolkomponente C besteht aus 85,7 Gew.-Teilen Polyol 1, 4,5 Gew.-Teilen Polyol 3, 4,4 Gew.-Teilen Kettenverlängerungsmittel 1, 3 Gew.-Teilen Kettenverlängerungsmittel 2, 0,7 Gew.-Teilen Katalysator, 0,2 Gew.-Teilen Inhibitor, 0,1 Gew.-Teilen Schaumstabilisator und 1,4 Gew.-Teilen Treibmittel

Die verwendete Polyolkomponente D besteht aus 82 Gew.-Teilen Polyol 1, 8 Gew.-Teilen Polyol 4, 7,4 Gew.-Teilen Kettenverlängerungsmittel 1, 0,7 Gew.-Teilen Katalysator, 0,2 Gew.-Teilen Inhibitor, 0,3 Gew.-Teilen Schaumstabilisator und 1,4 Gew.-Teilen Treibmittel

Die verwendete Polyolkomponente E besteht aus 83,2 Gew.-Teilen Polyol 1, 7 Gew.-Teilen Polyol 5, 7,3 Gew.-Teilen Kettenverlängerungsmittel 1, 0,7 Gew.-Teilen Katalysator, 0,2 Gew.-Teilen Inhibitor, 0,2 Gew.-Teilen Schaumstabilisator und 1,4 Gew.-Teilen Treibmittel

Die verwendete Polyol-Komponente F besteht aus 85,8 Gew.-Teilen Polyol 1, 4,5 Gew.-Teilen Polyol 6, 4,4 Gew.-Teilen Kettenverlängerungsmittel 1, 3 Gew.-Teilen Kettenverlängerungsmittel 2, 0,7 Gew.-Teilen Katalysator, 0,1 Gew.-Teilen Inhibitor, 0,1 Gew.-Teilen Schaumstabilisator und 1,4 Gew.-Teilen Treibmittel

### Versuche:

### Reaktionsmischung 1 (RM1):

100 Gew.-Teile der Polyolkomponente A (45 °C) und 67 Gew.-Teile von Isocyanat 1 (40 °C) und 67 Gew.-Teile von Isocyanat 2 (40 °C) wurden mit einander vermischt und diese Mischung in eine Pappform (140 x 150 x 150 mm) gegeben und der so hergestellte offen- und grobzellige Schaum erhalten. Der Gehalt an Polyether, bezogen auf das Gesamtgewicht von Polyether und Polyester in Isocyanat 1, Isocyanat 2 und Polyol 1, beträgt dabei ca. 15,8 Gew.-%.

### Reaktionsmischung 2 (RM2):

100 Gew.-Teile der Polyolkomponente A (45 °C) und 71,5 Gew.-Teile von Isocyanat 1 (40 °C) und 58,5 Gew.-Teile von Isocyanat 2 (40 °C) wurden mit einander vermischt und diese Mischung in eine Pappform (140 x 150 x 150 mm) gegeben und der so hergestellte offen- und grobzellige Schaum erhalten. Der Gehalt an Polyether, bezogen auf das Gesamtgewicht von Polyether und Polyester in Isocyanat 1, Isocyanat 2 und Polyol 1, beträgt dabei ca. 17,1 Gew.-%.

### Reaktionsmischung 3 (RM3):

100 Gew.-Teile der Polyolkomponente C (45 °C) und 115 Gew.-Teile von Isocyanat 2 (40 °C) wurden miteinander vermischt und diese Mischung in einen Kunststoffeimer (5L) gegeben und der so hergestellte offen- und grobzellige Schaum erhalten. Der Gehalt an Polyether, bezogen auf das Gesamtgewicht von Polyether und Polyester in Isocyanat 2 und Polyol 1 beträgt dabei ca. 3,1 Gew.-%.

### Reaktionsmischung 4 (RM4):

100 Gew.-Teile der Polyolkomponente D (45 °C) und 117 Gew.-Teile von Isocyanat 2 (40 °C) wurden miteinander vermischt und diese Mischung in einen Kunststoffeimer (5L) gegeben und der so hergestellte offen- und grobzellige Schaum erhalten.

### Reaktionsmischung 5 (RM5):

100 Gew.-Teile der Polyolkomponente E (45 °C) und 128 Gew.-Teile von Isocyanat 2 (40 °C) wurden mit einer Niederdruckgießmaschine miteinander vermischt und diese Mischung in einen Kunststoffeimer (5L) gegeben und der so hergestellte offen- und grobzellige Schaum erhalten.

### Reaktionsmischung 6, verdichtet (RM6):

100 Gew.-Teile der Polyolkomponente E (45 °C) und 128 Gew.-Teile von Isocyanat 2 (40 °C) wurden mit einer Niederdruckgießmaschine miteinander vermischt und diese Mischung in eine auf 35 °C temperierte Aluminiumform (200 x 200 x 10 mm) gegeben, die Form geschlossen und der so hergestellte Polyurethanintegralschaum nach 4 Minuten entformt.

### Reaktionsmischung 7 (RM7):

100 Gew.-Teile der Polyolkomponente F (45 °C) und 117 Gew.-Teile von Isocyanat 2 (40 °C) wurden mit einer Niederdruckgießmaschine miteinander vermischt und diese Mischung in einen Kunststoffeimer (5L) gegeben und der so hergestellte offen- und grobzellige Schaum erhalten.

### Reaktionsmischung 8, Vergleich (RM8):

100 Gew.-Teile der Polyolkomponente A (45 °C) und 14 Gew.-Teile von Isocyanat 1 (40 °C) und 126 Gew.-Teile von Isocyanat 2 (40 °C) wurden mit einander vermischt und diese Mischung in eine Pappform (140 x 150 x 150 mm) gegeben.

Der erhaltene Schaum schrumpfte stark, sodass keine mechanische Untersuchung daran gemacht werden konnten. Der Gehalt an Polyether, bezogen auf das Gesamtgewicht von Polyether und Polyester in Isocyanat 1, Isocyanat 2 und Polyol 1 beträgt dabei ca. 3,0 Gew.-%.

### Reaktionsmischung 9, Vergleich (RM9)

100 Gew.-Teile der Polyolkomponente B (45 °C) und 121 Gew.-Teile von Isocyanat 2 (40 °C) wurden miteinander vermischt und diese Mischung in einen Kunststoffeimer (5L) gegeben. Der Gehalt an Polyether, bezogen auf das Gesamtgewicht von Polyether und Polyester in Isocyanat 1, Isocyanat 2 und Polyol 1 beträgt dabei ca. 0 Gew.-%.

Die mechanischen Eigenschaften der hergestellten Probe wurden nach 24 Stunden Lagerung gemäß den DIN EN ISO 1798, 3386, 53573 und ISO 34-1 bestimmt und sind in Tabelle 1 aufgelistet. Die Wasseraufnahme wurde über ein internes Verfahren bestimmt: hierbei wurde die Luft aus dem Schaumstoff unter Wasser herausgedrückt. Nachdem dieser sich mit Wasser voll gesogen hat, wurde die prozentuale Gewichtszunahme bestimmt.

**Tabelle 1**

| | RM1 | RM 2 | RM3 | RM4 | RM5 | RM6 | RM7 | RM8 (V) | RM9 (V) |
|---|---|---|---|---|---|---|---|---|---|
| RG | 125 | 130 | 136 | 158 | 99 | 260 | 154 | > 350 g/L | > 350 g/L |
| SH | 24 | 21 | 22 | 37 | 18 | | 25 | -- | -- |
| ZF | 622 | 580 | 443 | 381 | 411 | 2500 | 454 | -- | -- |
| BD | 303 | 338 | 351 | 322 | 281 | 337 | 291 | -- | -- |
| WF | 4,1 | 4,2 | 3,9 | 3,6 | 2,08 | 2,86 | 3,65 | -- | -- |
| RE | 33 | 35 | 45 | 48 | 36 | 36 | 47 | -- | -- |
| WA | | | | | 640 | | 520 | | |
| DR | | | | | | 8,8 | 4,1 | | |
| ZS | grob, offen | grob, offen | grob, offen | grob, offen | grob, offen | mittelgrob, offen | grob, offen | fein, geschrumpft | fein, geschrumpft |

Dabei bedeutet RG Raumgewicht in g/L, SH Stauchhärte bei 40% Stauchung in kPa ZF Zugfestigkeit in kPa, BD Bruchdehnung in %, WF Weiterreißfestigkeit in N/mm, RE Rückprallelastizität in %, WA Wasseraufnahme in %, DR Druckverformungsrest nach 72 Stunden bei Raumtemperatur für RM6 nach 6 Stunden bei 50 °C für RM7 und in beiden Fällen 50 % Kompression in % und ZS Zellstruktur

Tabelle 1 zeigt, dass die hergestellte Probe aus den erfindungsgemäßen Reaktionsmischungen RM1 bis RM7 neben der offenen und groben Zellstruktur die mechanischen Eigenschaften wie vor allem die notwendige Weiterreißfestigkeit für die Anwendung als Rohrreinigungsschwamm aufweist und über den Werten des heute verwendeten Latexschaumstoffes liegt. Die Weiterreißfestigkeiten und die Zugfestigkeiten des Latexschaumstoffes liegen bei nur 1,6 N/mm bzw. bei 236 kPa bei einem Raumgewicht von 170 g/L. Auch die Weiterreißeigenschaften von bekannten Polyurethan-Weichschaumstoffen, die als Reinigungsschwämme eingesetzt werden, liegen unterhalb 1 N/mm und sind somit für die Anwendung als Rohreinigungsschwamm nicht zu verwenden. Dabei zeigt die Probe aus Reaktionsmischung 6 (RM6) eine mittelgrobe Zellstruktur, da bei der Herstellung in der geschlossenen Form eine Verdichtung erfolgt ist.

Die mechanischen Eigenschaften des Schaumstoffes aus Reaktionsmischung 8 und 9 können nicht bestimmt werden, da der Probekörper stark schrumpft und somit keine sinnvolle Messung mehr möglich ist.

Die Daten der verdichteten Probe (RM6), die nur einen Volumenschrumpf von weniger als 2 % zeigt, verdeutlichen, dass mit diesem Material mechanische Werte erreicht werden können, um beispielsweise Armlehnen oder Schubkarrenreifen herzustellen.

## Patentansprüche

1. Offenzelliger Polyurethanschaumstoff mit einer Dichte von 70 bis 300 g/L, 1 bis 20 Zellen/cm, einer Rückprallintensität größer 30 %, einer Bruchdehnung von größer 200 %, einer Weiterreißfestigkeit von größer 1,2 N/mm und einer Zugfestigkeit von größer 200 kPa.

2. Offenzelliger Polyurethanschaumstoff nach Anspruch 1, **dadurch gekennzeichnet, dass** dieser Polyester- und Polyetherstrukturen enthält und unter Verwendung eines Treibmittels, enthaltend Wasser, erhalten wurde.

3. Verfahren zur Herstellung eines offenzelligen Polyurethanschaumstoffs nach Anspruch 1 oder 2, bei dem man
a) mindestens eine Isocyanatgruppen aufweisende Verbindung auf Basis von a1) MDI und gegebenenfalls a2) Polyetherolen und /oder a3) Polyesterolen sowie gegebenenfalls a4) Kettenverlängerer, wobei der Gehalt an MDI mit einer Funktionalität von größer 2 kleiner als 30 Gew.-%, bezogen auf das Gesamtgewicht des MDIs a1) ist,
b) mindestens eine höhermolekulare Verbindung mit gegenüber Isocyanat reaktiven Gruppen, enthaltend Polyetherole und/oder Polyesterote,
c) Treibmittel, enthaltend Wasser sowie gegebenenfalls
d) Kettenverlängerer,
e) Katalysator sowie
f) sonstige Hilfsmittel und/oder Zusatzstoffe
zu einer Reaktionsmischung vermischt und zu dem Polyurethanschaumstoff ausreagieren lässt, wobei als Verbindung a2), a3) und b) mindestens ein Polyetherol und mindestens ein Polyesterol eingesetzt wird und der Gehalt an Polyetherol größer 5 Gew.-%, bezogen auf das Gesamtgewicht der Komponenten a2), a3) und b) ist und die mittlere Funktionalität der Verbindungen a2), a3) und b) kleiner als 2,4 ist.

4. Verfahren nach Anspruch 3, **dadurch gekennzeichnet, dass** man als Isocyanatgruppen aufweisende Verbindung a) eine Verbindung auf Basis von a1) MDI und a2) Polyetherol einsetzt.

5. Verfahren nach Anspruch 4, **dadurch gekennzeichnet, dass** man als Isocyanatgruppen aufweisende Verbindung a) eine Verbindung auf Basis von a1) MDI und a2) Polyetherol und eine Verbindung auf Basis von a1) MDI und a2) Polyesterol einsetzt.

6. Verfahren nach Anspruch 5, **dadurch gekennzeichnet, dass** das Gewichtsverhältnis aus Verbindung auf Basis von a1) MDI und a2) Polyetherol und Verbindung auf Basis von a1) MDI und a3) Polyesterol 35 : 65 bis 70: 30 beträgt.

7. Verfahren nach einem der Ansprüche 3 bis 6, **dadurch gekennzeichnet, dass** als höhermolekulare Verbindung b) ausschließlich Polyesterole eingesetzt werden.

8. Verfahren zur Herstellung eines offenzelligen Polyurethanschaumstoffs nach Anspruch 1 oder 2, bei dem man
a) Isocyanatgruppen aufweisende Verbindungen auf Basis von a1) MDI und gegebenenfalls a2) Polyetherolen und /oder a3) Polyesterolen sowie gegebenenfalls a4) Kettenverlängerer, wobei der Gehalt an MDI mit einer Funktionalität von größer 2 kleiner als 30 Gew.-%, bezogen auf das Gesamtgewicht des MDIs a1) ist,
b) höhermolekulare Verbindungen mit gegenüber Isocyanat reaktiven Gruppen, enthaltend Polyetherole und/oder Polyesterole,
c) Treibmittel, enthaltend Wasser sowie gegebenenfalls
d) Kettenverlängerer,
e) Katalysator sowie
f) sonstige Hilfsmittel und/oder Zusatzstoffe
zu einer Reaktionsmischung vermischt und zu dem Polyurethanschaumstoff ausreagieren lässt, wobei als höhermolekulare Verbindung b) eine Mischung, enthaltend Polyesterpolyol und hochfunktionelles Polyetherol mit einer Funktionalität von mindestens 4, und einem Molekulargewichte von 5000 bis 30.000 g/mol, eingesetzt wird.

9. Verfahren nach Anspruch 8, **dadurch gekennzeichnet, dass** als hochfunktionelles Polyetherpolyol ein Polyoxypropylen-polyoxyethylen-polyol auf Basis eines Zuckermoleküls als Startermolekül eingesetzt wird.

10. Verfahren nach Anspruch 8 oder 9, **dadurch gekennzeichnet, dass** der Anteil an hochfunktionellem Polyetherol kleiner 20 Gew.-%, bezogen auf das Gesamtgewicht an Polyolen a2), a3) und b), ist.

11. Verfahren zur Herstellung eines offenzelligen Polyurethanschaumstoffs nach Anspruch 1 oder 2, bei dem man
a) Isocyanatgruppen aufweisende Verbindungen auf Basis von a1) MDI und gegebenenfalls a2) Polyetherolen und /oder a3) Polyesterolen sowie gegebenenfalls a4) Kettenverlängerer, wobei der Gehalt an MDI mit einer Funktionalität von größer 2 kleiner als 30 Gew.-%, bezogen auf das Gesamtgewicht des MDis a1) ist,
b) höhermolekulare Verbindungen mit gegenüber Isocyanat reaktiven Gruppen, enthaltend Polyetherole und/oder Polyesterole,
c) Treibmittel, enthaltend Wasser sowie gegebenenfalls
d) Kettenverlängerer,
e) Katalysator sowie
f) sonstige Hilfsmittel und/oder Zusatzstoffe
zu einer Reaktionsmischung vermischt und zu dem Polyurethanschaumstoff ausreagieren lässt, wobei als höhermolekulare Verbindung b) eine Mischung, enthaltend Polyesterpolyol und Copolymer (C) mit einer Funktionalität gegenüber Isocyanat von mindestens 4 und einem Molekulargewichte von 20.000 bis 200.000 g/mol, eingesetzt wird.

12. Verfahren nach Anspruch 11, **dadurch gekennzeichnet, dass** das Copolymer (C) aufgebaut ist aus wenigstens einem α,β-ethylenisch ungesättigten Monomer und wenigstens einem ungesättigten Polyetherpolyol.

13. Verfahren zur Herstellung eines offenzelligen Polyurethanschaumstoffs nach Anspruch 1 oder 2, bei dem man
a) Isocyanatgruppen aufweisende Verbindungen auf Basis von a1) MDI und gegebenenfalls a2) Polyetherolen und/oder a3) Polyesterolen sowie gegebenenfalls a4) Kettenverlängerer, wobei der Gehalt an MDI mit einer Funktionalität von größer 2 kleiner als 30 Gew.-%, bezogen auf das Gesamtgewicht des MDIs a1) ist,
b) höhermolekulare Verbindungen mit gegenüber Isocyanat reaktiven Gruppen, enthaltend Polyetherole und/oder Polyesterole,
c) Treibmittel, enthaltend Wasser sowie gegebenenfalls
d) Kettenverlängerer,
e) Katalysator sowie
f) sonstige Hilfsmittel und/oder Zusatzstoffe
zu einer Reaktionsmischung vermischt und zu dem Polyurethanschaumstoff ausreagieren lässt, wobei als höhermolekulare Verbindung b) eine Mischung, enthaltend Polyesterpolyol und hyperverzweigten Polyester, eingesetzt wird, wobei der hyperverzweigte Polyester erhältlich ist durch Umsetzung mindestens einer Dicarbonsäure oder von Derivaten derselben mit
s1) mindestens einem mindestens dreiwertigen Alkohol (B₃), oder
t1) mit mindestens einem zweiwertigen Alkohol (B₂) und mindestens einem x-wertigen Alkohol (Cₓ), der mehr als zwei OH-Gruppen aufweist, wobei x eine Zahl größer 2 ist, wobei die Gesamtmischung der eingesetzten Alkohole eine mittlere Funktionalität von 2,1 bis 10 aufweist,
oder durch Umsetzung mindestens einer Polycarbonsäure (D_{y}) oder deren Derivat, die mehr als zwei Säuregruppen aufweist, wobei y eine Zahl größer 2, mit
s2) mindestens einem mindestens zweiwertigen Alkohol (B₂), oder
t2) mit mindestens einem zweiwertigen Alkohol (B₂) und mindestens einem x-wertigen Alkohol (Cₓ), der mehr als zwei OH-Gruppen aufweist, wobei x eine Zahl größer 2 ist,
wobei
u) bis zu 50 mol-%, bevorzugt bis zu 40 mol-%, besonders bevorzugt bis zu 30 mol-%, und insbesondere bevorzugt bis zu 20 mol-% bezogen auf die gemäß a1), a2), b1) und b2) umgesetzten Alkohole B₃, B₂ und/oder Cₓ, eines hydrophoben langkettigen monofunktionellen Alkohols E₁ mit mindestens 8 C-Atomen mit umgesetzt werden können, und
v) optional anschließender Umsetzung mit einer langkettigen hydrophoben Monocarbonsäure mit mindestens 8 C-Atomen,
wobei eine oder mehrere der nachstehenden Bedingungen erfüllt sind:
i) der Alkohol B₃ bzw. B₂ und/oder Cₓ ist ein hydrophobes Alkoxylat auf Basis von Propylenoxid, Butylenoxid oder Styroloxid mit im Mittel mindestens 1 und höchstens 100 Oxyalkylen-Einheiten pro Startermolekül, und einem difunktionellen (für B₂), trifunktionellen (für B₃) oder x-funktionellen (für Cₓ) Startermolekül;
ii) die Alkohole B₃ bzw. B₂ und/oder Cₓ enthalten mindestens 20 mol.%, bevorzugt mindestens 30 mol-%, besonders bevorzugt mindestens 40 mol-%, und ganz besonders bevorzugt mindestens 50 mol% eines langkettigen Diols bzw. Polyols mit mindestens 8 C-Atomen;
iii) die Dicarbonsäure ist eine hydrophobe langkettige aliphatische Dicarbonsäure, eine aromatische oder cycloaliphatische Dicarbonsäure mit mindestens 8 C-Atomen, bzw. die Carbonsäure D_{y} mit mehr als zwei Säuregruppen ist eine hydrophobe langkettige aliphatische Polycarbonsäure, eine aromatische oder cycloaliphatische Polycarbonsäure mit mindestens 9 C-Atomen;
iv) mindestens 10 mol-% und höchstens 90 mol.%, bevorzugt höchstens 70 mol%, besonders bevorzugt höchstens 50 mol-%, und insbesondere bevorzugt höchstens 30 mol-% bezogen auf die gemäß a1), a2), b1) und b2) umgesetzten Alkohole B₃, B₂ und/oder Cₓ eines langkettigen Monoalkohols E₁ mit mindestens 8 C-Atomen werden mit umgesetzt;
v) es wird anschließend mit 10 bis 100 mol.-%, bevorzugt 10 bis 80 mol-%, besonders bevorzugt 20 bis 80 mol-%, insbesondere bevorzugt 20 bis 60 mol-% bezogen auf die mittlere Anzahl der OH-Gruppen des hyperverzweigten Polyesters, einer langkettigen hydrophoben Monocarbonsäure mit mindestens 8 C-Atomen umgesetzt.

14. Verfahren nach Anspruch 13, **dadurch gekennzeichnet, dass**
i) der Alkohol B₃ bzw. B₂ und/oder Cₓ ein hydrophobes Alkoxylat auf Basis von Propylenoxid oder Butylenoxid mit im Mittel 1 bis 15 Oxyalkylen-Einheiten pro OH-Gruppe ist, und
iii) dieser mit einer hydrophoben langkettigen aliphatischen Dicarbonsäure, einer aromatischen oder cycloaliphatischen Dicarbonsäure mit mindestens 8 C-Atomen, oder mit einer hydrophoben langkettigen aliphatischen Polycarbonsäure, einer aromatischen oder cycloaliphatischen Polycarbonsäure D_{y} mit mehr als zwei Säuregruppen und mindestens 9 C-Atomen umgesetzt wird.

15. Verfahren nach Anspruch 14, **dadurch gekennzeichnet, dass** die Umsetzung mit einer langkettigen aliphatischen Dicarbonsäure mit mindestens 8 C-Atomen oder mit einer hydrophoben langkettigen aliphatischen Polycarbonsäure mit mindestens 9 Atomen durchgeführt wird.

16. Verfahren nach Anspruch 13, **dadurch gekennzeichnet, dass**
i) der Alkohol B₃ bzw. B₂ und/oder Cₓ ein hydrophobes Alkoxylat auf Basis von Propylenoxid oder Butylenoxid mit im Mittel 1 bis 15 Oxyalkylen-Einheiten pro OH-Gruppe ist, und
iv) mindestens 10 mol% und höchstens 90 mol.%, bezogen auf die gemäß a1), a2), b1) und b2) umgesetzten Alkohole B₃, B₂ und/oder Cₓ eines langkettigen Monoalkohols mit mindestens 8 C-Atomen mit umgesetzt werden,

17. Verfahren nach Anspruch 13, **dadurch gekennzeichnet, dass**
i) der Alkohol B₃ bzw. B₂ und/oder Cₓ ein hydrophobes Alkoxylat auf Basis von Propylenoxid oder Butylenoxid mit im Mittel 1 bis 15 Oxyalkylen-Einheiten pro OH-Gruppe ist, und
v) anschließend das Umsetzungsprodukt aus a1) und b1) bzw. a2) und b2) mit 10 bis 100 mol:-%, bezogen auf die mittlere Anzahl der OH-Gruppen des hyperverzweigten Polyesters, einer langkettigen hydrophoben Monocarbonsäure F mit mindestens 8 C-Atomen umgesetzt wird.

18. Verfahren zur Herstellung eines offenzelligen Polyurethanschaumstoffs nach Anspruch 1 oder 2, bei dem man
a) Isocyanatgruppen aufweisende Verbindungen auf Basis von a1) MDI und gegebenenfalls a2) Polyetherolen und /oder a3) Polyesterolen sowie gegebenenfalls a4) Kettenverlängerer, wobei der Gehalt an MDI mit einer Funktionalität von größer 2 kleiner als 30 Gew.-%, bezogen auf das Gesamtgewicht des MDIs a1) ist,
b) höhermolekulare Verbindungen mit gegenüber Isocyanat reaktiven Gruppen, enthaltend Polyetherole und/oder Polyesterole,
c) Treibmittel, enthaltend Wasser sowie gegebenenfalls
d) Kettenverlängerer,
e) Katalysator sowie
f) sonstige Hilfsmittel und/oder Zusatzstoffe
zu einer Reaktionsmischung vermischt und zu dem Polyurethanschaumstoff ausreagieren lässt, wobei als höhermolekulare Verbindung b) eine Mischung, enthaltend Polyesterpolyol und hyperverzweigtes Polycarbonat, eingesetzt wird, wobei das hyperverzweigte Polycarbonat erhältlich ist durch Umsetzung mindestens eines Kohlensäureesters (A₂) oder von Derivaten desselben mit
l) mindestens einem mindestens dreiwertigen Alkohol (B₃), oder
m) mit mindestens einem zweiwertigen Alkohol (B₂) und mindestens einem x-wertigen Alkohol (Cₓ), der mehr als zwei OH-Gruppen aufweist, wobei x eine Zahl größer 2 ist, wobei die Gesamtmischung der eingesetzten Alkohole eine mittlere Funktionalität von 2,1 bis 10 aufweist,
wobei
n) bis zu 50 Mol%, bevorzugt bis zu 40 Mol%, besonders bevorzugt bis zu 30 Mol-%, und insbesondere bevorzugt bis zu 20 Mol-% bezogen auf die gemäß a) und b) umgesetzten Alkohole B₃, B₂ und/oder Cₓ, eines hydrophoben langkettigen monofunktionellen Alkohols E₁ mit mindestens 8 C-Atomen mit umgesetzt werden können, und
o) optional anschließender Umsetzung mit einer langkettigen hydrophoben OH-reaktiven Verbindung F, wie einer Monocarbonsäure oder einem Monoisocyanat mit mindestens 8 C-Atomen,
p) optional anschließender Umsetzung mit Propylenoxid und/oder Butylenoxid.
wobei eine oder mehrere der nachstehenden Bedingungen erfüllt sind:
l) der Alkohol B₃ bzw. B₂ und/oder Cₓ ist ein hydrophobes Alkoxylat auf Basis von Propylenoxid, Butylenoxid oder Styroloxid mit im Mittel mindestens 1 und höchstens 100 Oxyalkylen-Einheiten pro Startermolekül, und einem difunktionellen (für B₂), trifunktionellen (für B₃) oder x-funktionellen (für Cₓ) Startermolekül;
II) die Alkohole B₃ bzw. B₂ und/oder Cₓ enthalten mindestens 20 Mol-%, bevorzugt mindestens 30 Mol-%, besonders bevorzugt mindestens 40 Mol-%, und ganz besonders bevorzugt mindestens 50 Mol-% eines langkettigen Diols bzw. Polyols mit mindestens 8 C-Atomen;
III) mindestens 10 Mol-% und höchstens 90 Mol-%, bevorzugt höchstens 70 Mol-%, besonders bevorzugt höchstens 50 Mol-%, und insbesondere bevorzugt höchstens 30 Mol-% bezogen auf die gemäß a) und b) umgesetzten Alkohole B₃, B₂ und/oder Cₓ eines langkettigen Monoalkohols mit mindestens 8 C-Atomen werden mit umgesetzt;
IV) es wird anschließend mit 10 bis 100 Mol-%, bevorzugt 10 bis 80 Mol-%, besonders bevorzugt 20 bis 80 Mol-%, insbesondere bevorzugt 20 bis 60 Mol-% bezogen auf die mittlere Anzahl der OH-Gruppen des hyperverzweigten Polycarbonats, der langkettigen hydrophoben OH-reaktiven Verbindung F mit mindestens 8 C-Atomen umgesetzt,
V) es wird anschließend mit, pro Äquivalent OH-Gruppen des hyperverzweigten Polycarbonats, 1 bis 60, bevorzugt mit 2 bis 50, besonders bevorzugt mit 3 bis 40 und insbesondere bevorzugt mit 3 bis 30 Äquivalenten Propylenoxid, Butylenoxid oder Propylenoxid und Butylenoxid umgesetzt.

19. Verfahren nach Anspruch 18, **dadurch gekennzeichnet, dass**
I) der Alkohol B₃ bzw. B₂ und/oder Cₓ ein hydrophobes Alkoxylat auf Basis von Propylenoxid oder Butylenoxid mit im Mittel 1 bis 15 Oxyalkylen-Einheiten pro OH-Gruppe ist.

20. Verfahren nach Anspruch 18, **dadurch gekennzeichnet, dass**
I) der Alkohol B₃ bzw. B₂ und/oder Cₓ ein hydrophobes Alkoxylat auf Basis von Propylenoxid oder Butylenoxid mit im Mittel 1 bis 15 Oxyalkylen-Einheiten pro OH-Gruppe ist, und
III) mindestens 10 Mol-% und höchstens 90 Mol-%, bezogen auf die gemäß g) und h) umgesetzten Alkohole B₃, B₂ und/oder Cₓ eines langkettigen Monoalkohols E₁ mit mindestens 8 C-Atomen mit umgesetzt werden.

21. Verfahren nach Anspruch 18, **dadurch gekennzeichnet, dass**
I) der Alkohol B₃ bzw. B₂ und/oder Cₓ ein hydrophobes Alkoxylat auf Basis von Propylenoxid oder Butylenoxid mit im Mittel 1 bis 15 Oxyalkylen-Einheiten pro OH-Gruppe ist, und
IV) anschließend das Umsetzungsprodukt aus g) und h) mit 10 bis 100 Mol-%, bezogen auf die mittlere Anzahl der OH-Gruppen des hyperverzweigten Polyesters, mit einer langkettigen hydrophoben OH-reaktiven Verbindung F₁ mit mindestens 8 C-Atomen umgesetzt wird.

22. Verfahren nach einem der Ansprüche 18 bis 21, **dadurch gekennzeichnet, dass** man als Polyisocyanat A eine Verbindung auf Basis von a1) MDI und a2) Polyesterol einsetzt.

23. Verfahren nach Anspruch 22, **dadurch gekennzeichnet, dass** man als Polyisocyanat A eine Verbindung auf Basis von a1) MDI und a2) Polyetherol und eine Verbindung auf Basis von a1) MDI und a2) Polyesterol einsetzt.

24. Verfahren nach Anspruch 23, **dadurch gekennzeichnet, dass** das Gewichtsverhältnis aus Verbindung auf Basis von a1) MDI und a2) Polyetherol und Verbindung auf Basis von a1) MDI und a3) Polyesterol 35 : 65 bis 70: 30 beträgt.

25. Verfahren nach einem der Ansprüche 18 bis 24, **dadurch gekennzeichnet, dass** als Grundpolyol B ausschließlich ein oder mehrere Polyesterole eingesetzt werden.

26. Verfahren nach einem der Ansprüche 18 bis 25, **dadurch gekennzeichnet, dass** als Grundpolyol B ein Polyesterpolyol eingesetzt wird, das erhältlich ist aus Adipinsäure, einem Diol, ausgewählt aus Monoethylenglykol, Diethylenglykol, Butandiol und deren Gemischen, und optional Glycerin und/oder Trimethylolpropan, wobei die molare Menge der Diole diejenige der Triole überwiegt.

27. Polyurethanschaumstoff mit einer Dichte von 70 bis 300 g/L und 1 bis 20 Zellen/cm, einer Rückprallintensität größer 30 %, einer Bruchdehnung von größer 200 %, einer Weiterreißfestigkeit von größer 1,2 N/mm und einer Zugfestigkeit von größer 200 kPa, erhältlich nach einem Verfahren gemäß einem der Ansprüche 3 bis 26.

28. Verwendung eines Polyurethanschaumstoffs nach Anspruch 27 als Reinigungsschwamm.

## Claims

1. An open-cell polyurethane foam having a density of 70 to 300 g/L, 1 to 20 cells/cm, a rebound resilience greater than 30%, an elongation at break of greater than 200%, a tear propagation resistance of greater than 1.2 N/mm and a tensile strength of greater than 200 kPa.

2. The open-cell polyurethane foam according to claim 1, which comprises polyester and polyether structures and has been obtained using a blowing agent comprising water.

3. A process for producing an open-cell polyurethane foam according to claim 1 or 2, in which
a) at least one compound having isocyanate groups and based on a1) MDI and optionally a2) polyetherols and/or a3) polyesterols and optionally a4) chain extenders, where the content of MDI having a functionality of greater than 2 is less than 30% by weight, based on the total weight of the MDI a1),
b) at least one relatively high molecular weight compound having groups reactive toward isocyanate, comprising polyetherols and/or polyesterols,
c) blowing agent comprising water and optionally
d) chain extender,
e) catalyst and
f) other assistants and/or additives
are mixed to give a reaction mixture and allowed to react fully to give the polyurethane foam, the compound a2), a3) and b) used being at least one polyetherol and at least one polyesterol, and the content of polyetherol being greater than 5% by weight, based on the total weight of components a2), a3) and b) and the mean functionality of compounds a2), a3) and b) being less than 2.4.

4. The process according to claim 3, wherein the compound a) having isocyanate groups used is a compound based on a1) MDI and a2) polyetherol.

5. The process according to claim 4, wherein the compound a) having isocyanate groups used is a compound based on a1) MDI and a2) polyetherol, and a compound based on a1) MDI and a2) polyesterol.

6. The process according to claim 5, wherein the weight ratio of compound based on a1) MDI and a2) polyetherol and compound based on a1) MDI and a3) polyesterol is 35:65 to 70:30.

7. The process according to any of claims 3 to 6, wherein the relatively high molecular weight compound b) used comprises exclusively polyesterols.

8. A process for producing an open-cell polyurethane foam according to claim 1 or 2, in which
a) compounds having isocyanate groups and based on a1) MDI and optionally a2) polyetherols and/or a3) polyesterols and optionally a4) chain extenders, where the content of MDI having a functionality of greater than 2 is less than 30% by weight, based on the total weight of the MDI a1),
b) relatively high molecular weight compounds having groups reactive toward isocyanate, comprising polyetherols and/or polyesterols, c) blowing agent comprising water and optionally d) chain extender,
e) catalyst and
f) other assistants and/or additives
are mixed to give a reaction mixture and allowed to react fully to give the polyurethane foam, the relatively high molecular weight compound b) used being a mixture comprising polyester polyol and high-functionality polyetherol having a functionality of at least 4, and a molecular weight of 5000 to 30 000 g/mol.

9. The process according to claim 8, wherein the high-functionality polyether polyol used is a polyoxypropylenepolyoxyethylenepolyol based on a sugar molecule as the starter molecule.

10. The process according to claim 8 or 9, wherein the proportion of high-functionality polyetherol is less than 20% by weight, based on the total weight of polyols a2), a3) and b).

11. A process for producing an open-cell polyurethane foam according to claim 1 or 2, in which
a) compounds having isocyanate groups and based on a1) MDI and optionally a2) polyetherols and/or a3) polyesterols and optionally a4) chain extenders, where the content of MDI having a functionality of greater than 2 is less than 30% by weight, based on the total weight of the MDI a1),
b) relatively high molecular weight compounds having groups reactive toward isocyanate, comprising polyetherols and/or polyesterols, c) blowing agent comprising water and optionally d) chain extender,
e) catalyst and
f) other assistants and/or additives
are mixed to give a reaction mixture and allowed to react fully to give the polyurethane foam, the relatively high molecular weight compound b) used being a mixture comprising polyester polyol and copolymer (C) having a functionality toward isocyanate of at least 4, and a molecular weight of 20 000 to 200 000 g/mol.

12. The process according to claim 11, wherein the copolymer (C) is formed from at least one α,β-ethylenically unsaturated monomer and at least one unsaturated polyether polyol.

13. A process for producing an open-cell polyurethane foam according to claim 1 or 2, in which
a) compounds having isocyanate groups and based on a1) MDI and optionally a2) polyetherols and/or a3) polyesterols and optionally a4) chain extenders, where the content of MDI having a functionality of greater than 2 is less than 30% by weight, based on the total weight of the MDI a1),
b) relatively high molecular weight compounds having groups reactive toward isocyanate, comprising polyetherols and/or polyesterols, c) blowing agent comprising water and optionally d) chain extender,
e) catalyst and
f) other assistants and/or additives
are mixed to give a reaction mixture and allowed to react fully to give the polyurethane foam, the relatively high molecular weight compound b) used being a mixture comprising polyester polyol and hyperbranched polyester, said hyperbranched polyester being obtainable by reacting at least one dicarboxylic acid or derivatives thereof with
s1) at least one at least trihydric alcohol (B₃), or
t1) at least one dihydric alcohol (B₂) and at least one x-hydric alcohol (Cₓ) which has more than two OH groups where x is greater than 2, where the overall mixture of the alcohols used has a mean functionality of 2.1 to 10,
or by reacting at least one polycarboxylic acid (D_{y}) or derivative thereof which has more than two acid groups, where y is greater than 2, with
s2) at least one at least dihydric alcohol (B₂), or
t2) at least one dihydric alcohol (B₂) and at least
one x-hydric alcohol (Cₓ) which has more than two OH groups where x is greater than 2,
where
u) up to 50 mol%, preferably up to 40 mol%, more preferably up to 30 mol%, and especially preferably up to 20 mol%, based on the alcohols B₃, B₂ and/or Cₓ converted according to a1), a2), b1) and b2), of a hydrophobic, long-chain monofunctional alcohol E₁ having at least 8 carbon atoms may also be reacted, and
v) optional subsequent reaction with a long-chain hydrophobic monocarboxylic acid having at least 8 carbon atoms,
where one or more of the following conditions are met:
i) the alcohol B₃ or B₂ and/or Cₓ is a hydrophobic alkoxylate based on propylene oxide, butylene oxide or styrene oxide and having an average of at least 1 and at most 100 oxyalkylene units per starter molecule, and a difunctional (for B₂), trifunctional (for B₃) or x-functional (for Cₓ) starter molecule;
ii) the alcohols B₃ or B₂ and/or Cₓ comprise at least 20 mol%, preferably at least 30 mol%, more preferably at least 40 mol%, and most preferably at least 50 mol% of a long-chain diol or polyol having at least 8 carbon atoms;
iii) the dicarboxylic acid is a hydrophobic long-chain aliphatic dicarboxylic acid, an aromatic or cycloaliphatic dicarboxylic acid having at least 8 carbon atoms, or the carboxylic acid D_{y} having more than two acid groups is a hydrophobic long-chain aliphatic polycarboxylic acid, or an aromatic or cycloaliphatic polycarboxylic acid having at least 9 carbon atoms;
iv) at least 10 mol% and at most 90 mol%, preferably at most 70 mol%, more preferably at most 50 mol%, and especially preferably at most 30 mol%, based on the alcohols B₃, B₂ and/or Cₓ converted according to a1), a2), b1) and b2) of a long-chain monoalcohol E₁ having at least 8 carbon atoms are also reacted;
v) there is subsequent reaction with 10 to 100 mol%, preferably 10 to 80 mol%, more preferably 20 to 80 mol%, and especially preferably 20 to 60 mol%, based on the mean number of OH groups of the hyperbranched polyester, of a long-chain hydrophobic monocarboxylic acid having at least 8 carbon atoms.

14. The process according to claim 13, wherein
i) the alcohol B₃ or B₂ and/or Cₓ is a hydrophobic alkoxylate based on propylene oxide or butylene oxide and having an average of 1 to 15 oxyalkylene units per OH group, and
iii) the latter is reacted with a hydrophobic long-chain aliphatic dicarboxylic acid, an aromatic or cycloaliphatic dicarboxylic acid having at least 8 carbon atoms, or with a hydrophobic long-chain aliphatic polycarboxylic acid, or an aromatic or cycloaliphatic polycarboxylic acid D_{y} having more than two acid groups and at least 9 carbon atoms.

15. The process according to claim 14, wherein the reaction is performed with a long-chain aliphatic dicarboxylic acid having at least 8 carbon atoms or with a hydrophobic long-chain aliphatic polycarboxylic acid having at least 9 atoms.

16. The process according to claim 13, wherein
i) the alcohol B₃ or B₂ and/or Cₓ is a hydrophobic alkoxylate based on propylene oxide or butylene oxide and having an average of 1 to 15 oxyalkylene units per OH group, and
iv) at least 10 mol% and at most 90 mol%, based on the alcohols B₃, B₂ and/or Cₓ converted according to a1), a2), b1) and b2) of a long-chain monoalcohol having at least 8 carbon atoms are also reacted.

17. The process according to claim 13, wherein
i) the alcohol B₃ or B₂ and/or Cₓ is a hydrophobic alkoxylate based on propylene oxide or butylene oxide and having an average of 1 to 15 oxyalkylene units per OH group, and
v) then the reaction product formed from a1) and b1) or a2) and b2) is reacted with 10 to 100 mol%, based on the mean number of OH groups of the hyperbranched polyester, of a long-chain hydrophobic monocarboxylic acid F having at least 8 carbon atoms.

18. A process for producing an open-cell polyurethane foams according to claim 1 or 2, in which
a) compounds having isocyanate groups and based on a1) MDI and optionally a2) polyetherols and/or a3) polyesterols and optionally a4) chain extenders, where the content of MDI having a functionality of greater than 2 is less than 30% by weight, based on the total weight of the MDI a1),
b) relatively high molecular weight compounds having groups reactive toward isocyanate, comprising polyetherols and/or polyesterols, c) blowing agent comprising water and optionally d) chain extender,
e) catalyst and
f) other assistants and/or additives
are mixed to give a reaction mixture and allowed to react fully to give the polyurethane foam, the relatively high molecular weight compound b) used being a mixture comprising polyester polyol and hyperbranched polycarbonate, said hyperbranched polycarbonate being obtainable by reacting at least one carbonic ester (A₂) or derivatives thereof with
1) at least one at least trihydric alcohol (B₃), or
m) at least one dihydric alcohol (B₂) and at least one x-hydric alcohol (Cₓ) which has more than two OH groups, where x is greater than 2, where the overall mixture of alcohols used has a mean functionality of 2.1 to 10,
where
n) up to 50 mol%, preferably up to 40 mol%, more preferably up to 30 mol%, and especially preferably up to 20 mol% based on the alcohols B₃, B₂ and/or Cₓ, converted according to a) and b), of a hydrophobic long-chain monofunctional alcohol E₁ having at least 8 carbon atoms may also be reacted, and
o) optional subsequent reaction with a long-chain hydrophobic OH-reactive compound F, such as a monocarboxylic acid or a monoisocyanate having at least 8 carbon atoms,
p) optional subsequent reaction with propylene oxide and/or butylene oxide,
where one or more of the following conditions are met:
I) the alcohol B₃ or B₂ and/or Cₓ is a hydrophobic alkoxylate based on propylene oxide, butylene oxide or styrene oxide and having an average of at least 1 and at most 100 oxyalkylene units per starter molecule, and a difunctional (for B₂), trifunctional (for B₃) or x-functional (for Cₓ) starter molecule;
II) the alcohols B₃ or B₂ and/or Cₓ comprise at least 20 mol%, preferably at least 30 mol%, more preferably at least 40 mol%, and most preferably at least 50 mol% of a long-chain diol or polyol having at least 8 carbon atoms;
III) at least 10 mol% and at most 90 mol%, preferably at most 70 mol%, more preferably at most 50 mol%, and especially preferably at most 30 mol%, based on the alcohols B₃, B₂ and/or Cₓ converted according to a) and b) of a long-chain monoalcohol having at least 8 carbon atoms are also reacted;
IV) there is subsequent reaction with 10 to 100 mol%, preferably 10 to 80 mol%, more preferably 20 to 80 mol%, and especially preferably 20 to 60 mol%, based on the mean number of OH groups of the hyperbranched polycarbonate, of the long-chain hydrophobic OH-reactive compound F having at least 8 carbon atoms,
V) there is a subsequent reaction with, per equivalent of OH groups of the hyperbranched polycarbonate, 1 to 60, preferably with 2 to 50, more preferably with 3 to 40 and especially preferably with 3 to 30 equivalents of propylene oxide, butylene oxide or propylene oxide and butylene oxide.

19. The process according to claim 18, wherein
I) the alcohol B₃ or B₂ and/or Cₓ is a hydrophobic alkoxylate based on propylene oxide or butylene oxide and having an average of 1 to 15 oxyalkylene units per OH group.

20. The process according to claim 18, wherein
I) the alcohol B₃ or B₂ and/or Cₓ is a hydrophobic alkoxylate based on propylene oxide or butylene oxide and having an average of 1 to 15 oxyalkylene units per OH group, and
III) at least 10 mol% and at most 90 mol%, based on the alcohols B₃, B₂ and/or Cₓ converted according to g) and h) of a long-chain monoalcohol E₁ having at least 8 carbon atoms are also reacted.

21. The process according to claim 18, wherein
I) the alcohol B₃ or B₂ and/or Cₓ is a hydrophobic alkoxylate based on propylene oxide or butylene oxide and having an average of 1 to 15 oxyalkylene units per OH group, and
IV) then the reaction product formed from g) and h) is reacted with 10 to 100 mol%, based on the mean number of OH groups of the hyperbranched polyester, of a long-chain hydrophobic OH-reactive compound F₁ having at least 8 carbon atoms.

22. The process according to any of claims 18 to 21, wherein the polyisocyanate A used is a compound based on a1) MDI and a2) polyesterol.

23. The process according to claim 22, wherein the polyisocyanate A used is a compound based on a1) MDI and a2) polyetherol and a compound based on a1) MDI and a2) polyesterol.

24. The process according to claim 23, wherein the weight ratio of compound based on a1) MDI and a2) polyetherol and compound based on a1) MDI and a3) polyesterol is 35:65 to 70:30.

25. The process according to any of claims 18 to 24, wherein the base polyol B used comprises exclusively one or more polyesterols.

26. The process according to any of claims 18 to 25, wherein the base polyol B used is a polyesterol obtainable from adipic acid, a diol selected from monoethylene glycol, diethylene glycol, butanediol and mixtures thereof, and optionally glycerol and/or trimethylolpropane, where the molar amount of the diols predominates over that of the triols.

27. A polyurethane foam having a density of 70 to 300 g/L and 1 to 20 cells/cm, a rebound intensity greater than 30%, an elongation at break of greater than 200%, a tear propagation resistance of greater than 1.2 N/mm and a tensile strength of greater than 200 kPa, obtainable by a process according to any of claims 3 to 26.

28. The use of a polyurethane foam according to claim 27 as a cleaning sponge.

## Revendications

1. Mousse de polyuréthanne à alvéoles ouverts ayant une masse volumique de 70 à 300 g/l, 1 à 20 alvéoles/cm, une intensité de résilience supérieure à 30 %, un allongement à la rupture supérieur à 200 %, une résistance à la déchirure amorcée supérieure à 1,2 N/mm et une résistance à la traction supérieure à 200 kPa.

2. Mousse de polyuréthanne à alvéoles ouverts selon la revendication 1, **caractérisée en ce qu'**elle contient des structures polyester et polyéther, et a été obtenue par utilisation d'un agent porogène contenant de l'eau.

3. Procédé de fabrication d'une mousse de polyuréthanne à alvéoles ouverts selon la revendication 1 ou 2, dans lequel on mélange pour obtenir un mélange réactionnel
a) au moins un composé comprenant des groupes isocyanate à base de a1) un MDI et éventuellement a2) des polyétherols et/ou a3) des polyesterols, ainsi qu'éventuellement de a4) un extendeur de chaîne, la teneur en MDI ayant une fonctionnalité supérieure à 2 étant inférieure à 30 % en poids par rapport au poids total un MDI a1),
b) au moins un composé à grande masse moléculaire ayant des groupes réactifs vis-à-vis des isocyanates, contenant des polyétherols et/ou des polyesterols,
c) un agent porogène contenant de l'eau, ainsi qu'éventuellement
d) un extendeur de chaîne,
e) un catalyseur, ainsi que
f) d'autres adjuvants et/ou additifs,
et on les laisse réagir pour donner la mousse de polyuréthanne, dans lequel on utilise en tant que composés a2), a3) et b) au moins un polyétherol et au moins un polyesterol, et la teneur en polyétherol étant supérieure à 5 % en poids par rapport au poids total des composants a2), a3) et b), et la fonctionnalité moyenne des composés a2), a3) et b) étant inférieure à 2, 4.

4. Procédé selon la revendication 3, **caractérisé en ce qu'**on utilise en tant que composé a) comprenant des groupes isocyanate un composé à base de a1) un MDI et de a2) un polyétherol.

5. Procédé selon la revendication 4, **caractérisé en ce qu'**on utilise en tant que composé a) comprenant des groupes isocyanate un composé à base de a1) un MDI et a2) un polyétherol et un composé à base de a1) un MDI et a2) un polyesterol.

6. Procédé selon la revendication 5, **caractérisé en ce que** le rapport en poids du composé à base de a1) un MDI et de a2) un polyétherol et le composé à base de a1) un MDI et de a3) un polyesterol est de 35:65 à 70:30.

7. Procédé selon l'une des revendications 3 à 6, **caractérisé en ce qu'**on utilise exclusivement des polyesterols en tant que composés b) à grande masse moléculaire.

8. Procédé de fabrication d'une mousse de polyuréthanne à alvéoles ouverts selon la revendication 1 ou 2, dans lequel on mélange pour obtenir un mélange réactionnel
a) des composés comprenant des groupes isocyanate à base de a1) un MDI et éventuellement de a2) des polyétherols et/ou de a3) des polyesterols, ainsi qu'éventuellement de a4) un extendeur de chaîne, la teneur en MDI ayant une fonctionnalité supérieure à 2 étant inférieure à 30 % en poids par rapport au poids total un MDI a1),
b) des composés à grande masse moléculaire ayant des groupes réactifs vis-à-vis des isocyanates, contenant des polyétherols et/ou des polyesterols, c) un agent porogène contenant de l'eau, ainsi qu'éventuellement
d) un extendeur de chaîne,
e) un catalyseur, ainsi que
f) d'autres adjuvants et/ou additifs,
et on les laisse réagir pour donner la mousse de polyuréthanne, dans lequel on utilise en tant que composé b) à grande masse moléculaire un mélange contenant un polyester-polyol et un polyétherol à haute fonctionnalité ayant une fonctionnalité d'au moins 4 et une masse moléculaire de 5000 à 30 000 g/mole.

9. Procédé selon la revendication 8, **caractérisé en ce qu'**on utilise en tant que polyéther-polyol à grande fonctionnalité un polyol polyoxypropyléné-polyoxyéthyléné à base d'une molécule de sucre en tant que molécule de départ.

10. Procédé selon la revendication 8 ou 9, **caractérisé en ce que** la proportion du polyétherol à haute fonctionnalité est inférieure à 20 % en poids par rapport au poids total des polyols a2), a3) et b).

11. Procédé de fabrication d'une mousse de polyuréthanne à alvéoles ouverts selon la revendication 1 ou 2, dans lequel on mélange pour obtenir un mélange réactionnel
a) des composés comprenant des groupes isocyanate à base de a1) un MDI et éventuellement de a2) des polyétherols et/ou de a3) des polyesterols, ainsi qu'éventuellement de a4) un extendeur de chaîne, la teneur en MDI ayant une fonctionnalité supérieure à 2 étant inférieure à 30 % en poids par rapport au poids total un MDI a1),
b) des composés à grande masse moléculaire ayant des groupes réactifs vis-à-vis des isocyanates, contenant des polyétherols et/ou des polyesterols, c) un agent porogène contenant de l'eau, ainsi qu'éventuellement
d) un extendeur de chaîne,
e) un catalyseur, ainsi que
f) d'autres adjuvants et/ou additifs,
et on les laisse réagir pour donner la mousse de polyuréthanne, dans lequel on utilise en tant que composé b) à grande masse moléculaire un mélange contenant un polyester-polyol et un copolymère (C) ayant une fonctionnalité vis-à-vis des isocyanates d'au moins 4 et une masse moléculaire de 20 000 à 200 000 g/mole.

12. Procédé selon la revendication 11, **caractérisé en ce que** le copolymère (C) est constitué d'au moins un monomère à insaturation α,β-éthylénique et d'au moins un polyéther-polyol insaturé.

13. Procédé de fabrication d'une mousse de polyuréthanne à alvéoles ouverts selon la revendication 1 ou 2, dans lequel on mélange pour obtenir un mélange réactionnel
a) des composés comprenant des groupes isocyanate à base de a1) un MDI et éventuellement de a2) des polyétherols et/ou de a3) des polyesterols ainsi qu'éventuellement de a4) un extendeur de chaîne, la teneur en MDI ayant une fonctionnalité supérieure à 2 étant inférieure à 30 % en poids par rapport au poids total un MDI a1),
b) des composés à grande masse moléculaire ayant des groupes réactifs vis-à-vis des isocyanates, contenant des polyétherols et/ou des polyesterols, c) un agent porogène contenant de l'eau, ainsi qu'éventuellement
d) un extendeur de chaîne,
e) un catalyseur, ainsi que
f) d'autres adjuvants et/ou additifs,
et on les laisse réagir pour donner la mousse de polyuréthanne, dans lequel on utilise en tant que composé b) à grande masse moléculaire un mélange contenant un polyester-polyol et un polyester hyperramifié, le polyester hyper-ramifié pouvant être obtenu par réaction d'au moins un acide dicarboxylique ou de dérivés de ce dernier avec
s1) au moins un alcool au moins trivalent (B₃), ou
t1) avec au moins un alcool divalent (B₂) et au moins un alcool x-valent (c), qui comprend plus de deux groupes OH, x étant un nombre supérieur à 2, le mélange total des alcools utilisés présentant une fonctionnalité moyenne de 2,1 à 10,
ou par réaction d'au moins un acide polycarboxylique (D_{y}) ou d'un dérivé de ce dernier, qui comprend plus de deux groupes acides, y étant un nombre supérieur à 2, avec
s2) au moins un alcool au moins divalent (B₂), ou
t2) avec au moins un alcool divalent (B₂) et au moins un alcool x-valent (Cₓ), qui comprend plus de deux groupes OH, x étant un nombre supérieur à 2,
dans lequel
u) jusqu'à 50 % en moles, de préférence jusqu'à 40 % en moles, d'une manière particulièrement préférée jusqu'à 30 % en moles et d'une manière tout particulièrement préférée jusqu'à 20 % en moles, par rapport aux alcools B₃, B₂ et/ou Cₓ ayant réagi selon a1), a2), b1) et b2), d'un alcool monofonctionnel à longue chaîne hydrophobe E₁ ayant au moins 8 atomes de carbone peuvent être mis ensemble à réagir, et
v) l'opération étant en option suivie d'une réaction avec des acides monocarboxyliques hydrophobes à longue chaîne ayant au moins 8 atomes de carbone,
où une ou plusieurs des conditions suivantes sont satisfaites :
i) l'alcool B₃ ou B₂ et/ou Cₓ est un produit d'alcoxylation hydrophobe à base d'oxyde de propylène, d'oxyde de butylène ou d'oxyde de styrène ayant en moyenne 1 et au plus 100 motifs oxyalkylène par molécule de départ, et d'une molécule de départ difonctionnelle (pour B₂), trifonctionnelle (pour B₃) ou x-fonctionnelle (pour Cₓ) ;
ii) les alcools B₃ ou B₂ et/ou Cₓ contiennent au moins 20 % en moles, de préférence au moins 30 % en moles, d'une manière particulièrement préférée au moins 40 % en moles et d'une manière tout particulièrement préférée au moins 50 % en moles d'un diol ou d'un polyol à longue chaîne ayant au moins 8 atomes de carbone ;
iii) l'acide dicarboxylique est un acide dicarboxylique aliphatique hydrophobe à longue chaîne, un acide dicarboxylique aromatique ou cycloaliphatique ayant au moins 8 atomes de carbone, ou l'acide carboxylique D_{y}, comportant plus de deux groupes acides, est un acide polycarboxylique aliphatique hydrophobe à longue chaîne, un acide polycarboxylique aromatique ou cycloaliphatique ayant au moins 9 atomes de carbone ;
iv) au moins 10 % en moles et au plus 90 % en moles, de préférence au plus 70 % en moles, d'une manière particulièrement préférée au plus 50 % en moles et d'une manière tout particulièrement préférée au moins 30 % en moles, par rapport aux alcools B₃, B₂ et Cₓ ayant réagi selon a1, a2), b1) et b2), d'un monoalcool à longue chaîne E₁ ayant au moins 8 atomes de carbone, sont mis ensemble à réagir ;
v) on fait réagir ensuite avec 10 à 100 % en moles, de préférence 10 à 80 % en moles, d'une manière particulièrement préférée 20 à 80 % en moles, d'une manière tout particulièrement préférée 20 à 60 % en moles, par rapport au nombre moyen des groupes OH du polyester hyper-ramifié, d'un acide monocarboxylique hydrophobe à longue chaîne ayant au moins 8 atomes de carbone.

14. Procédé selon la revendication 13, **caractérisé en ce que**
i) l'alcool B₃ ou B₂ et/ou Cₓ est un produit d'alcoxylation hydrophobe à base d'oxyde de propylène ou d'oxyde de butylène ayant en moyenne 1 à 15 motifs oxyalkylène par groupe OH, et
iii) on fait réagir ce dernier avec un acide dicarboxylique aliphatique hydrophobe à longue chaîne, un acide dicarboxylique aromatique ou cycloaliphatique ayant au moins 8 atomes de carbone, ou avec un acide polycarboxylique aliphatique hydrophobe à longue chaîne, un acide polycarboxylique D_{y} aromatique ou cycloaliphatique ayant plus de deux groupes acides et ayant au moins 9 atomes.

15. Procédé selon la revendication 14, **caractérisé en ce qu'**on met en oeuvre la réaction avec un acide dicarboxylique aliphatique à longue chaîne ayant au moins 8 atomes de carbone ou avec un acide polycarboxylique aliphatique hydrophobe à longue chaîne ayant au moins 9 atomes.

16. Procédé selon la revendication 13, **caractérisé en ce que**
i) l'alcool B₃ ou B₂ et/ou Cₓ est un produit d'alcoxylation hydrophobe à base d'oxyde de propylène ou d'oxyde de butylène ayant en moyenne 1 à 15 motifs oxyalkylène par groupe OH, et
iv) au moins 10 % en moles et au plus 90 % en moles, par rapport aux alcools B₃, B₂ et/ou Cₓ ayant réagi selon a1), a2), b1) et b2), d'un monoalcool à longue chaîne ayant au moins 8 atomes de carbone, sont mis ensemble à réagir.

17. Procédé selon la revendication 13, **caractérisé en ce que**
i) l'alcool B₃ ou B₂ et/ou Cₓ est un produit d'alcoxylation hydrophobe à base d'oxyde de propylène ou d'oxyde de butylène ayant en moyenne 1 à 15 motifs oxyalkylène par groupe OH, et
v) puis on fait réagir le produit de la réaction de a1) et b1), ou a2) et b2), avec 10 à 100 % en moles, par rapport au nombre moyen des groupes OH du polyester hyper-ramifié, d'un acide monocarboxylique hydrophobe à longue chaîne F ayant au moins 8 atomes de carbone.

18. Procédé de fabrication d'une mousse de polyuréthanne à alvéoles ouverts selon la revendication 1 ou 2, dans lequel on mélange pour obtenir un mélange réactionnel
a) des composés comprenant des groupes isocyanate à base de a1) un MDI et éventuellement de a2) des polyétherols et/ou de a3) des polyesterols ainsi qu'éventuellement de a4) un extendeur de chaîne, la teneur en MDI ayant une fonctionnalité supérieure à 2 étant inférieure à 30 % en poids par rapport au poids total un MDI a1),
b) des composés à grande masse moléculaire ayant des groupes réactifs vis-à-vis des isocyanates, contenant des polyétherols et/ou des polyesterols,
c) un agent porogène contenant de l'eau, ainsi qu'éventuellement
d) un extendeur de chaîne,
e) un catalyseur, ainsi que
f) d'autres adjuvants et/ou additifs,
et on les laisse réagir pour une mousse de polyuréthanne, dans lequel on utilise en tant que composé b) à grande masse moléculaire un mélange contenant un polyesterol et un polycarbonate hyperramifié, le polycarbonate hyper-ramifié pouvant être obtenu par réaction d'au moins un ester d'acide carbonique (A₂) ou de dérivés de ce dernier avec
1) au moins un alcool au moins trivalent (B₃), ou
m) avec au moins un alcool divalent (B₂) et au moins un alcool x-valent (c), qui comprend plus de deux groupes OH, x étant un nombre supérieur à 2, le mélange total des alcools utilisés présentant une fonctionnalité moyenne de 2,1 à 10,
dans lequel
n) jusqu'à 50 % en moles, de préférence jusqu'à 40 % en moles, d'une manière particulièrement préférée jusqu'à 30 % en moles et d'une manière tout particulièrement préférée jusqu'à 20 % en moles, par rapport aux alcools B₃, B₂ et/ou Cₓ ayant réagi selon a) et b), d'un alcool monofonctionnel hydrophobe à longue chaîne E₁ ayant au moins 8 atomes de carbone, peuvent être mis ensemble à réagir, et
o) l'opération étant en option suivie d'une réaction avec un composé F hydrophobe à longue chaîne réactif vis-à-vis des groupes OH, tel qu'un acide monocarboxylique ou un monoisocyanate ayant au moins 8 atomes de carbone,
p) l'opération étant en option suivie d'une réaction avec de l'oxyde de propylène et/ou de l'oxyde de butylène,
dans lequel une ou plusieurs des conditions suivantes sont satisfaites :
I) l'alcool B₃ ou B₂ et/ou Cₓ est un produit d'alcoxylation hydrophobe à base d'oxyde de propylène, d'oxyde de butylène ou d'oxyde de styrène ayant en moyenne au moins 1 et au plus 100 motifs oxyalkylène par molécule de départ, et d'une molécule de départ difonctionnelle (pour B₂), trifonctionnelle (pour B₃) ou x-fonctionnelle (pour Cₓ) ;
II) les alcools B₃ ou B₂ et/ou Cₓ contiennent au moins 20 % en moles, de préférence au moins 30 % en moles, d'une manière particulièrement préférée au moins 40 % en moles et d'une manière tout particulièrement préférée au moins 50 % en moles d'un diol ou d'un polyol à longue chaîne ayant au moins 8 atomes de carbone ;
III) au moins 10 % en moles et au plus 90 % en moles, de préférence au plus 70 % en moles, d'une manière particulièrement préférée au plus 50 % en moles et d'une manière tout particulièrement préférée au plus 30 % en moles, par rapport aux alcools B₃, B₂ et/ou Cₓ ayant réagi selon a) et b), d'un monoalcool à longue chaîne ayant au moins 8 atomes de carbone, sont mis ensemble à réagir ;
IV) puis on fait réagir avec 10 à 100 % en moles, de préférence 10 à 80 % en moles, d'une manière particulièrement préférée 20 à 80 % en moles, d'une manière particulièrement préférée 20 à 60 % en moles, par rapport au nombre moyen des groupes OH du polycarbonate hyper-ramifié, du composé F hydrophobe à longue chaîne, réactif vis-à-vis des groupes OH, ayant au moins 8 atomes de carbone,
V) puis on fait réagir avec, par équivalent de groupes OH du polycarbonate hyper-ramifié, 1 à 60, de préférence 2 à 50, d'une manière particulièrement préférée 3 à 40 et d'une manière tout particulièrement préférée 3 à 30 équivalents d'oxyde de propylène, d'oxyde de butylène ou d'oxyde de propylène et d'oxyde de butylène.

19. Procédé selon la revendication 18, **caractérisé en ce que**
I) l'alcool B₃ ou B₂ et/ou Cₓ est un produit d'alcoxylation hydrophobe à base d'oxyde de propylène ou d'oxyde de butylène ayant en moyenne 1 à 15 motifs oxyalkylène par groupe OH.

20. Procédé selon la revendication 18, **caractérisé en ce que**
I) l'alcool B₃ ou B₂ et/ou Cₓ est un produit d'alcoxylation hydrophobe à base d'oxyde de propylène ou d'oxyde de butylène ayant en moyenne 1 à 15 motifs oxyalkylène par groupe OH, et
III) au moins 10 % en moles et au plus 90 % en moles, par rapport aux alcools B₃, B₂ et/ou Cₓ ayant réagi selon g) et h), d'un monoalcool à longue chaîne E₁ ayant au moins 8 atomes de carbone, sont mis ensemble à réagir.

21. Procédé selon la revendication 18, **caractérisé en ce que**
I) l'alcool B₃ ou B₂ et/ou Cₓ est un produit d'alcoxylation hydrophobe à base d'oxyde de propylène ou d'oxyde de butylène ayant en moyenne 1 à 15 motifs oxyalkylène par groupe OH, et
IV) puis le produit de la réaction g) et h) est mis à réagir avec 10 à 100 % en moles, par rapport au nombre moyen des groupes OH du polyester hyper-ramifié, avec un composé F₁ hydrohobe à longue chaîne, réactif vis-à-vis des groupes OH, ayant au moins 8 atomes de carbone.

22. Procédé selon l'une des revendications 18 à 21, **caractérisé en ce qu'**on utilise en tant que polyisocyanate A un composé à base de a1) un MDI et de a2) un polyesterol.

23. Procédé selon la revendication 22, **caractérisé en ce qu'**on utilise en tant que polyisocyanate A un composé à base de a1) un MDI et de a2) un polyétherol et un composé à base de a1) un MDI et de a2) un polyesterol.

24. Procédé selon la revendication 23, **caractérisé en ce que** le rapport en poids du composé à base de a1) un MDI et de a2) un polyétherol au composé à base de a1) un MDI et de a3) un polyesterol est de 35:65 à 70:30.

25. Procédé selon l'une des revendications 18 à 24, **caractérisé en ce qu'**on utilise en tant que polyol de base B exclusivement un ou plusieurs polyesterols.

26. Procédé selon l'une des revendications 18 à 25, **caractérisé en ce qu'**on utilise en tant que polyol de base B un polyester-polyol pouvant être obtenu à partir d'acide adipique, d'un diol choisi parmi le monoéthylèneglycol, le diéthylèneglycol, le butanediol et les mélanges de ceux-ci, et en option de glycerol et/ou de triméthylolpropane, la quantité en moles des diols étant supérieure à celle des triols.

27. Mousse de polyuréthanne ayant une masse volumique de 70 à 300 g/l et de 1 à 20 alvéoles/cm, une intensité de résilience supérieure à 30 %, un allongement à la rupture supérieur à 200 %, une résistance à la déchirure amorcée supérieure à 1,2 N/mm et une résistance à la traction supérieure à 200 kPa, pouvant être obtenue par un procédé selon l'une des revendications 3 à 26.

28. Utilisation de la mousse de polyuréthanne selon la revendication 27 en tant que mousse de nettoyage.
